(19) Europäisches Patentamt
European Patent Office
Office européen des brevets

(11) Veröffentlichungsnummer: **0 133 270**
**A1**

# (12) EUROPÄISCHE PATENTANMELDUNG

(21) Anmeldenummer: **84108701.8**

(22) Anmeldetag: **23.07.84**

(51) Int. Cl.⁴: **C 09 B 62/04**, C 09 B 62/503, C 09 B 62/523, D 06 P 3/10, D 06 P 3/66

(30) Priorität: **30.07.83 DE 3327641**

(43) Veröffentlichungstag der Anmeldung: **20.02.85 Patentblatt 85/8**

(84) Benannte Vertragsstaaten: **CH DE FR GB IT LI**

(71) Anmelder: **BASF Aktiengesellschaft, Carl-Bosch-Strasse 38, D-6700 Ludwigshafen (DE)**

(72) Erfinder: **Seybold, Guenther, Dr., Friedrich-Ebert-Strasse 14, D-6708 Neuhofen (DE)**
Erfinder: **Augart, Dietmar, Dr., Gerhart-Hauptmann-Strasse 20, D-6717 Hessheim (DE)**
Erfinder: **Dehnert, Johannes, Dr., Ottweilerstrasse 2, D-6700 Ludwigshafen (DE)**
Erfinder: **Krueger, Heinz, Dr., Bruesseler Ring 49, D-6700 Ludwigshafen (DE)**
Erfinder: **Schaffer, Ortwin, Dr., Bruesseler Ring 43, D-6700 Ludwigshafen (DE)**

## (54) Reaktivfarbstoffe.

(57) Farbstoffe der allgemeinen Formel

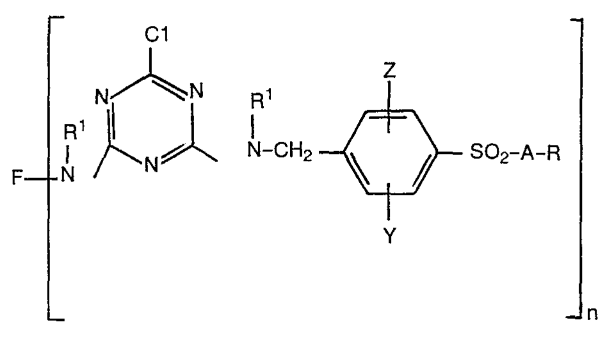

I,

in der
A eine direkte Bindung oder NH,
F ein Farbstoffrest,
n die Zahlen 1 oder 2,
$R^1$ Wasserstoff oder $C_1$- bis $C_4$-Alkyl,
Y Wasserstoff, Chlor, Brom, $C_1$- bis $C_4$-Alkoxy oder Hydroxysulfonyl,
Z Wasserstoff oder Chlor und
R ein Rest der Formel

$-CH=CH_2$, $-CH_2CH_2X$, $-CH_2CH=CH_2$, $-CH=CH-CH_3$ oder

$-CH_2CH-CH_3$ sind, wobei
X

X ein als Anion abspaltbarer Rest ist.
Deren Verwendung zum Färben von hydroxylgruppenhaltigen Fasern und von Wolle.

EP 0 133 270 A1

Reaktivfarbstoffe

Die Erfindung betrifft Verbindungen der allgemeinen Formel I

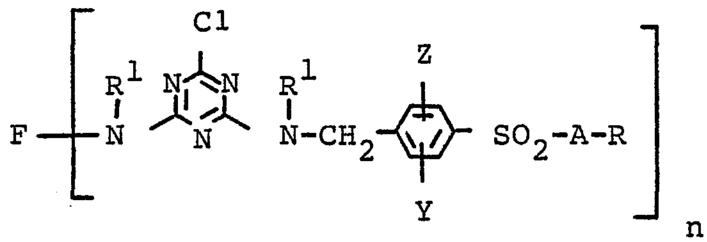

I ,

in der

A eine direkte Bindung oder NH,

F ein Farbstoffrest,

n die Zahlen 1 oder 2,

$R^1$ Wasserstoff oder $C_1$- bis $C_4$-Alkyl,

Y Wasserstoff, Chlor, Brom, $C_1$- bis $C_4$-Alkoxy oder Hydroxysulfonyl,

Z Wasserstoff oder Chlor und

R ein Rest der Formel

$-CH=CH_2$, $-CH_2CH_2X$, $-CH_2CH=CH_2$, $-CH=CH-CH_3$ oder

$-CH_2\underset{X}{\underset{|}{C}}H-CH_3$ sind, wobei

X ein als Anion abspaltbarer Rest ist.

Bg/P

Alkylreste $R^1$ sind z.B. Propyl, Butyl und Ethyl und vorzugsweise Methyl.
Bevorzugt für $R^1$ ist Wasserstoff.
Y ist insbesondere Chlor oder Hydroxysulfonyl und vorzugsweise Wasserstoff.
Z ist vorzugsweise Wasserstoff.
Als Anion abspaltbare Reste X seien beispielsweise genannt: OH, Cl, $OSO_3H$, $SSO_3H$, $OPO_3H_2$, $OCOCH_3$ oder $OCOC_6H_4SO_3H$, wobei $OSO_3H$ und $OPO_3H_2$ bevorzugt sind.
Bevorzugte Reste R sind z.B.
$CH_2CH_2OSO_3H$ und $CH_2CH_2OPO_3H_2$.
Die Reste F stammen beispielsweise aus der Azo-, Anthrachinon-, Formazan-, Phthalocyanin- oder Triphendioxazinreihe, wobei die Farbstoffe auch metallisiert sein können. Der F-Rest kann ferner weitere übliche Reaktivgruppen enthalten.
Bevorzugte Farbstoffe sind solche mit 1 bis 6 Sulfogruppen.
Geeignete Farbstoffreste F bzw. den Farbstoffen (I) zugrunde liegende aminogruppenhaltige Farbstoffe sind in der Literatur in sehr großer Zahl beschrieben.
Beispielhaft erwähnt seien hier:
Belgische Patentschriften: 606 947, 617 435; 567 435, 701 273, 683 734; 683 573; 693 749; 708 003; 707 307;

Deutsche Auslegeschriften: 1 242 553; 1 212 655, 1 225 322;

Deutsche Offenlegungsschriften: 2 633 255; 2 103 299; 2 305 206; 2 418 283; 2 623 224; 1 809 388, 1 912 178; 2 057 867; 1 769 205; 2 107 427; 2 303 601, 2 600 490.

Schweizer Patentschriften: 536 353; 521 403;
Britische Patentschriften: 1 299 881; 1 300 742 sowie
Venkataraman: The Chemistry of Synthetic Dyes, Band VI, Kapitel II, Seite 211 bis 325
New York, London; 1972.

Besonders wertvolle Farbstoffe dieser Reihe sind wasserlösliche Azofarbstoffe, und insbesondere solche, die Sulfonsäure- und/oder Carbonsäuregruppen aufweisen. Dabei besitzen aber auch sulfon- und carbonsäuregruppen-freie reaktive Dispersionsfarbstoffe der Azoreihe Interesse. Die Azofarbstoffe können sowohl metallfrei als auch metallhaltig sein, wobei unter den Metallkomplexen die Kupfer-, Chrom- und Kobaltkomplexe bevorzugtes Interesse haben.

Wichtige Azofarbstoffe sind beispielsweise solche der Benzol-azo-naphthalinreihe, der Benzol-azo-1-phenyl-5-pyrazolonreihe, der Benzol-azo-benzolreihe, der Naphthalin-azo-benzolreihe, der Benzol-azo-aminonaphthalinreihe, der Naphthalin-azo-naphthalinreihe, der Naphthalin-azo-1-phenylpyrazolon-5-Reihe, der Benzol-azo-pyridonreihe, der Benzol-azo-aminopyridin-reihe, der Naphthalin-azo-pyridonreihe, der Naphthalin-azo-amino-pyridinreihe, und der Stilben-azo-benzolreihe, wobei auch hier die sulfonsäuregruppenhaltigen Farbstoffe bevorzugt sind. Im Falle von Metallkomplexazofarbstoffen befinden sich die metallkomplexgebundenen Gruppen vorzugsweise in den o-Stellungen zur Azogruppe, z.B. in Form von o,o'-Dihydroxy-, o-Hydroxy-o'-carboxy-, o-Carboxy-o'-amino- und o-Hydroxy-o'-amino-azogruppierungen.

Folgende azogruppenhaltige Farbstoffreste 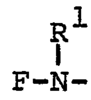 entsprechen dabei insbesondere der Formel:

D-N=N-K

wobei D den Rest einer Diazokomponente und K den Rest einer Kupplungskomponente bedeuten und der faserreaktive Rest

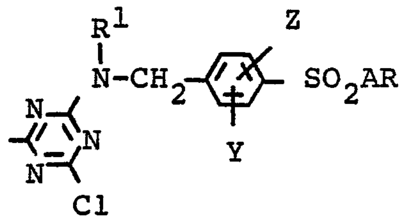

- der im folgenden mit B bezeichnet werden soll - sowohl über den Rest D der Diazokomponente als auch über den Rest K der Kupplungskomponente oder falls n = 2 über D und K mit dem Farbstoff verknüpft sein kann.

Aromatische Reste D der Diazokomponenten der Anilin- und Aminonaphthalinreihe die keine faserreaktiven Gruppen tragen, leiten sich beispielsweise von Aminen der Formel II a - f ab:

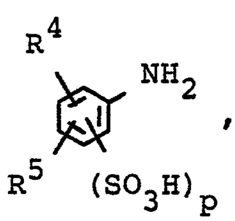 , 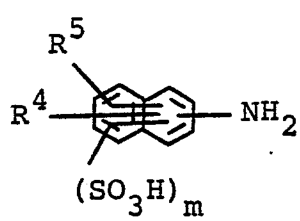 , 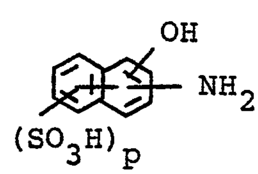 ,

IIa IIb IIc

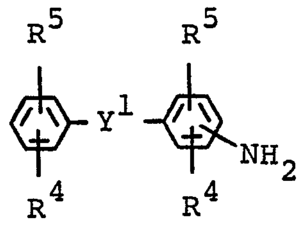,
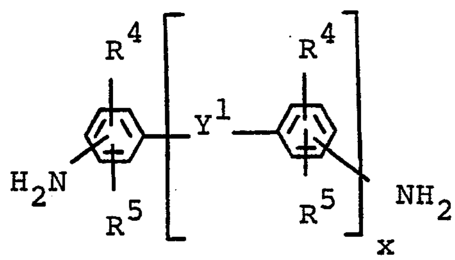
oder

IId IIe

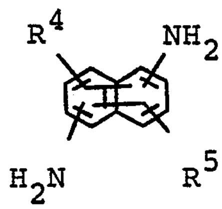

IIf

worin m eine ganze Zahl von 0 bis 3 und p eine ganze Zahl von 0 bis 2 bedeuten und

$R^4$ Wasserstoff, Methyl, Ethyl, Methoxy, Ethoxy, Acetyl, Cyan, Hydroxycarbonyl, Hydroxysulfonyl, $C_1$- bis $C_4$-Alkoxycarbonyl, Hydroxy, Aminocarbonyl, $C_1$- bis $C_4$-Alkylaminocarbonyl, Fluor, Chlor, Brom oder Trifluormethyl,

$R^5$ Wasserstoff, Methyl, Ethyl, Methoxy, Ethoxy, Cyan, Hydroxycarbonyl, Hydroxysulfonyl, Acetylamino, $C_1$- bis $C_4$-Alkoxycarbonyl, Aminocarbonyl, $C_1$- bis $C_4$-Alkylaminocarbonyl, Fluor, Chlor, Nitro, Aminosulfonyl, $C_1$- bis $C_4$-Alkylaminosulfonyl, $C_1$- bis $C_4$-Alkylsulfonyl, Phenylsulfonyl oder Phenoxy,

x die Zahl 0 oder 1 und

$Y^1$ eine direkte Bindung oder eine der Gruppen -NHCO-, -CONH-, -CO-, $-NHSO_2-$, $-SO_2NH-$, $-SO_2-$, -CH=CH-, $-CH_2-CH_2-$, $-CH_2-$, -NH-, -O-, -S- oder -N=N- sind.

Bevorzugt sind für
$R^4$: H, $CH_3$, $CH_3O$, Cl, COOH, $SO_3H$ oder OH,
$R^5$: H, $CH_3$, $CH_3O$, Cl, COOH, $SO_3H$ oder $NHCOCH_3$ und
$Y^1$: $-SO_2-$, -CO-, -CH=CH-, -N=N-, $-CH_2-CH_2-$ und $-CH_2-$.

Als aromatische Amine ohne faserreaktive Gruppe, die zur Herstellung der erfindungsgemäßen Farbstoffe als Diazokomponenten eingesetzt werden können und beispielsweise den allgemeinen Formeln (IIa), (IIb), (IIc) und (IId) entsprechen, sind im einzelnen beispielsweise zu nennen: Anilin, 2-Methoxyanilin, 2-Ethoxy-anilin, 2-Methyl-anilin, 4-Nitro-2-aminoanisol, 4-Chlor-2-amino-anisol, 4-Methyl-anilin, 4-Methoxy-anilin, 2-Nitro-4-aminoanisol, 2-Methoxy-5-methyl-anilin, 4-Nitro-anilin, 2-Chlor-4-nitroanilin, 2,6-Dichlor-4-nitro-anilin, 2-Nitro-4-methyl-anilin, 2,5-Dimethoxyanilin, 2,5-Dimethyl-anilin, 2,4-Dimethyl-anilin, 4-Butyl-anilin, 2-Cyano-4-nitroanilin, 2,5-Diethoxy-anilin, 4-Cyano-anilin, 2-Chloranilin, 3-Chloranilin, 4-Chloranilin, 2,5-Dichloranilin, 4-Chlor-2-nitroanilin, 4-Chlor-2-methyl-anilin, 3-Chlor-2-methyl-anilin, 4-Chlor-2-aminotoluol, 4-(p-Tolyl-sulfonyl)-anilin, 2-Ethoxy-1-naphthylamin, 1-Naphthylamin, 2-Naphthylamin, 4-Benzoylamino-2-ethoxyanilin, 3-Amino-4-methyl-benzonitril, 4-Methylsulfonylanilin, 2-Trifluormethyl-anilin, 1-Trifluormethyl-3-chloranilin, 2,4-Dichlor-anilin-5-carbonsäure, 2-Aminobenzoesäure, 4-Aminobenzoesäure, 3-Amino-benzoesäure, 3-Chlor-anilin-6-carbonsäure, Anilin-2- oder -3- oder -4-sulfonsäure, 2,5-Disulfoanilin, 2,4-Disulfo-anilin, 3,5-Disulfoanilin, 2-Aminotoluol-4-sulfonsäure, 2-Amino-anisol-4-sulfonsäure, 2-Amino-anisol-5-sulfonsäure, 2-Ethoxy-anilin-5-sulfonsäure, 2-Ethoxy-anilin-4-sulfonsäure, 4-Sulfo-2-amino-benzoesäure,

2,5-Dimethoxy-anilin-4-sulfonsäure, 2,4-Dimethoxyanilin-5-sulfonsäure, 2-Methoxy-5-methyl-anilin-4-sulfonsäure, 4-Amino-anisol-3-sulfonsäure, 4-Amino-toluol-3-sulfonsäure, 2-Amino-toluol-5-sulfonsäure, 2-Chlor-anilin-4-sulfonsäure, 2-Chlor-anilin-5-sulfonsäure, 2-Brom-anilin-4-sulfonsäure, 2,6-Dichlor-anilin-4-sulfonsäure, 2,6-Dimethyl-anilin-3-sulfonsäure oder -4-sulfonsäure, 3-Acetylamino-6-sulfo-anilin, 4-Acetyl-amino-2-sulfo-anilin, 1-Aminonaphthalin-4-sulfonsäure, 1-Aminonaphthalin-3-sulfonsäure, 1-Amino-naphthalin-5-sulfonsäure, 1-Aminonaphthalin-6-sulfonsäure, 1-Aminonaphthalin-7-sulfonsäure, 1-Aminonaphthalin-3,7-disulfonsäure, 1-Aminonaphthalin-3,6,8-trisulfonsäure, 1-Aminonaphthalin-4,6,8-trisulfonsäure, 2-Naphthylamin-5-sulfonsäure oder -6- oder -8-sulfonsäure, 2-Aminonaphthalin-3,6,8-trisulfonsäure, 2-Aminonaphthalin-6,8-disulfonsäure, 2-Aminonaphthalin-1,6-disulfonsäure, 2-Aminonaphthalin-1-sulfonsäure, 2-Aminonaphthalin-1,5-disulfonsäure, 2-Amino-naphthalin-3,6-disulfonsäure, 2-Aminonaphthalin-4,8-disulfonsäure, 2-Aminophenol-4-sulfonsäure, 2-Aminophenol-5-sulfonsäure, 3-Aminophenol-6-sulfonsäure, 4- oder 5-Nitro-2-aminophenol, 4-Nitro-6-sulfo-2-aminophenol, 1-Hydroxy-2-amino-naphthalin-5,8- oder -4,6-disulfonsäure, 6-Nitro-2-hydroxy-4-sulfoaminonaphthalin, 6-Nitro-2-aminonaphthalin-4,8-disulfonsäure, 4-Amino-diphenylamin, 4-Amino-4'-methoxy-diphenylamin, 4-Amino-4'-methoxy-diphenylamin-3-sulfonsäure, 4-(2'-Methylphenyl-azo)-2-methylanilin, 4-Aminoazobenzol, 4'-Nitrophenyl-azo-1-amino-naphthalin, 4-(6'-Sulfonaphthyl-azo)-1-aminonaphthalin, 4-(2',5'-Disulfophenylazo)-1-aminonaphthalin, 4'-Amino-3'-methyl-3-nitro-benzophenon, 4-Amino-benzophenon, 4-(4'-Aminophenylazo)-benzolsulfonsäure, 4-(4'-Amino-3'-methoxyphenylazo)-benzolsulfonsäure, 2-Ethoxy-1-naphthylamin-6-sulfonsäure.

Als aromatische Diamine ohne faserreaktive Gruppe, die als Tetrazokomponenten zur Herstellung der erfindungsgemäßen Farbstoffe verwendet werden können und die beispielsweise der allgemeinen Formel (IIe) oder (IIf) entsprechen, sind im einzelnen beispielsweise zu nennen:
1,3-Diaminobenzol, 1,3-Diaminobenzol-4-sulfonsäure, 1,4-Diaminobenzol, 1,4-Diaminobenzol-2-sulfonsäure, 1,4-Diamino-2-methyl-benzol, 1,4-Diamino-2-methoxy-benzol, 1,3-Diamino-4-methyl-benzol, 1,3-Diaminobenzol-5-sulfonsäure, 1,3-Diamino-5-methyl-benzol, 1,6-Diamino-naphthalin-4-sulfonsäure, 2,6-Diamino-4,8-disulfo-naphthalin, 3,3'-Diamino-diphenylsulfon, 4,4'-Diamino-diphenylsulfon, 3,3'-Diamino-diphenylsulfon-disulfonsäure, 4,4'-Diaminostilben-2,2'-disulfonsäure, 2,7'-Diamino-diphenylsulfon, 2,7'-Diamino-diphenylsulfon-4,5-disulfonsäure, 4,4'-Diamino-benzophenon, 4,4'-Diamino-3,3'-dinitro-benzophenon, 3,3'-Diamino-4,4'-dichlorbenzophenon, 4,4'- oder 3,3'-Diamino-diphenyl, 4,4'-Diamino-3,3'-dichlor-diphenyl, 4,4'-Diamino-3,3'-dimethoxy- oder -3,3'-dimethyl- oder 2,2'-dimethyl- oder -2,2'-dichlor- oder -3,3'-diethoxydiphenyl, 4,4'-Diamino-3,3'-dimethyl-6,6'-dinitro-diphenyl, 4,4'-Diamino-2,2'- oder 3,3'-disulfo-diphenyl, 4,4'-Diamino-3,3'-dimethyl- oder -3,3'-dimethoxy- oder -2,2'-dimethoxy-6,6'-disulfo-diphenyl, 4,4'-Diamino-2,2',5,5'-tetrachlor-diphenyl, 4,4'-Diamino-3,3'-dinitro-diphenyl, 4,4'-Diamino-2,2'-dichlor-5,5'-dimethoxy-diphenyl, 4,4'-Diamino-2,2'- oder -3,3'-dicarbonsäure, 4,4'-Diamino-3,3'-dimethyl-diphenyl-5,5'-disulfonsäure, 4,4'-Diamino-2-nitro-diphenyl, 4,4'-Diamino-3-ethoxy- oder -3-sulfo-diphenyl, 4,4'-Diamino-3,3'-dimethyl-5-sulfo-diphenyl, 4,4'-Diamino-diphenylmethan, 4,4'-Diamino-3,3'-dimethyldiphenylmethan, 4,4'-Diamino-2,2',3,3'-tetramethyl-diphenylmethan, 4,4'-Diamino-diphenylethan, 4,4'-Diaminostilben oder 4,4'-Diamino-diphenylmethan-3,3'-dicarbonsäure.

Aromatische Reste D der Diazokomponente der Anilin- und Aminonaphthalinreihe, die einen faserreaktiven Rest B tragen können, leiten sich beispielsweise von Aminen der Formel III a - c ab:

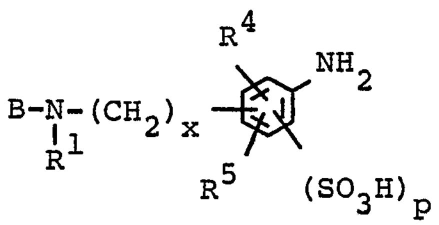

,

IIIa

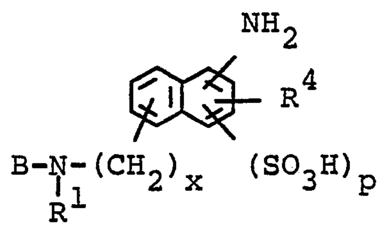

,

IIIb

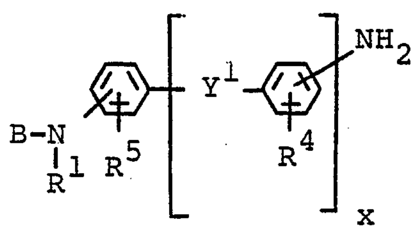

IIIc

worin
$R^1$, $R^4$, $R^5$, p, x, $Y^1$ und B die angegebene Bedeutung haben.

Die aromatischen, den faserreaktiven Rest B tragenden Verbindungen entsprechend den Formeln IIIa - c, stammen im einzelnen beispielsweise von folgenden Diaminen ab: 1,3-Diaminobenzol, 1,3-Diaminobenzol-4-sulfonsäure, 1,3-Diaminobenzol-4,6-disulfonsäure, 1,4-Diaminobenzol, 1,4-Diaminobenzol-2-sulfonsäure, 1,4-Diaminobenzol-2,5-disulfonsäure, 1,4-Diamino-2-methyl-benzol, 1,4-Diamino-2-methoxy-benzol, 1,3-Diamino-4-methyl-benzol, 1,4-Diaminobenzol-2,6-disulfonsäure, 1,5-Diamino-4-methylbenzol-2-sulfonsäure, 1,5-Diamino-4-methoxybenzol-2-sulfonsäure, 1,6-Diamino-2-naphthol-4-sulfonsäure, 1,6-Diamino-naphthalin-4-sulfonsäure, 2,6-Diamino-4,8-disulfonaphthalin, 2,6-Diamino-1-naphthol-4,8-disulfonsäure, 1,3-Diaminobenzol-5-sulfonsäure, 1,3-Diamino-5-methylbenzol, 2,6-Diaminophenol-4-sulfonsäure, 5-(ω-Aminomethyl)-2-aminonaphthalin-1-sulfonsäure, 5-(ω-N-Methylaminomethyl)-2-aminonaphthalin-1-sulfonsäure, 4,4'-Diaminostilben-3,3'-dicarbonsäure, 4-(ω-N-Methylamino-methyl)-anilin-2-sulfonsäure oder 3-(ω-N-Methylamino-methyl)-anilin-6-sulfonsäure.

Die Reste K der Kupplungskomponente entstammen vorzugsweise der Anilin-, Naphthalin-, Pyrazol-, Pyridin-, Pyrimidin-, Indol-, Acylacetarylid- oder Barbitursäurereihe und können auch faserreaktive Gruppen tragen. Sie können daher der Formel

$$-K-(\overset{R_1}{\overset{|}{N}}-B)_n$$

entsprechen, in der B, K, $R_1$ und n die angegebene Bedeutung haben.

Kupplungskomponenten der Anilin- und Naphthalinreihe sind z.B. Aniline, N-monosubstituierte Aniline, m-Phenylendiaminderivate, Naphtholsulfosäuren, Aminonaphthaline, Naphthole, Hydroxynaphthoesäurederivate, Aminonaphthalinsulfosäuren oder Aminonaphtholsulfosäuren.

Faserreaktivgruppenfreie Kupplungskomponenten der Anilin- und Naphthalinreihe entsprechen beispielsweise Verbindungen der Formel IVa - g:

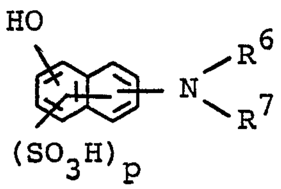 , 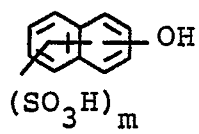 , 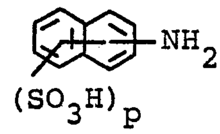

IVa IVb IVc

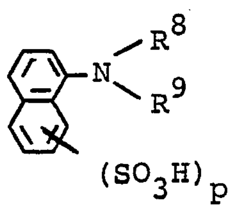 , 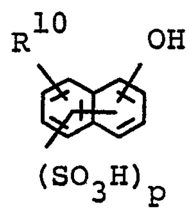 , 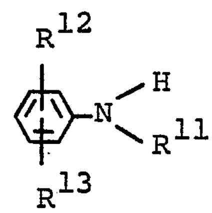 oder

IVd IVe IVf

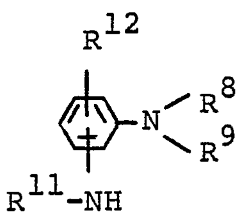

IVg

in denen

$R^6$ für Wasserstoff oder einen $C_1$- bis $C_4$-Alkylrest,

$R^7$ für Wasserstoff, $C_1$- bis $C_4$-Alkyl oder einen Phenylrest, der durch 1 oder 2 Substituenten aus der Gruppe $C_1$- bis $C_4$-Alkyl, $C_1$- bis $C_4$-Alkoxy, Chlor, Brom oder Hydroxysulfonyl substituiert sein kann,

$R^8$ für Wasserstoff oder eine $C_1$- bis $C_4$-Alkylgruppe, die durch Hydroxy, Cyan, Hydroxycarbonyl, Hydroxysulfonyl, Hydroxysulfonyloxy, Methoxycarbonyl, Ethoxycarbonyl oder Acetoxy substituiert sein kann,

$R^9$ für Wasserstoff, eine $C_1$- bis $C_4$-Alkylgruppe,die durch Hydroxy, Cyan, Hydroxycarbonyl, Hydroxysulfonyl, Hydroxysulfonyloxy, Methoxycarbonyl, Ethoxycarbonyl oder Acetoxy substituiert sein kann, eine Benzylgruppe oder einen Phenylrest,der durch $C_1$- bis $C_4$-Alkyl, $C_1$- bis $C_4$-Alkoxy, Chlor und/oder Hydroxysulfonyl substituiert sein kann,

$R^{10}$ für eine $C_1$- bis $C_6$-Alkylureido- und Phenylureidogruppe, die durch Chlor, Methyl, Methoxy, Nitro, Hydroxysulfonyl und/oder Hydroxycarbonyl substituiert sein kann, eine $C_1$- bis $C_6$-Alkanoylamino-, z.B. Acetamino-, Propionylamino- oder Cyclohexanoylamino- oder eine Benzoylaminogruppe, die durch Chlor, Methyl, Methoxy, Nitro, Hydroxylsulfonyl und/oder Hydroxycarbonyl substituiert sein kann oder eine Hydroxygruppe,

$R^{11}$ für Wasserstoff, eine $C_1$- bis $C_6$-Alkylgruppe, insbesondere $C_1$- bis $C_4$-Alkylgruppe, die durch einen Arylrest, z.B. einen Phenylrest, oder durch $C_1$- bis $C_4$-Alkoxy, Hydroxy, Phenoxy oder $C_1$- bis $C_4$-Alkanoyloxy substituiert sein kann, einen Cycloalkylrest, z.B. einen Cyclohexylrest oder einen Arylrest, z.B. einen Phenylrest, der eine Hydroxysulfonylgruppe enthalten kann,

$R^{12}$ für Wasserstoff, Methyl, Ethyl, Methoxy, Ethoxy, Chlor, Brom, Acetylamino, Amino,
Ureido, Methylsulfonylamino, Ethylsulfonylamino, Dimethylaminosulfonylamino, Methylamino, Ethylamino, Dimethylamino oder Diethylamino,

$R^{13}$ für Wasserstoff, Methyl, Ethyl, Methoxy, Ethoxy, Chlor oder Brom stehen und

p und m die angegebene Bedeutung haben.

Im einzelnen sind beispielsweise zu nennen: Anilin-N- methansulfonat, o- und m-Toluidin, o- und m-Anisidin , Kresidin, 2,5-Dimethylanilin, 2,5-Dimethoxyanilin, m-Aminoacetanilid, 3-Amino-4-methoxyacetanilid, 3-Amino-4-methylacetanilid, m-Aminophenylharnstoff, N-Methylanilin, N-Methyl-m-toluidin, N-Ethylanilin, N-Ethyl-m-toluidin, N-ß-Hydroxyethylamin oder n-ß-Hydroxy-m-toluidin.

Naphtholsulfonsäuren sind beispielsweise: 1-Naphthol-3-sulfonsäure, 1-Naphthol-4-sulfonsäure, 1-Naphthol-5-sulfonsäure, 1-Naphthol-8-sulfonsäure, 1-Naphthol-3,6-disulfonsäure, 1-Naphthol-3,8-disulfonsäure, 2-Naphthol-5-sulfonsäure, 2-Naphthol-6-sulfonsäure, 2-Naphthol-7-sulfonsäure, 2-Naphthol-8-sulfonsäure, 2-Naphthol-3,6-disulfonsäure, 2-Naphthol-6,8-disulfonsäure, 2-Naphthol-3,6,8-trisulfonsäure, 1,8-Dioxynaphthalin-3,6-disulfonsäure, 2,6-Dioxynaphthalin-8-sulfonsäure oder 2,8-Dioxynaphthalin-6-sulfonsäure.

Weiterhin sind beispielsweise zu nennen: α-Naphthylamin, N-Phenyl-α-naphthylamin, N-Ethyl-α-naphthylamin, N-Phenyl-ß-naphthylamin, 1,5-Naphthylendiamin, 1,8-Naphthylendiamin, α-Naphthol, ß-Naphthol, 1,5-Dioxynaphthalin, 1,6-Dioxynaphthalin, 1,7-Dioxynaphthalin, 2,7-Dioxynaphthalin, 2-Hydroxynaphthalin-3-carbonsäure-N-phenylamid, 2-Hydroxynaphthalin-3-carbonsäure-N-(2'-methoxyphenyl)-amid oder 2-Hydroxynaphthalin-3-carbonsäure-N-(2',5'-dimethoxyphenyl)-amid.

Aminonaphthalinsulfonsäuren sind beispielsweise: 1-Naphthylamin-6-sulfonsäure, 1-Naphthylamin-6/7-sulfonsäure, 1-Naphthylamin-7-sulfonsäure, 1-Naphthylamin-8-sulfonsäure, 2-Naphthylamin-3,6-disulfosäure, 2-Naphthylamin-5,7-disulfosäure oder 2-Naphthylamin-6,8-disulfosäure.

Als Aminonaphtholsulfonsäuren sind z.B. zu nennen: 1-Amino-5-hydroxynaphthalin-7-sulfonsäure, 1-Amino-8-hydroxynaphthalin-4-sulfonsäure, 1-Amino-8-hydroxynaphthalin-2,4-disulfonsäure, 1-Amino-8-hydroxynaphthalin-3,6-disulfonsäure, 1-Amino-8-hydroxynaphthalin-4,6-disulfonsäure, 2-Amino-5-hydroxynaphthalin-7-sulfonsäure, 2-Amino-8-hydroxynaphthalin-6-sulfonsäure, 2-Amino-8-hydroxynaphthalin-3,6-disulfonsäure, 2-Amino-5-hydroxynaphthalin-1,7-disulfonsäure, 1-Acetylamino-8-hydroxynaphthalin-3,6-disulfonsäure, 1-Benzoylamino-8-hydroxynaphthalin-3,6-disulfonsäure, 1-Acetylamino-8-hydroxynaphthalin-4,6-disulfonsäure, 1-Benzoylamino-8-hydroxynaphthalin-4,6-disulfonsäure, 1-Acetylamino-5-hydroxynaphthalin-7-sulfonsäure, 2-Methylamino-8-hydroxynaphthalin-6-sulfonsäure, 2-Methylamino-8-hydroxynaphthalin-6-sulfonsäure oder 2-(3'- und 4'-Sulfophenyl)-amino-8-hydroxynaphthalin-6-sulfonsäure.

Von besonderer Bedeutung sind sulfo- und/oder carboxylgruppenhaltige, gegebenenfalls Azogruppen tragende Kupplungskomponenten, die in o- oder p-Stellung zu einer Hydroxy- und/oder Aminogruppe kuppeln.

Als Beispiele für solche Kupplungskomponenten seien beispielsweise genannt:
2-Acetylamino-5-hydroxynaphthalin-7-sulfonsäure, 2-Acetylamino-8-hydroxynaphthalin-6-sulfonsäure, 1-Acetylamino-8-hydroxynaphthalin-3,6-disulfonsäure, 1-Benzoylamino-8-hydroxynaphthalin-3,6-disulfonsäure, 1-Acetylamino-8-hydroxynaphthalin-4,6-disulfonsäure oder 1-Benzoylamino-8-hydroxynaphthalin-4,6-disulfonsäure.

Als Kupplungskomponenten sind weiterhin besonders zu nennen:
1-Amino-8-hydroxynaphthalin-3,6- und 4,6-disulfonsäure sowie deren durch saure Kupplung erhaltene Arylazokupplungsprodukte der Formel:

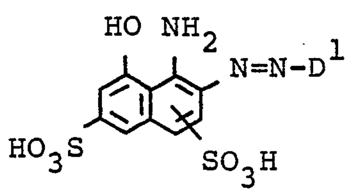

in der
$D^1$ der Rest einer Diazokomponente, beispielsweise ein Rest der Formeln

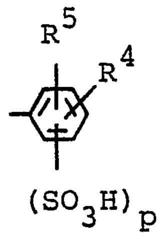

oder

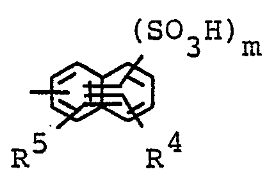

sein kann, worin $R^4$, $R^5$, p und m die angegebene Bedeutung haben.

Einzelne Reste $D^1$ leiten sich beispielsweise von folgenden Aminen ab:
Anilin, Anilin-2-, -3- und -4-sulfonsäure, Anilin-2,4-, -2,5- und -3,5-disulfonsäure, 2-Naphthylamin-1,5- und -4,8-disulfonsäure, 2-Naphthylamin-3,6,8- und -4,6,8-trisulfonsäure, 1-Naphthylamin-3,6,8- und -4,6,8-trisulfonsäure, 1-Naphthylamin-4-sulfonsäure, 2-Naphthylamin-1-sulfonsäure, 3- und 4-Aminoacetanilid, 4- und 5-Acetamido-2-sulfoanilin, 4-Nitroanilin, 4-Nitroanilin-2-sulfonsäure und 2-Amino-6-acetamino-naphthalin-4,8-disulfonsäure.

Kupplungskomponenten der weiteren Reihen sind beispielsweise: Pyrazolone und Aminopyrazole, 2,6-Diaminopyridine, Pyridone, Hydroxy- und Aminopyrimidine, Indole, Barbitursäurederivate oder Acetoacetarylide.

Faserreaktivgruppenfreie Kupplungskomponenten dieser Reihe entsprechen dabei beispielsweise den Formeln Va - f:

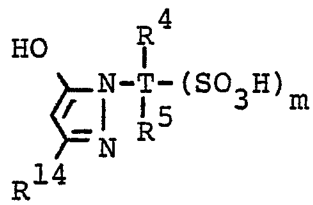
Va ,

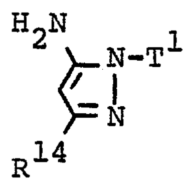
Vb ,

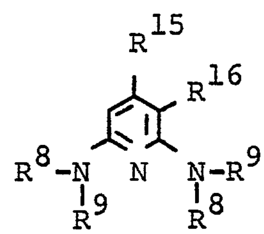
Vc

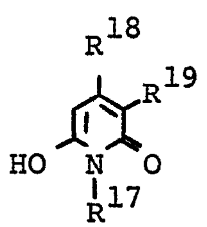
Vd ,

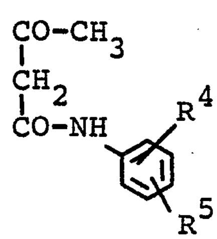
Ve

oder

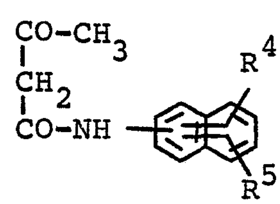
Vf ,

worin

T für einen Benzol- oder Naphthalinkern,

$T^1$ für eine $C_1$- bis $C_4$-Alkylgruppe, einen Cyclohexyl- oder Benzylrest oder einen einfach oder mehrfach durch Fluor, Chlor, Brom, Methyl, Methoxy, Nitro, Hydroxysulfonyl, Hydroxycarbonyl, Acetyl, Acetylamino, Methylsulfonyl, Aminosulfonyl oder Aminocarbonyl substituierten Phenylrest,

$R^{14}$ für eine Methyl-, Hydroxycarbonyl-, Methoxycarbonyl- oder Ethoxycarbonylgruppe oder einen Phenylrest,

$R^{15}$ für ein Wasserstoffatom, eine Methyl- oder Ethylgruppe oder eine durch Methoxy, Ethoxy oder Cyan substituierte $C_1$- bis $C_4$-Alkylgruppe,

$R^{16}$ für ein Wasserstoffatom, eine Methyl-, Sulfomethylen-, Hydroxysulfonyl-, Cyan- oder Aminocarbonylgruppe,

$R^{17}$ für ein Wasserstoffatom, eine $C_1$- bis $C_4$-Alkylgruppe, die durch Phenyl oder Sulfophenyl substituiert sein kann, eine durch Hydroxy, Amino, Methoxy, Ethoxy oder durch eine Hydroxycarbonyl-, Hydroxysulfonyl-, Acetylamino-, Benzoylamino- oder Cyangruppe substituierte $C_1$- bis $C_4$-Alkylgruppe, eine Cyclohexylgruppe, die Phenylgruppe oder eine durch Hydroxycarbonyl, Hydroxysulfonyl, Benzoylamino, Acetylamino, Methyl, Methoxy, Cyan oder Chlor substituierte Phenylgruppe oder eine Aminogruppe, die durch Phenyl, $C_1$- bis $C_4$-Alkyl, Acetyl oder Benzoyl substituiert ist,

$R^{18}$ für eine $C_1$- bis $C_4$-Alkyl-, Phenyl-, Hydroxy-, Cyan-, Acetyl-, Benzoyl-, Hydroxycarbonyl-, Methoxycarbonyl-, Aminocarbonyl- oder Sulfomethylengruppe,

$R^{19}$ für ein Wasserstoff-, Chlor- oder Bromatom oder einen Acetylamino- , Amino-, Nitro-, Hydroxysulfonyl-, Aminosulfonyl-, Methylsulfonyl-, Phenylsulfonyl-, Hydroxycarbonyl-, Methoxycarbonyl-, Acetyl-, Benzoyl-, Aminocarbonyl-, Cyan- oder Sulfomethylenrest stehen und $R^4$, $R^5$, $R^8$, $R^9$ und m die angegebene Bedeutung haben.

Als Pyrazolon-Kupplungskomponenten sind beispielsweise 3-Methyl-, 3-Carboxy- und 3-Alkoxycarbonyl-5-pyrazolone zu nennen, die in 1-Stellung Wasserstoff, gegebenenfalls durch Methyl, Ethyl, Fluor, Chlor, Brom, Trifluormethyl, Methoxy, Ethoxy, Cyano, Phenoxy, Phenylsulfonyl, Methylsulfonyl, Hydroxysulfonyl, Benzoyl, Acetyl, Acetylamino, Nitro, Hydroxyl, Carboxyl, Carbamyl oder Sulfamyl substituierte Phenylreste oder durch Hydroxysulfonyl substituierte α- oder ß-Naphthylreste tragen können, beispielsweise also:
1-Phenyl-, 1-(2'-Chlorphenyl)-, 1-(2'-Methoxyphenyl)-, 1-(2'-Methylphenyl)-, 1-(2',5'-Dichlorphenyl)-, 1-(2',6'-Dichlorphenyl)-, 1-(2'-Methyl-6'-chlorphenyl)-, 1-(2'-Methoxy-5'-methylphenyl)-, 1-(2'-Chlor-5'-sulfophenyl)-, 1-(2'-Methoxy-5'-sulfophenyl)-, 1-(2'-Methyl-4'-sulfophenyl)-, 1-(2',5'-Dichlor-4'-sulfophenyl)-, 1-(2',5'-Disulfophenyl)-, 1-(2'-Carboxyphenyl)-, 1-(3'-Sulfophenyl)-, 1-(4'-Sulfophenyl)-, 1-(3'-Sulfamylphenyl-3-carboxy-5-pyrazolon, 1-(3'- oder 4'-Sulfophenyl)-, 1-(2'-Chlorphenyl)-, 1-(2'-Chlor-4'- oder -5'-sulfophenyl)-, 1-(2'-Methyl-4'-sulfophenyl)-, 1-(2',5'-Dichlorphenyl)-, 1-(4',8'-Disulfo-8-naphthyl)-, 1-(6'-Sulfo-α-naphthyl)-3-methyl-5-pyrazolon, 1-Phenyl-5-pyrazolon-3-carbonsäureethylester, 5-Pyrazolon-3-carbonsäureethylester oder 5-Pyrazolon-3-carbonsäure.

Andere aus der Pyrazolreihe stammende Kupplungskomponenten sind beispielsweise 1-Methyl-, 1-Ethyl-, 1-Propyl-, 1-Butyl-, 1-Cyclohexyl-, 1-Benzyl- oder 1-Phenyl-5-aminopyrazol, 1-(4'-Chlorphenyl)-, 1-(4'-Methylphenyl)-5-aminopyrazol oder 1-Phenyl-3-methyl-5-aminopyrazol.

Acetoacetanilide sind vor allem Acetessiganilid und dessen im Phenylkern durch Chlor, Methyl, Ethyl, Methoxy, Ethoxy, Acetylamino, Hydroxysulfonyl, Hydroxycarbonyl, Aminocarbonyl oder Aminosulfonyl ein- oder mehrfach substituierte Derivate.

Vom Pyridin abgeleitete Kupplungskomponenten sind beispielsweise die in der DE-OS 22 60 827 beschriebenen Derivate.

Als Pyrimidinkupplungskomponenten sind z.B. die in den DE-OSen 22 02 820, 23 08 663 und 31 19 349 aufgeführten Verbindungen geeignet. Weiterhin sind Barbitursäure und deren N-Substitutionsprodukte zu nennen. Als N-Substituenten sind dabei insbesondere $C_1$- bis $C_4$-Alkyl und gegebenenfalls substituiertes Phenyl anzuführen.

Als Indolkupplungskomponenten sind beispielsweise zu nennen: 2-Methylindol, 2-Phenylindol, 2-Phenylindol-5-sulfonsäure, 1-Methyl-2-phenylindol, 1-(2'-Hdroxyethyl)-, 1-(2'-Carboxyethyl)-, 1-(2'-Carbamoylethyl)-2-methylindol oder -2-phenylindol.

Als Pyridonkupplungskomponenten sind beispielsweise zu nennen:
1-Ethyl-2-hydroxy-4-methyl-5-carbonamidopyridon-6, 1-(2'-Hydroxyethyl)-2-hydroxy-4-methyl-5-carbonamidopyridon-6,

1-Phenyl-2-hydroxy-4-methyl-5-carbonamidopyridon-6, 1-Ethyl-2-hydroxy-4-methyl-5-cyanpyridon-6, 1-Ethyl-2-hydroxy-4-sulfomethyl-5-carbonamidopyridon-6, 1-Ethyl-2-hydroxy-4-methyl-5-sulfomethylpyridon-6, 1-Methyl-2-hydroxy-4-methyl-5-cyanpyridon-6, 1-Methylhydroxy-5-acetylpyridon-6, 1,4-Dimethyl-2-hydroxy-5-cyanpyridon-6, 1,4-Dimethylhydroxy-5-carbonamidopyridon-6, 2,6-Dihydroxy-4-ethyl-5-cyanpyridin, 2,6-Dihydroxy-4-ethyl-5-carbonamidopyridin, 1-Ethyl-2-hydroxy-4-methyl-5-sulfomethylpyridon-6, 1-Methyl-2-hydroxy-4-methyl-5-methylsulfonylpyridon-6 oder 1-Carboxymethyl-2-hydroxy-4-ethyl-5-phenylsulfonylpyridon-6.

Faserreaktivgruppenhaltige Kupplungskomponenten K der Anilin- und Naphthalinreihe sind beispielsweise Verbindungen der Formel VIa - e:

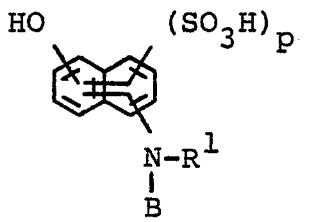

VIa

,

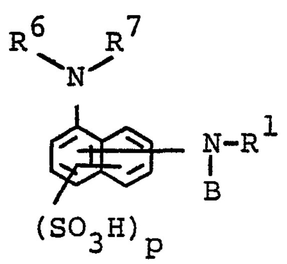

VIb

,

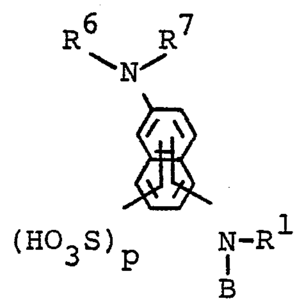

VIc

,

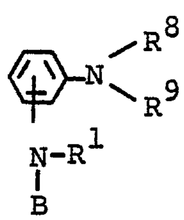

VId

oder

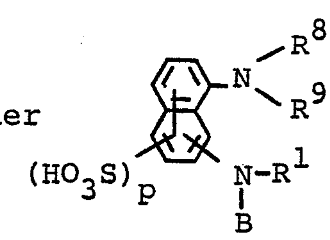

VIe

worin
$R^1$, $R^6$, $R^7$, $R^8$, $R^9$, B und p die angegebene Bedeutung haben.

Weiterhin sind besonders zu nennen die durch saure Kupplung erhaltenen Arylazokupplungsprodukte der 1-Amino-8-hydroxy-naphthalin-3,6- und -4,6-disulfonsäure der Formel

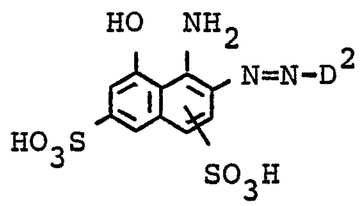

wobei $D^2$ ein reaktivgruppenhaltiger Diazokomponentenrest, beispielsweise ein Rest der Formeln

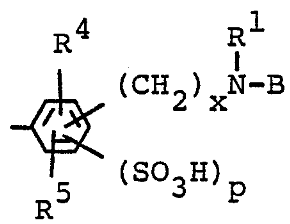

oder

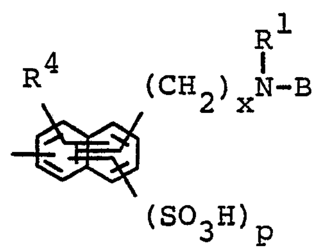

sein kann, worin $R^1$, $R^4$, $R^5$, x, p und B die angegebene Bedeutung haben.

Als aromatische Amine, von denen sich die faserreaktive Reste B tragenden Diazokomponentenreste $D^2$ ableiten, sind im einzelnen beispielsweise zu nennen:
1,3-Diaminobenzol, 1,3-Diaminobenzol-4-sulfonsäure, 1,3-Diaminobenzol-4,6-disulfonsäure, 1,4-Diaminobenzol, 1,4-Diaminobenzol-2-sulfonsäure, 1,4-Diaminobenzol-2,5-disulfonsäure, 1,4-Diamino-2-methyl-benzol, 1,4-Diamino-2-methoxy-benzol, 1,3-Diamino-4-methyl-benzol, 1,4-Diaminobenzol-2,6-disulfonsäure, 1,5-Diamino-4-methylbenzol-2-sulfonsäure, 1,5-Diamino-4-methoxybenzol-2-sulfonsäure, 1,6-Diamino-naphthalin-4-sulfonsäure, 2,6-Diamino-4,8-disulfonaphthalin, 1,3-Diaminobenzol-5-sulfonsäure, 1,3-Diamino-5-methylbenzol,

5-(ω-Aminomethyl)-2-aminonaphthalin-1-sulfonsäure, 5-(ω-N-Methylaminomethyl)-2-aminonaphthalin-1-sulfonsäure, 4,4'-Diaminostilben-3,3'-dicarbonsäure, 4-(ω-N-Methylaminomethyl)-anilin-2-sulfonsäure oder 3-(ω-N-Methylaminomethyl)-anilin-6-sulfonsäure, wobei in allen diesen Aminoverbindungen die eine primäre oder sekundäre Aminogruppe durch den faserreaktiven Acylrest B substituiert ist.

Einzelne faserreaktivgruppentragende Diazokomponentenreste $D^2$ sind z.B.:

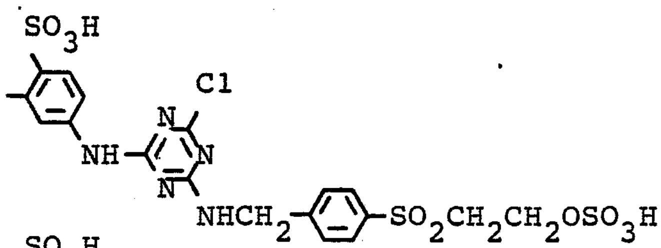

,

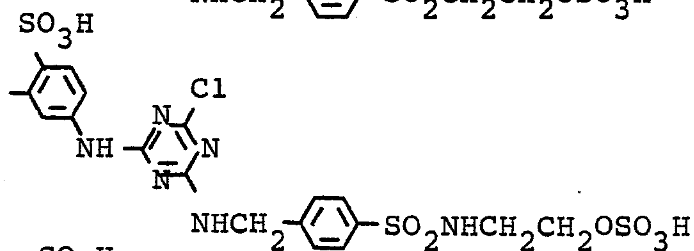

,

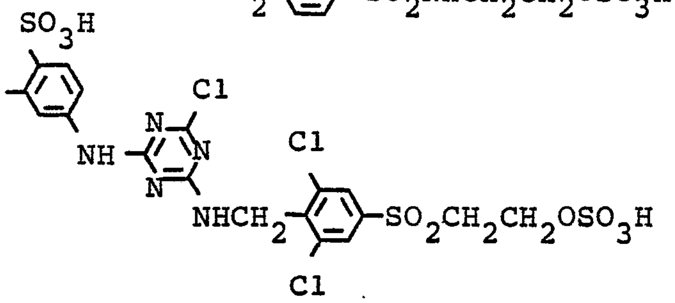

,

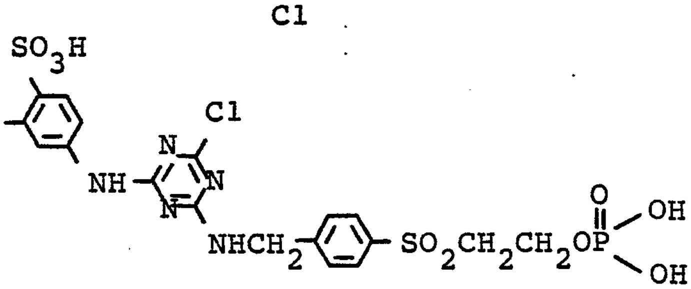

,

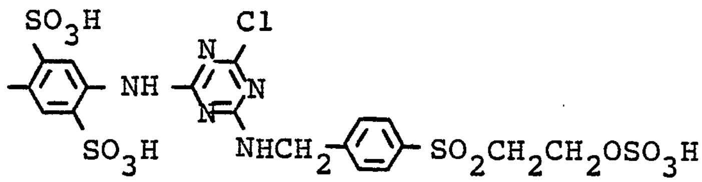 ,

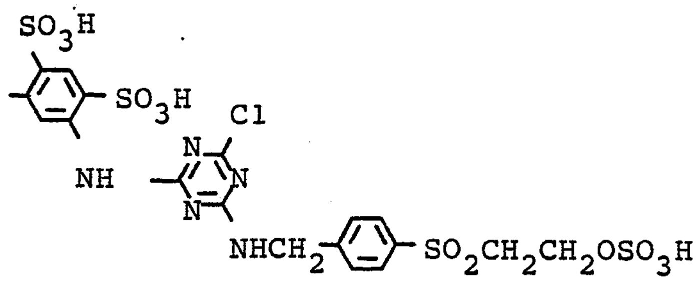 ;

sowie die Reste, die anstelle der angegebenen Sulfonylgruppen die Reste $SO_2CH_2CH_2SSO_3H$ oder $SO_2CH=CH_2$ tragen.

Statt des faserreaktiven Restes B kann die Diazokomponente $D^2$ auch andere faserreaktive Reste tragen:

$D^2$ ist z.B.:

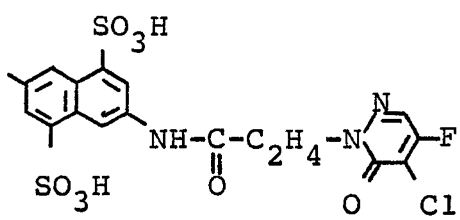 , 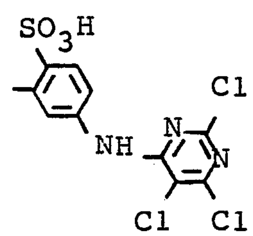 ,

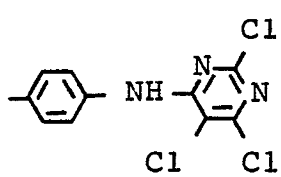 , 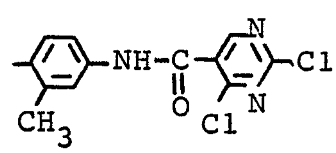 , 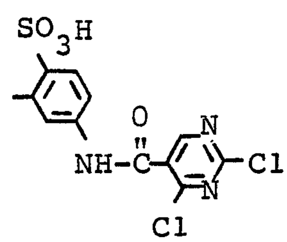 ,

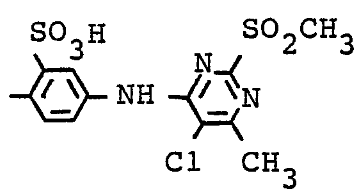 , 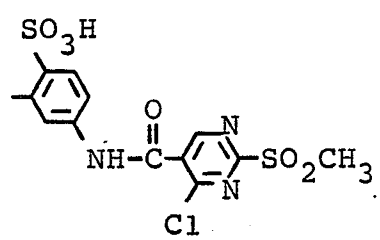 ,

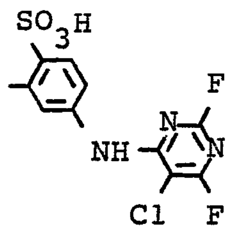 , 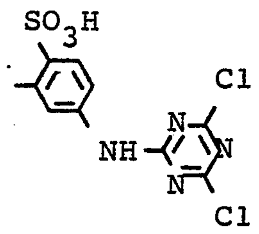 , 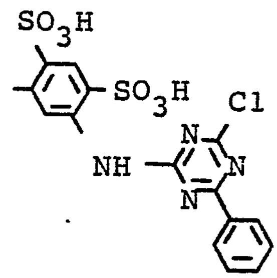 ,

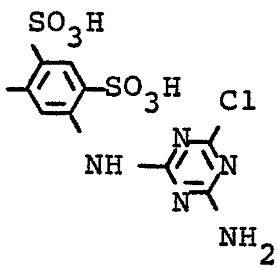 , 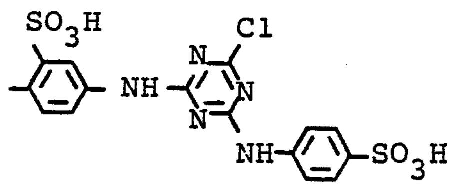 ,

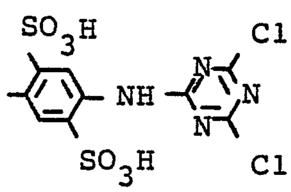 , 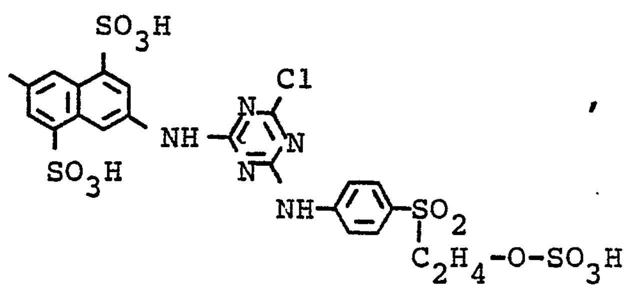 ,

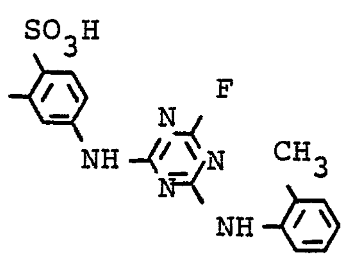 , 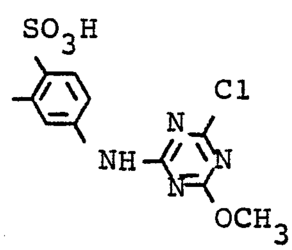 ,

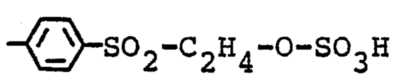 , 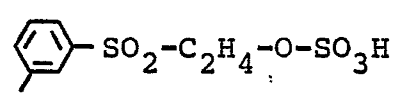 ,

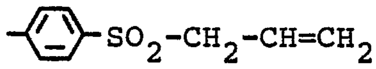 , 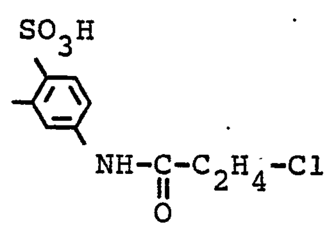 ,

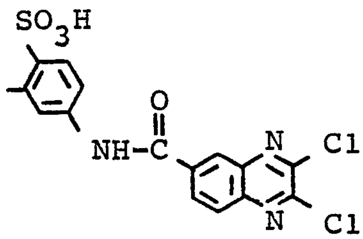,
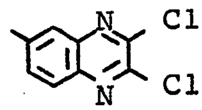,

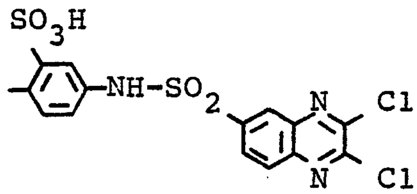
oder
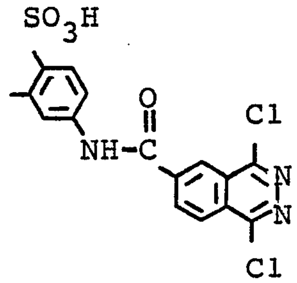.

Faserreaktivgruppenhaltige Kupplungskomponenten der Pyrazolon-, Aminopyrazol-, 2,6-Diaminopyridin-, Pyridon-, Hydroxy- oder Aminopyrimidin-, Indol-, Barbitursäure- oder Acetoacetarylidreihe entsprechen beispielsweise den Formeln VIIa - f:

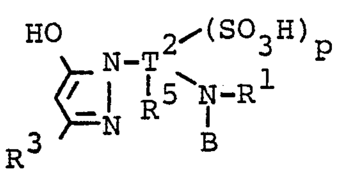,

VIIa

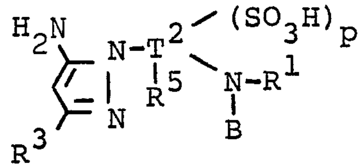,

VIIb

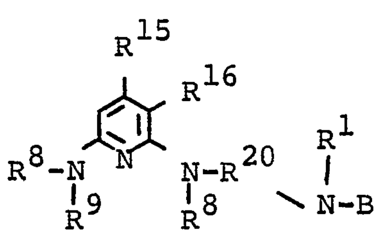,

VIIc

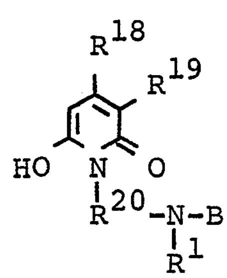,

VIId

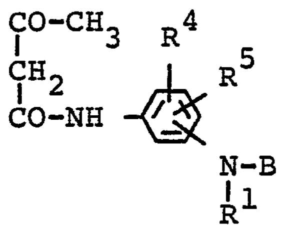

oder

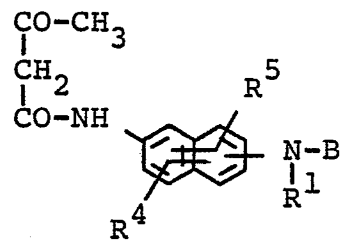

,

VIIe VIIf

worin

$T^2$ für einen Benzol- oder Naphthalinkern,

$R^3$ für eine Methyl- oder Hydroxycarbonylgruppe und

$R^{20}$ für einen $C_1$- bis $C_4$-Alkyl-, Benzyl-, Phenylethyl- oder Phenylrest, wobei die Phenylkerne noch weiter durch Fluor, Chlor, Brom, Methyl, Methoxy, Cyan, Hydroxysulfonyl, Hydroxycarbonyl, Acetyl, Nitro, Aminocarbonyl oder Aminosulfonyl substituiert sein können, stehen und

$R^1$, $R^4$, $R^5$, $R^8$, $R^9$, $R^{15}$, $R^{16}$, $R^{18}$, $R^{19}$, p und B die angegebene Bedeutung haben.

Faserreaktive Reste B tragende Pyrazolonkupplungskomponenten leiten sich beispielsweise von folgenden Pyrazolonen ab: 1-(3'- oder 4'-Aminophenyl)-, 1-(2'-Sulfo-5'-aminophenyl)-, 1-(2'-Methoxy-5'-aminophenyl)-3-carboxy-5-pyrazolon, 1-(3'- oder 4'-Aminophenyl)-, 1-(3'- oder 4'-Nitrophenyl)-3-methyl-5-pyrazolon, 1-(3'- oder 4'-Nitrophenyl)-, 1-(6'-Nitro-4',8'-disulfonaphthyl-2')- oder 1-(6'-Amino-4',8'-disulfonaphthyl-2')-3-carboxy-5-pyrazolon.

Einzelne faserreaktive Reste B tragende Pyrazolone sind beispielsweise:

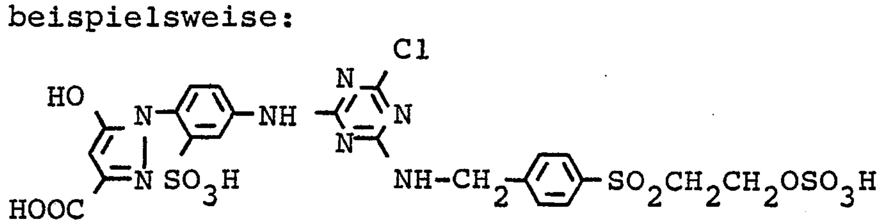

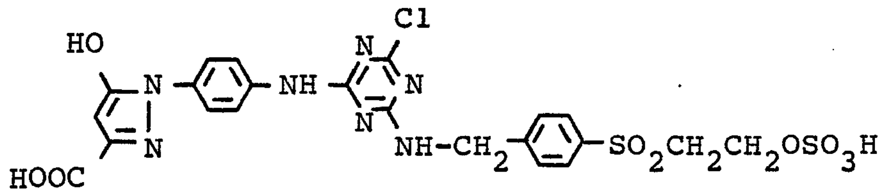

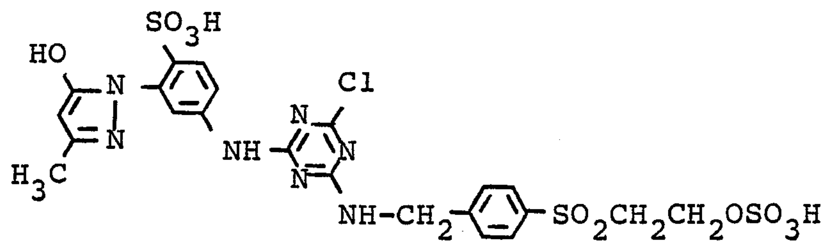

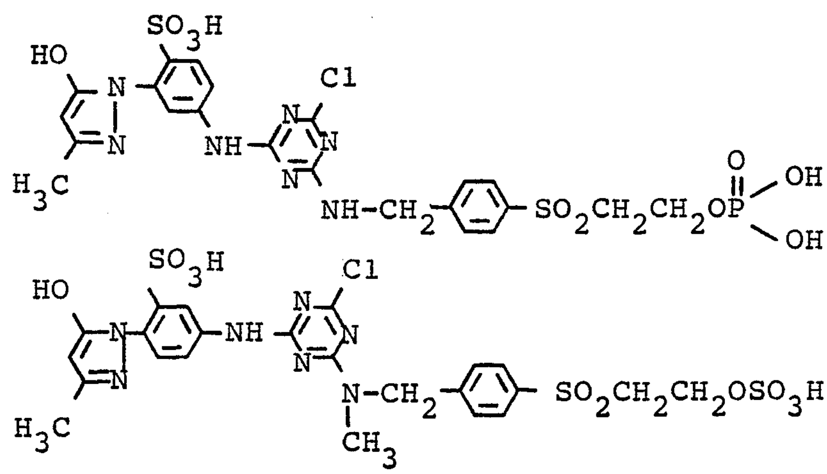

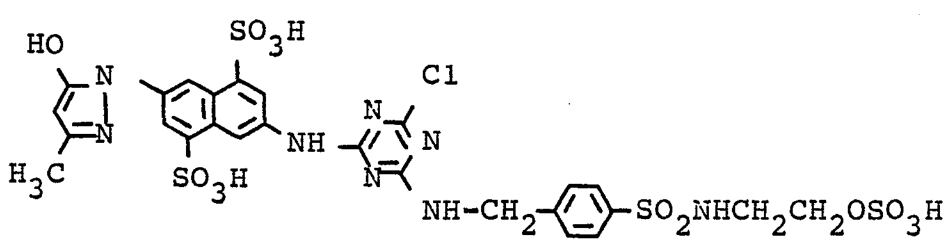

oder 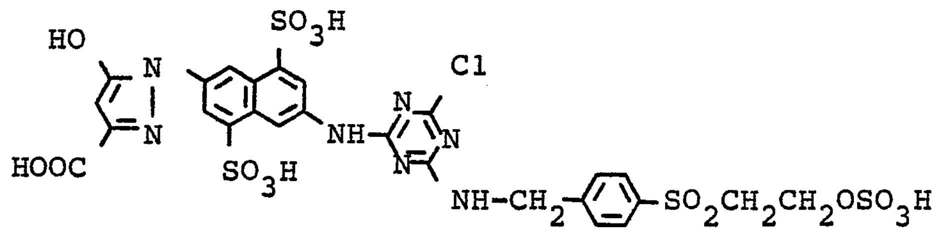

Daneben sind beispielsweise zu nennen:

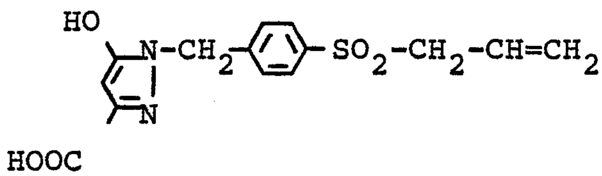

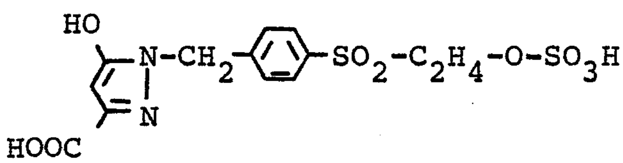

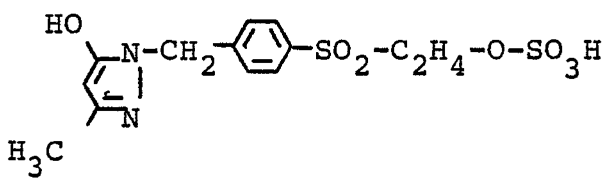

Einzelne faserreaktive Reste B tragende Pyridone sind beispielsweise:

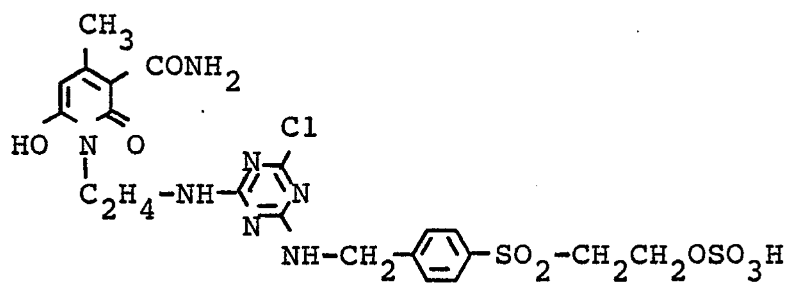

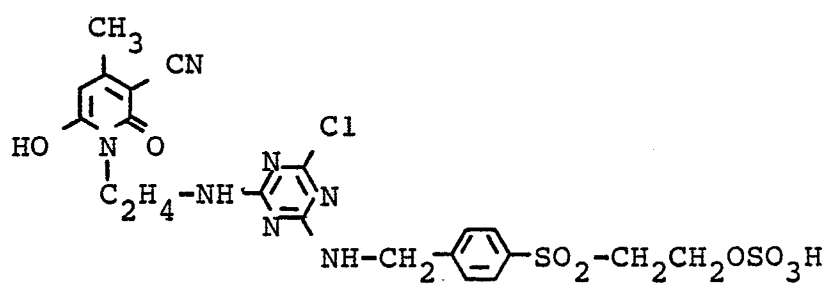

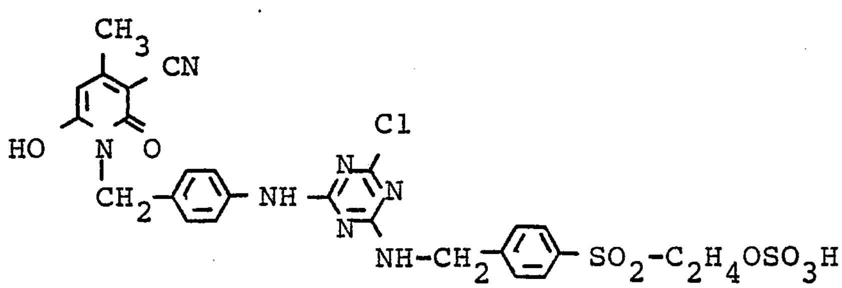

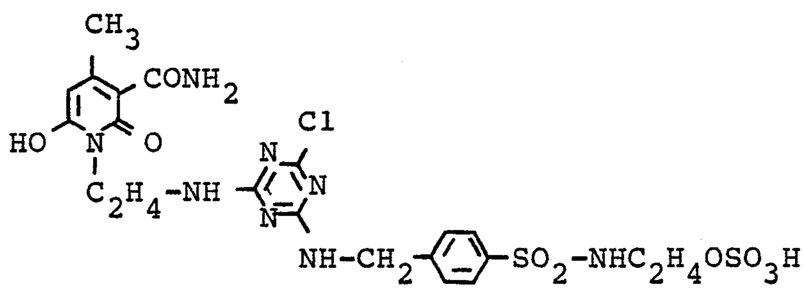

Auch bei den Verbindungen der Seiten 27 bis 29 können die Sulfonylreste wieder in Form der Gruppen $SO_2CH_2CH_2SSO_3H$ oder $SO_2CH{=}CH_2$ vorliegen.

Von besonderer technischer Bedeutung sind Azoverbindungen, die der allgemeinen Formel

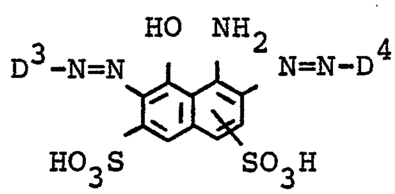

entsprechen, in der

$D^3$ und $D^4$ gleiche oder verschiedene Reste von Diazokomponenten sind, von denen mindestens eine einen Rest der Formel

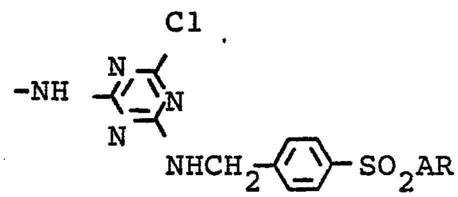

trägt.

Weiterhin sind wertvolle Verbindungen solche der Formel

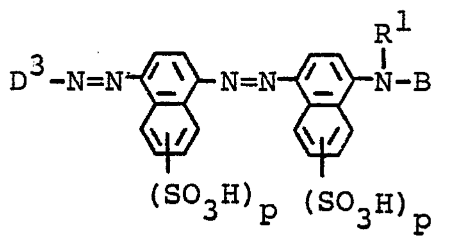

in der $R^1$, $D^3$, p und B die angegebene Bedeutung haben.

Farbstoffe der Dioxazinreihe entsprechen der allgemeinen Formel

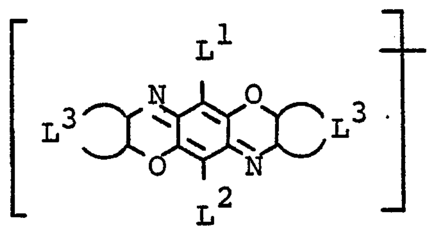

in der

$L^1$ und $L^2$ unabhängig voneinander Wasserstoff, Chlor, Brom, Cyan, gegebenenfalls substituiertes Alkyl, Aryl, Hetaryl, Alkoxy, Aroxy oder Acylamino und die Gruppen

$L^3$ unabhängig voneinander Reste der Formeln

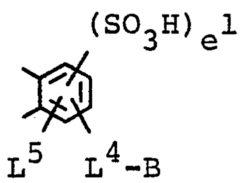 , 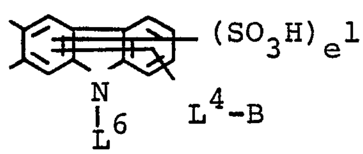 ,

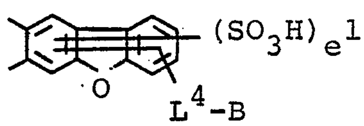 , 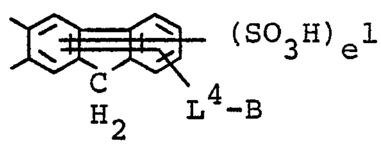 ,

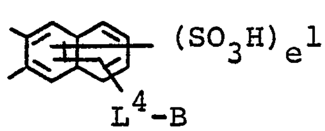 oder 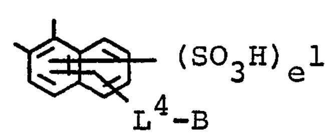

sind, wobei
$e^1$ 0, 1 oder 2,
$L^4$ ein Brückenglied,
$L^5$ Wasserstoff, Alkoxy oder Acylamino und
$L^6$ Wasserstoff oder $C_1$- bis $C_4$-Alkyl sind.

Einzelne Reste $L^1$ und $L^2$ sind neben den bereits genannten z.B.: $CH_3$, $C_2H_5$, $C_3H_7$, $C_4H_9$, $C_6H_5$, $C_6H_4Cl$, $C_6H_3Cl_2$, $C_6H_4CH_3$, $C_6H_4OCH_3$, $C_6H_4NO_2$, $C_6H_3ClCH_3$, 2-Thienyl, $OCH_3$, $OC_2H_5$, $OC_3H_7$, $OC_4H_9$, $OC_6H_5$, $OC_6H_4Cl$, $OC_6H_4CH_3$, $NHCOCH_3$, $NHCOC_2H_5$ oder $NHCOC_3H_7$.

Bevorzugt für $L^1$ und $L^2$ sind Wasserstoff und insbesondere Cl.

Einzelne Reste $L^5$ sind z.B.: Wasserstoff, Methoxy, Ethoxy, Propoxy, Butoxy, Acetylamino, Propionylamino und Butyrylamino.

Bevorzugte Reste $L^5$ sind Wasserstoff, Methoxy und Acetylamino.

Brückenglieder $L^4$ sind z.B.: -NH-(alkylen)-NH-, $-SO_2$-NH-(alkylen)-NH-, -NH-(arylen)-NH-, $-SO_2$-NH-(arylen)-NH, -NH-(alkylen)-O-(alkylen)-NH-, $-SO_2$-(alkylen)-O-(alkylen)-NH-, -O-(alkylen)-O-(arylen)-NH-, -NH-(alkylen)-NH-(Arylen)-NH-, -NH-(aralkylen)-NH-, $-SO_2$-NH-(aralkylen)-NH-, $-CH_2$-NH- oder $-CH_2$-NHCO-(alkylen)-NH-, wobei in den NH-Gruppen der Wasserstoff durch gegebenenfalls substituierte Alkylgruppen ersetzt sein kann, welche miteinander auch unter Bildung eines heterocyclischen Ringes verbunden sein können.

Einzelne Reste $L^4$ sind z.B.: $-NH-CH_2-CH_2-NH-$, $-SO_2-NH-CH_2-CH_2-NH-$, $-NH-CH_2-CH_2-CH_2-NH-$, $-SO_2-NH-CH_2-CH_2-CH_2-NH-$,

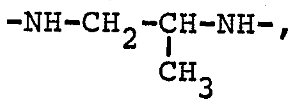, 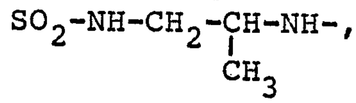,

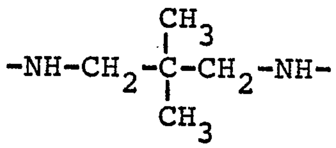, 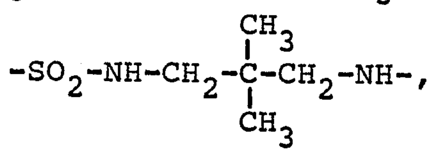, $-NH-(CH_2)_4-NH-$,

$-SO_2-NH(CH_2)_4-NH-$, $-NH-(CH_2)_6-NH-$, $-SO_2NH(CH_2)_6-NH-$, $-NH-CH_2-CH_2-O-CH_2-CH_2-NH-$, $-SO_2-NH-CH_2CH_2-O-CH_2-CH_2-NH-$,

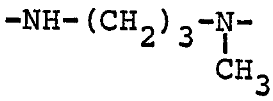, 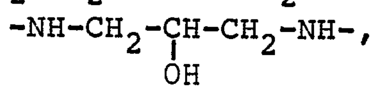, 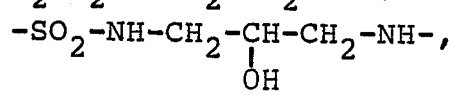,

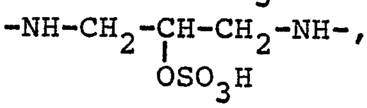, 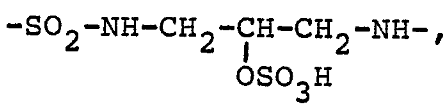,

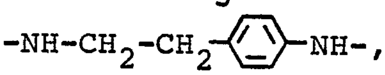, 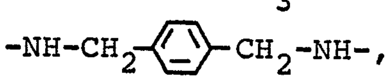,

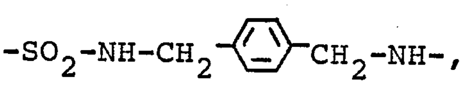, 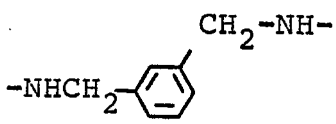,

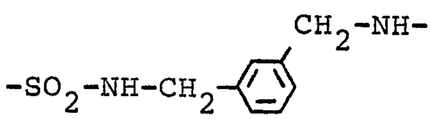, 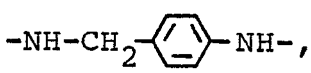, 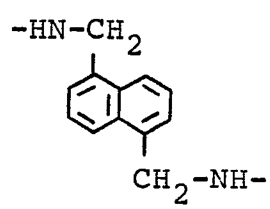,

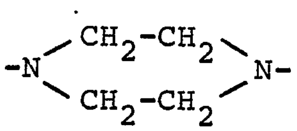, 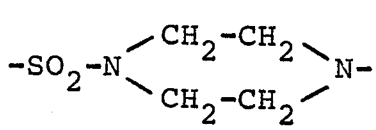, $-CH_2-NH-$,

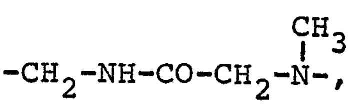, 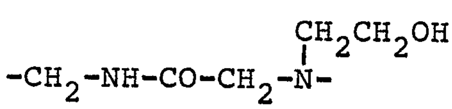,

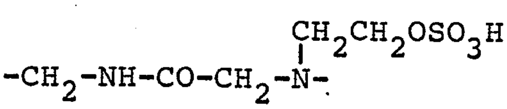, 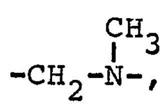, 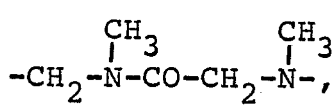,

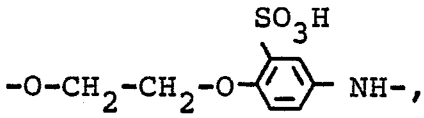, 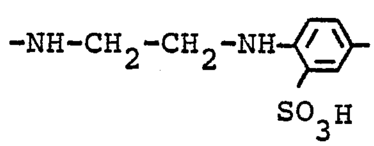, 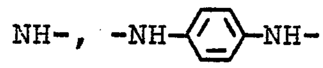,

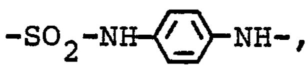, 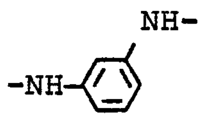, 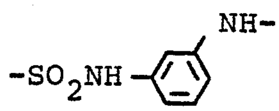, 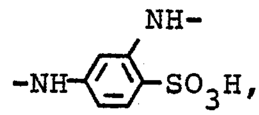,

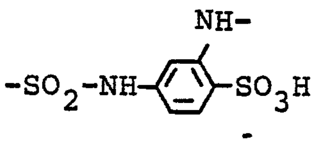, 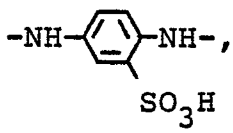, 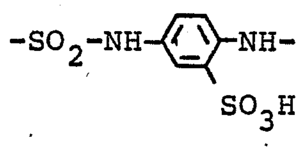,

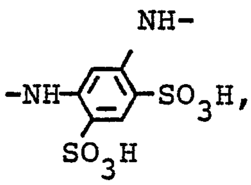, 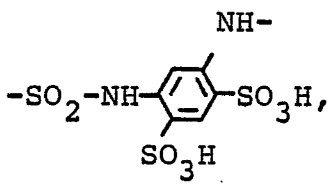, 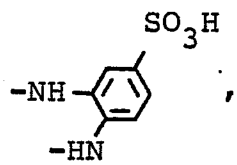, 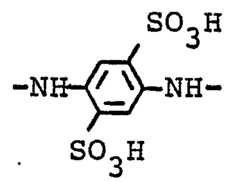,

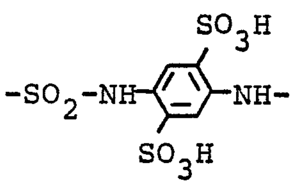 oder 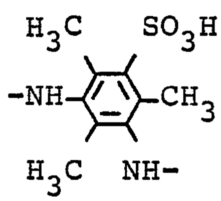 .

Bevorzugte Reste $L^4$ sind z.B.:

$-NH-CH_2-CH_2-NH-$, $-SO_2-NH-CH_2CH_2-NH-$, $-NH-CH_2-CH_2-CH_2NH-$,

$-SO_2-NH-CH_2-CH_2-CH_2-NH-$, 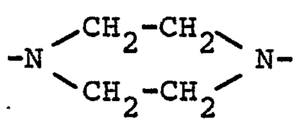, 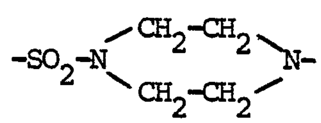,

$-CH_2-NH-$, 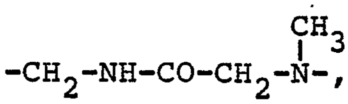, 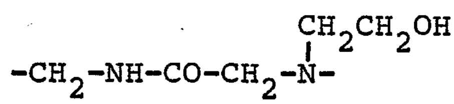 ,

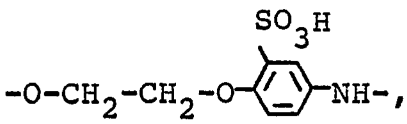, 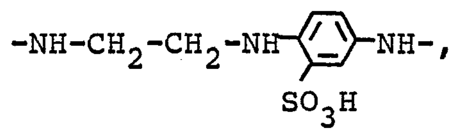,

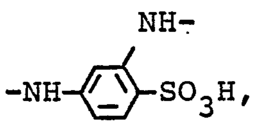, 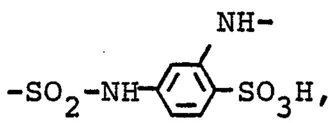, 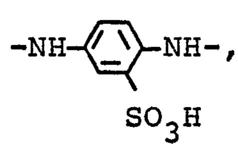,

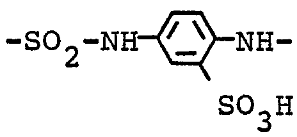 oder 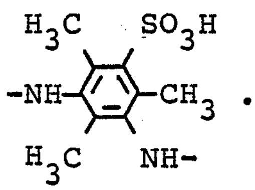 .

Anthrachinonfarbstoffe entsprechen z.B. der Formel

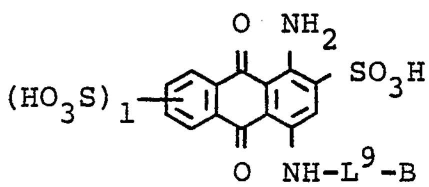

in der

l 0 oder 1 und

$L^9$ ein Brückenglied sind.

Brückenglieder sind z.B.: gegebenenfalls durch $CH_3$, $SO_3H$, $SO_2NH_2$, Cl, Br, $OCH_3$ ein- oder mehrfach substituiertes Iminophenylen, -alkylen, cycloalkylen, -heteroarylen oder mehrkernige und eine weitere Reaktivgruppe enthaltende Reste.

Einzelne Brückenglieder $L^9$ sind z.B.:

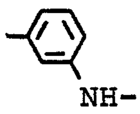 , 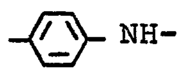 , 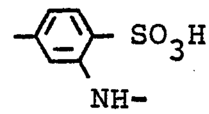 , 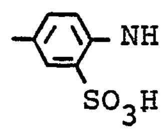 , 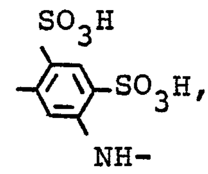

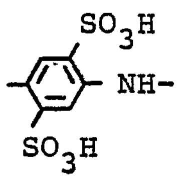 , 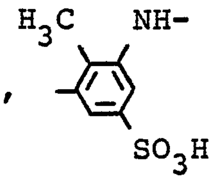 , 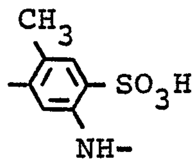 , 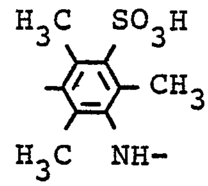 ,

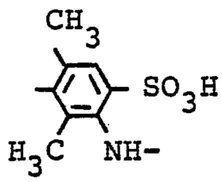 , 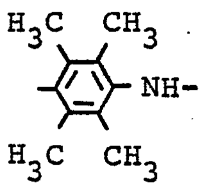 , 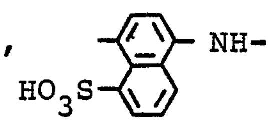 , 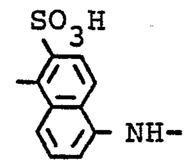 ,

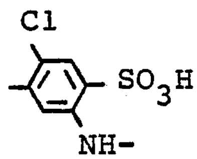 , 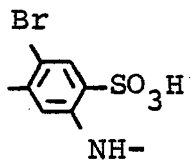 , 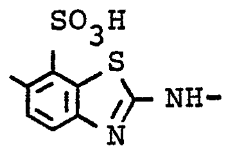 , 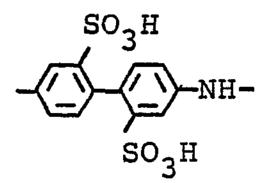 ,

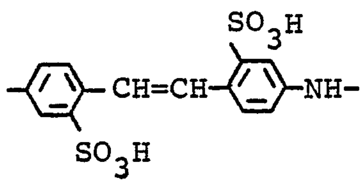 , 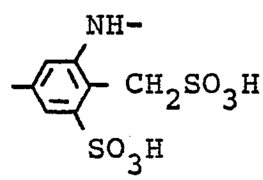 , 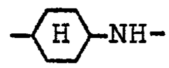 ,

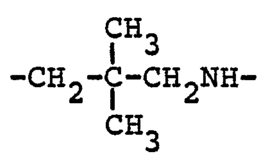 , 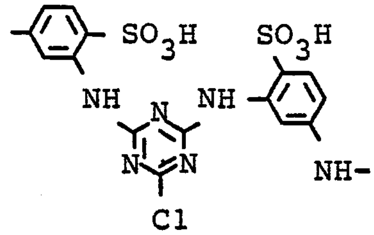 , 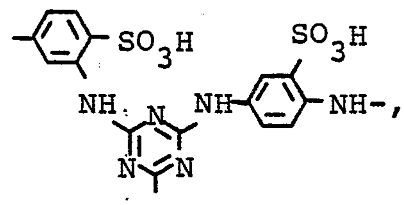

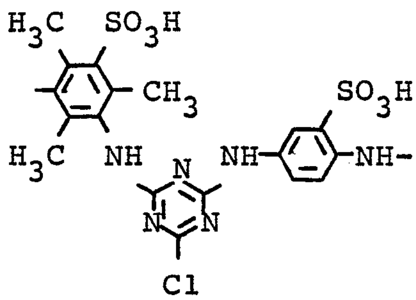 , 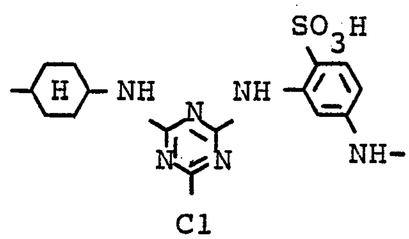 ,

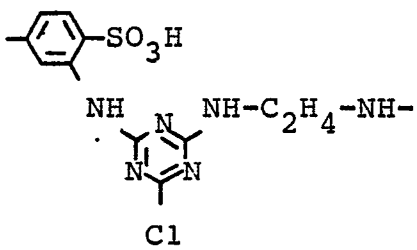 , 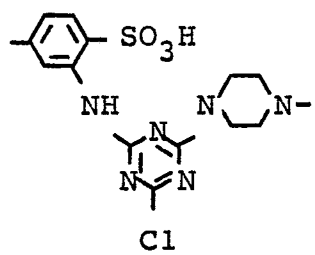 ,

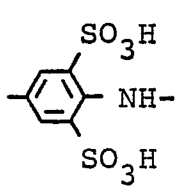 , 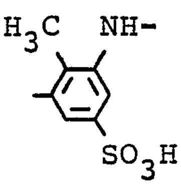 , 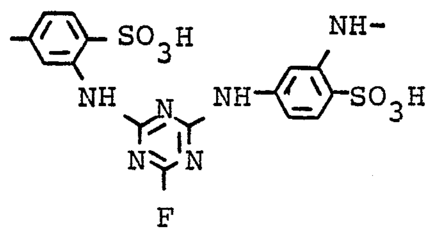 .

Bevorzugte Brückenglieder $L^9$ sind neben einer direkten Bindung beispielsweise:

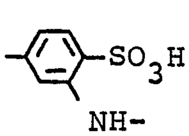 , 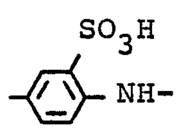 , 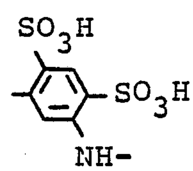 , 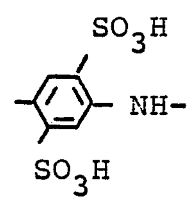 ,

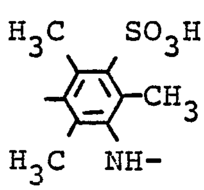 , 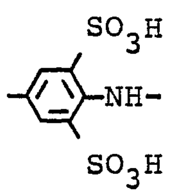 , 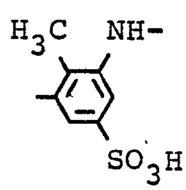 , 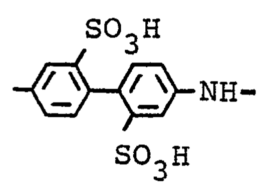 ,

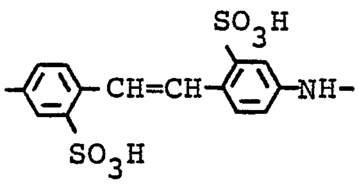 , 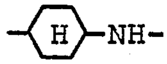 , 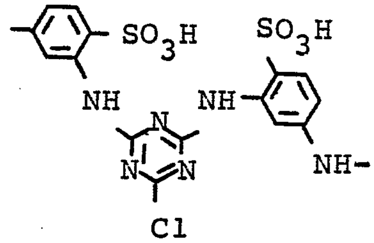 ,

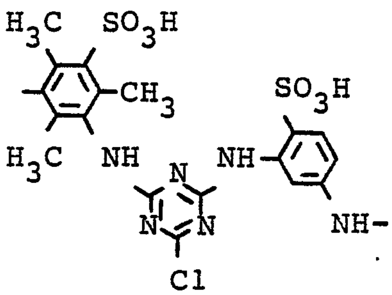 oder 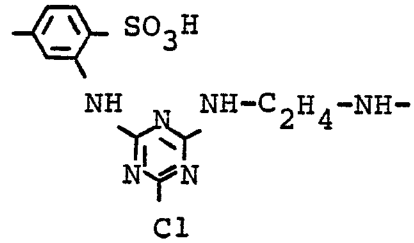 .

Phthalocyaninfarbstoffe entsprechen der Formel

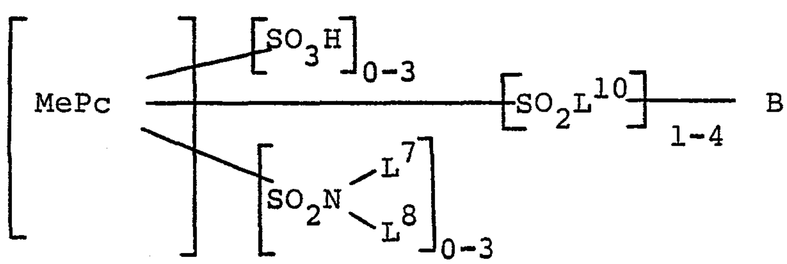

in der

Me Nickel oder Kupfer,

$L^7$ und $L^8$ unabhängig voneinander Wasserstoff oder gegebenenfalls substituiertes Alkyl, Aralkyl oder Aryl und

$L^{10}$ ein Brückenglied oder eine direkte Bindung sind.

Einzelne Reste $L^7$ und $L^8$ sind neben Wasserstoff z.B.:

Methyl, Ethyl, Propyl, Butyl, Hydroxyethyl oder Hydroxypropyl.

Brückenglieder $L^{10}$ sind z.B.:
-HN-(alkylen)-NH-, -HN-(cycloalkylen)-NH-, -NH-aralkylen-NH-, -NH-(arylen)-NH-, -NH-(arylen)-N=N-(hetarylen)-NH-, -NH-(hetarylen)-N=N-(arylen)-NH- oder -NH-(arylen)-N=N-(arylen)-NH-, wobei die Wasserstoffatome der NH-Gruppen durch gegebenenfalls substituierte Alkylgruppen ersetzt sein können, die miteinander auch verbunden sein und dadurch einen heterocyclischen Ring bilden können.

Einzelne Brückenglieder $L^{10}$ sind beispielsweise:

$-HN-CH_2-CH_2-NH-$, $-HN-CH_2-CH_2-CH_2-NH-$, 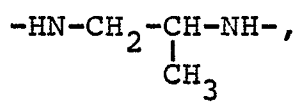,

$-NH-(CH_2)_4-NH-$, 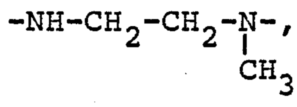, 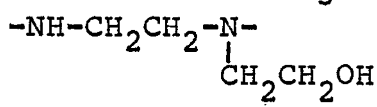,

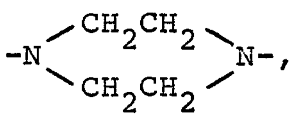, 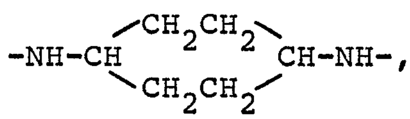, 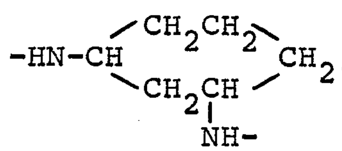,

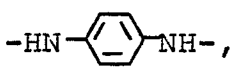, 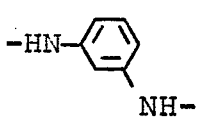, 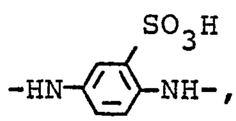, 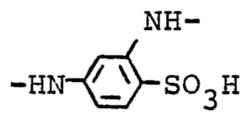,

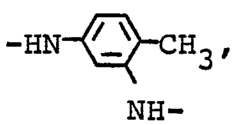, 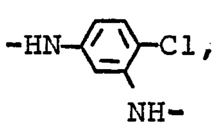, 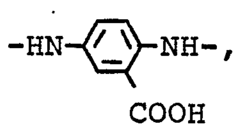, 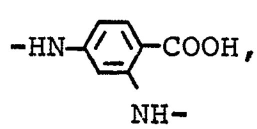,

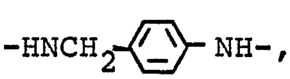, 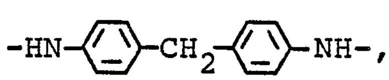, 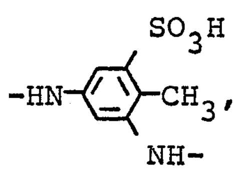,

$-HN-CH_2-CH_2-O-CH_2-CH_2-NH-$, 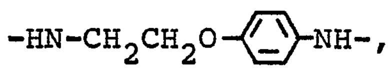

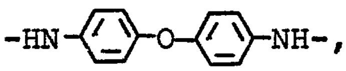 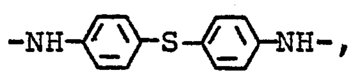 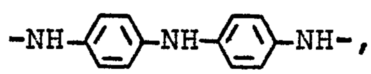

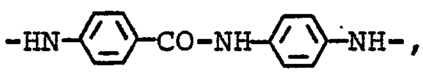 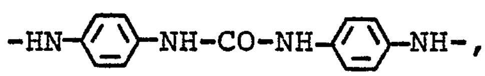

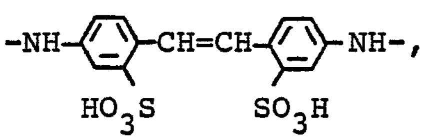 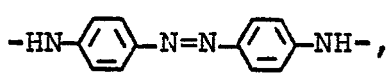

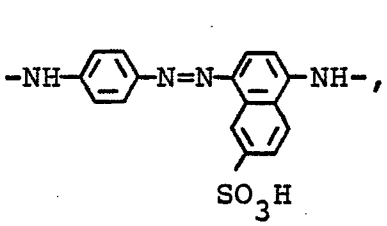 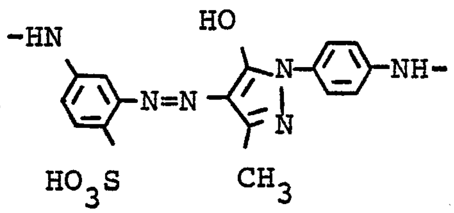 ,

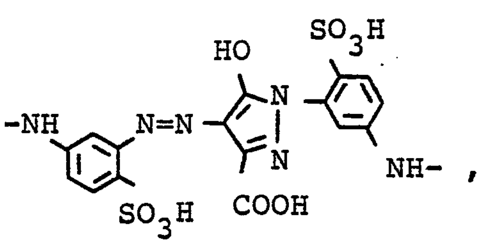 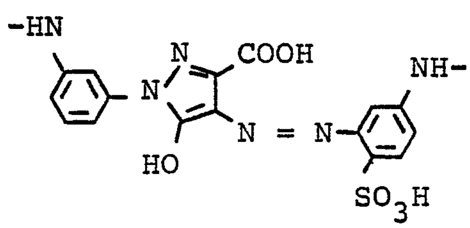 ,

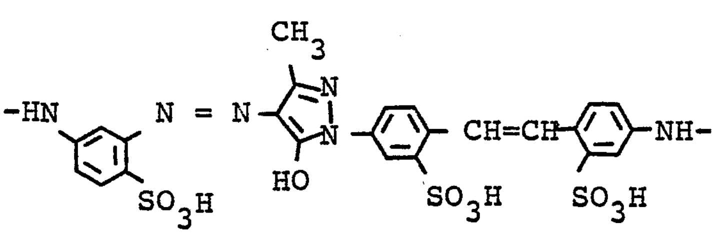 oder

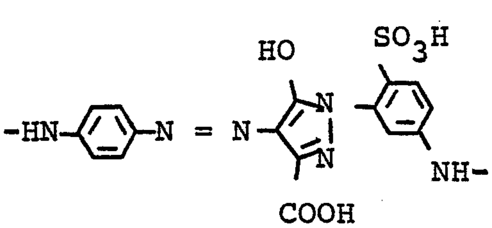 .

Bevorzugte Brückenglieder $L^{10}$ sind z.B.:

$-NH-CH_2-CH_2-NH-$, 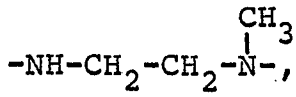, 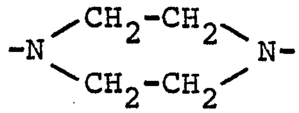,

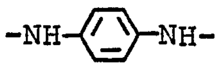, 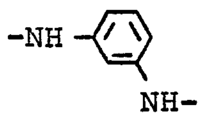, 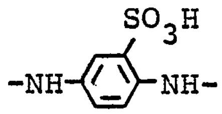, 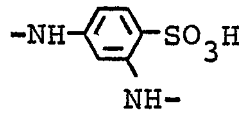,

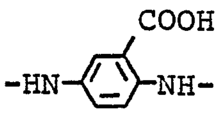, 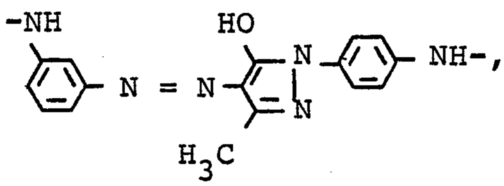,

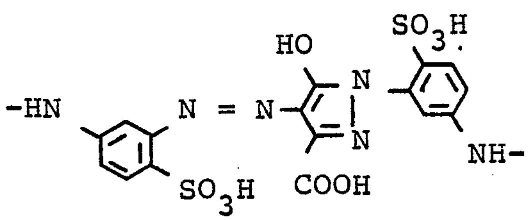, 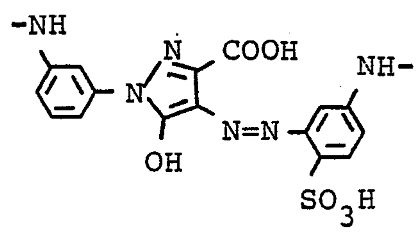,

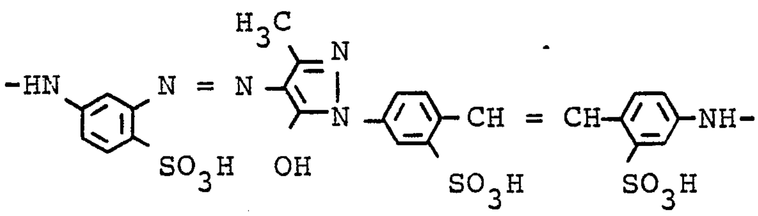 oder

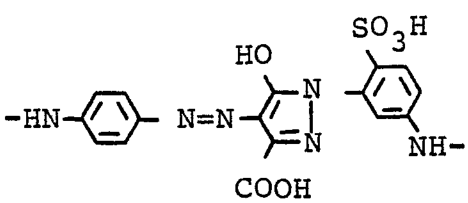.

Anstelle der Azofarbstoffreste D-N=N-K können die Farbstoffe der Formel I auch entsprechende Metallkomplexfarbstoffreste enthalten, als komplexierende Metalle kommen dabei insbesondere Kupfer, Cobalt, Chrom, Nickel und Eisen in Betracht, wobei Kupfer, Cobalt und Chrom bevorzugt sind.

Die Metalle sind dabei in der Regel über -O- oder -COO - an die Farbstoffmoleküle gebunden.

Bei den Co- und Cr-Komplexen handelt es sich um 1:2 Komplexe während bei Einsatz von Cu ausschließlich 1:1 Komplexe entstehen.

Met ist bevorzugt Kupfer, Cobalt und Chrom. Die im folgenden genannten Farbstofftypen können zusätzlich durch in Reaktivfarbstoffen übliche Substituenten, wie z.B. Cl, Br, $OCH_3$, $NHCONH_2$, $NO_2$, $SO_3H$, $SO_2NH_2$, COOH oder $CONH_2$ substituiert sein. Die Synthese der Farbstoffe erfolgt nach an sich bekannten Methoden.

Bevorzugte Komplextypen sind z.B.:

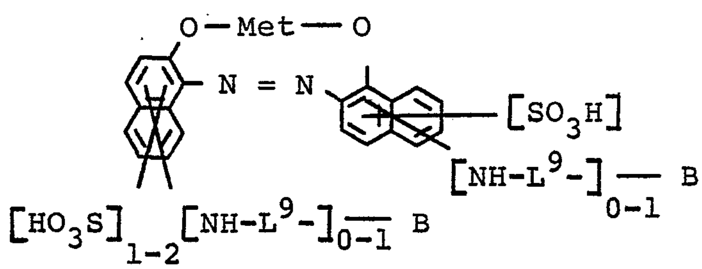

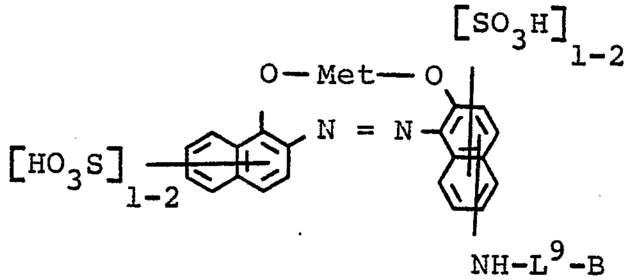

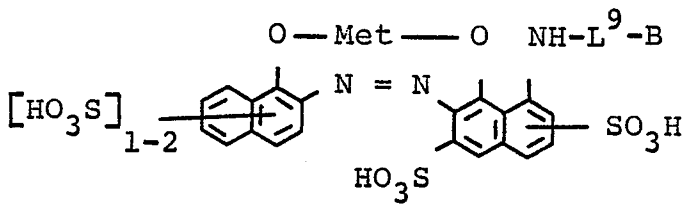

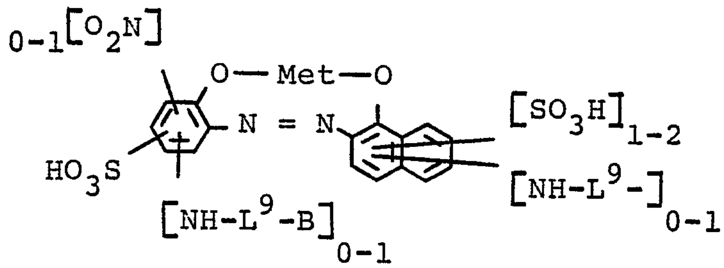

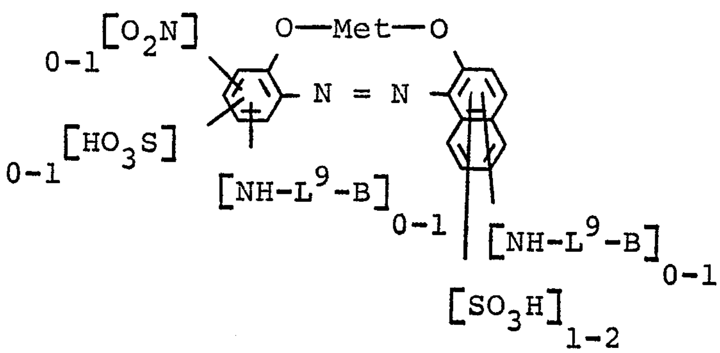

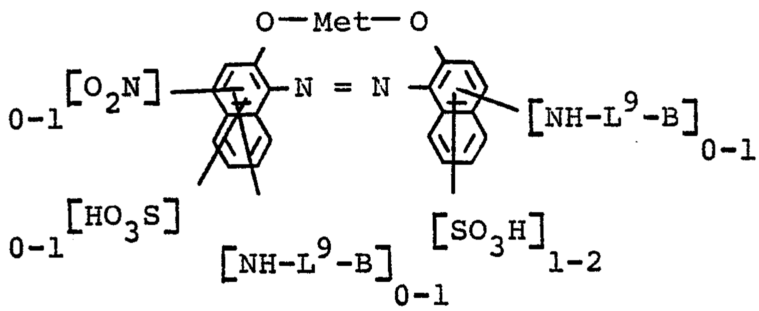

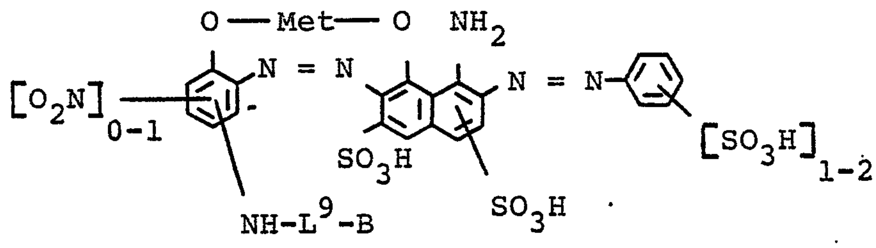

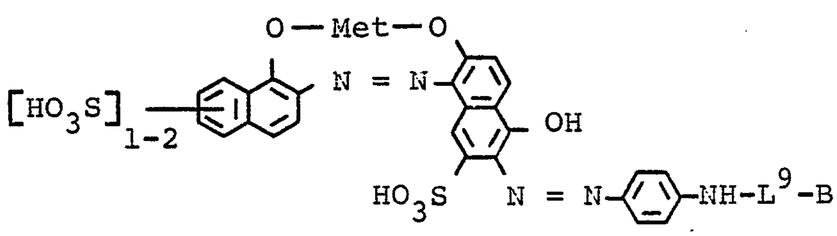

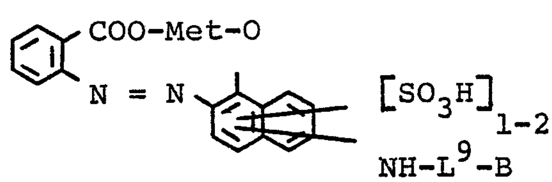

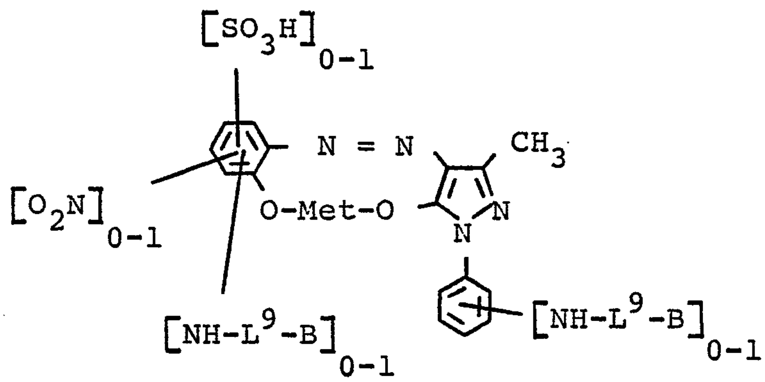

oder

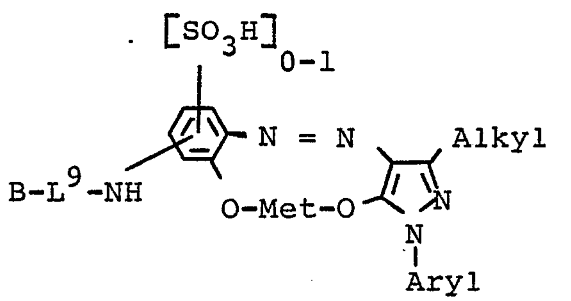

Aryl ist dabei ein durch beliebige Substituenten, insbesondere durch $SO_3H$, Cl, $NH_2$ oder $OCH_3$ substituierter Phenyl- oder Naphthylrest und $L^9$ hat die angegebene Bedeutung.

Auch unsymmetrische Co- oder Cr-Metallkomplexe vom 1:2 Typ sind herstellbar, wie beispielsweise:

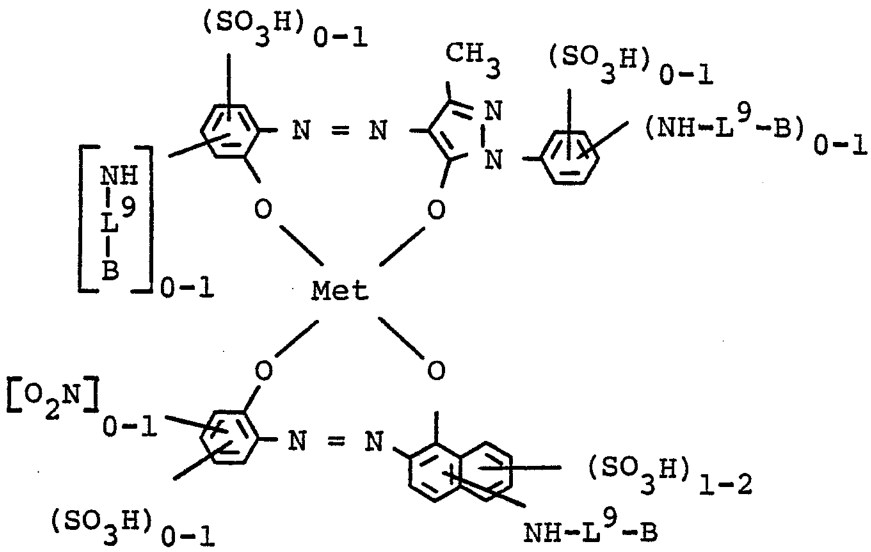

Besonders brillante Blaufarbstoffe erhält man in der Reihe der Kupferformazankomplexfarbstoffe. Formazanfarbstoffe entsprechen dabei den allgemeinen Formeln

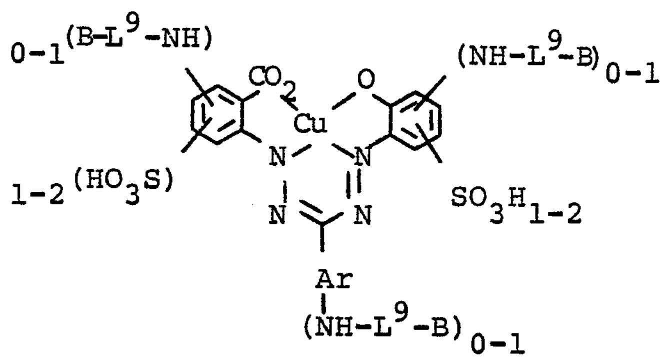

oder

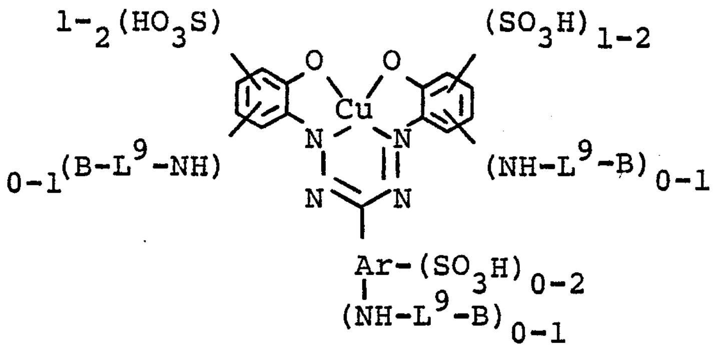

in denen Ar die auf Seite 46 angegebene Bedeutung hat.

Den Rest der Formel

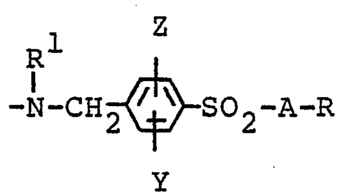

kann man z.B. aus den entsprechenden Benzylaminen durch Sulfochlorierung und Umsetzung mit

$H_2N{-}R$

erhalten. Wenn A eine direkte Bindung ist, wird das Sulfochlorid zunächst zur Sulfinsäure reduziert und diese dann mit beispielsweise Alkylenoxid oder halogensubstituierten Alkoholen zur Hydroxyalkylverbindung umgesetzt und gegebenenfalls verestert. Die Methoden sind an sich bekannt und können analog angewendet werden.

Die Verbindungen der Formel I eignen sich, als Reaktivfarbstoffe für hydroxylgruppenhaltige Fasern, insbesondere Baumwolle, sowie auch für Wolle.

Als Färbeverfahren eignen sich die bekannten Reaktivfärbeverfahren, insbesondere Ausziehverfahren bei 40 - 80 °C und Kaltverweilverfahren.

Die Applikation ist in einem weiten Temperaturbereich möglich und die Farbstoffe zeichnen sich durch hohe Ausgiebigkeit aus.

Von besonderer Bedeutung sind Verbindungen der Formel Ia

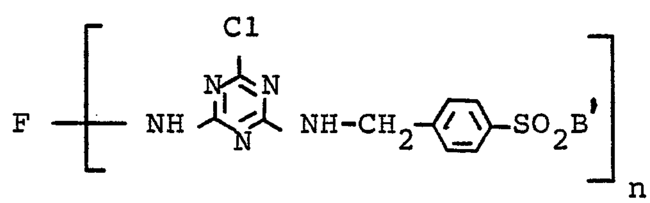

in der

F und n die angegebene Bedeutung haben und

B' $CH_2CH_2OSO_3H$, $CH_2CH_2SSO_3H$, $CH_2CH_2OPO_3H$ oder $CH_2=CH_2$ ist.

Bevorzugt ist B' $CH_2CH_2OSO_3H$.

In den nachfolgenden Tabellenbeispielen sind erfindungsgemäße Farbstoffe entsprechend der allgemeinen Formel I beschrieben, wobei die Abkürzungen $B^1$ - $B^6$ folgende Bedeutung haben:

$B^1$: 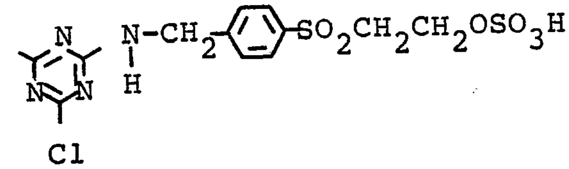

$B^2$: 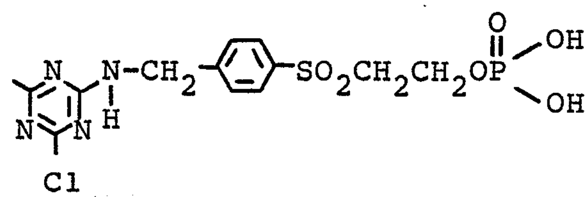

$B^3$: 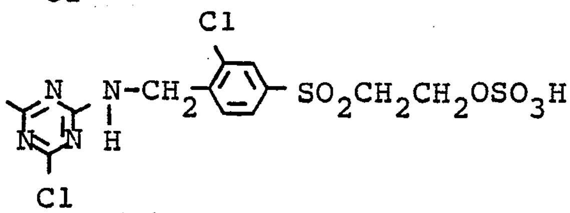

$B^4$: 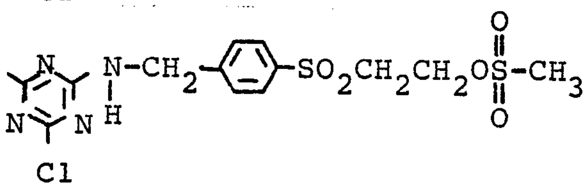

$B^5$: 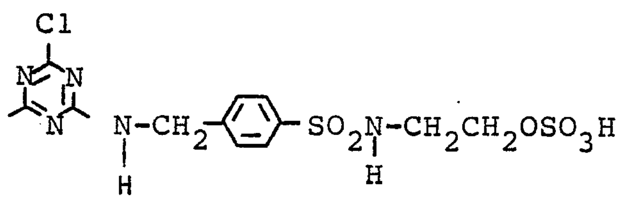

$B^6$: 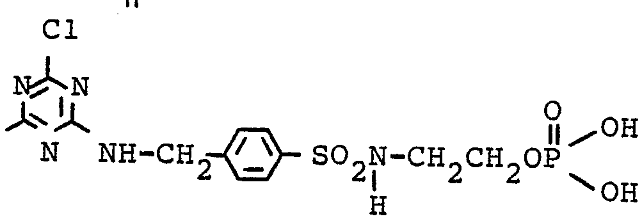

$B^7$: 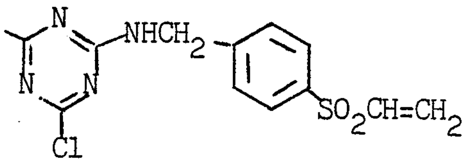

$B^8$: 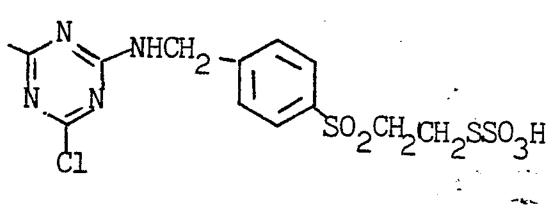

Beispiel 1

Das Monokondensationsprodukt aus 18,8 Teilen 1,3-Phenylendiamin-4-sulfonsäure und 19 Teilen Cyanurchlorid wird salzsauer diazotiert, mit einer Suspension von 23,7 Teilen 2-Amino-8-hydroxynaphthalin-6-sulfonsäure versetzt und schwach sauer gekuppelt. Es wird eine Lösung von 35 Teilen 4-(ß-Sulfatoäthylsulfonyl)-benzylamin zugefügt und bei 40 °C und einem pH-Wert von 7 bis 7,5 kondensiert. Aus neutraler Lösung wird der Farbstoff durch Zusatz von Kaliumchlorid gefällt und schonend getrocknet. Man erhält ein dunkelrotes Pulver, das Baumwolle in echten roten Tönen färbt.

Beispiel 2

Ersetzt man die in Beispiel 1 verwendete 2-Amino-8-hydroxynaphthalin-6-sulfonsäure durch 25,1 Teile 2-N-Methylamino-8-hydroxynaphthalin-6-sulfonsäure, so erhält man einen Farbstoff mit ähnlichen Eigenschaften. Er färbt Baumwolle in echten blaustichig roten Tönen.

Beispiel 3

Zu 17,3 Teilen salzsauer diazotierter Anilin-4-sulfonsäure werden bei 5 °C 31,6 Teile einer Suspension von 1-Amino-8-hydroxynaphthalin-3,6-disulfonsäure in 300 Teilen Wasser gegeben. Man kuppelt über Nacht bei pH 1 - 2 und fügt anschließend 38,6 Teile einer Suspension von salzsauer diazotiertem primärem Kondensationsprodukt aus Cyanurchlorid und

1,3-Phenylendiamin-4-sulfonsäure zu. Durch Zugabe von 17,8 Teilen Natriumcarbonat wird schwach sauer ausgekuppelt; anschließend wird eine Lösung von 34 Teilen 4-(ß-Sulfatoäthylsulfonyl)-benzylamin zugefügt und bei 30 - 40 °C und einem pH-Wert von 7 - 7,5 kondensiert. Aus neutraler Lösung wird der Farbstoff durch Zugabe von Kaliumchlorid gefällt und schonend getrocknet. Man erhält ein schwarzes Pulver, das Baumwolle in echten marineblauen Tönen färbt.

Der in Beispiel 3 genannte Farbstoff entspricht der Formel

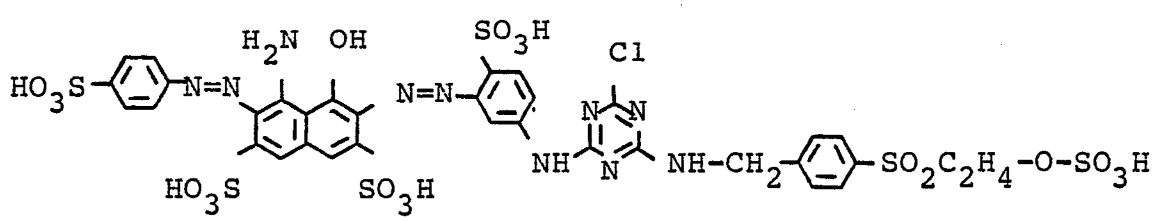

Analoge erfindungsgemäße Farbstoffe sind in Tabelle 1 zusammengefaßt, wobei in Spalte I die zur sauren Kupplung verwendete Diazokomponente, in Spalte II die zur Kupplung in neutraler oder alkalischer Lösung verwendete Diazokomponente, in Spalte III der faserreaktive Rest B und in Spalte IV der auf Baumwolle erzielte Farbton angegeben sind.

Tabelle 1

| Bsp. | I | II | III | IV |
|---|---|---|---|---|
| 4 | 2-Chlor-4-sulfo-anilin | 1,3-Phenylendiamin-4-sulfonsäure | $B^1$ | Marineblau |
| 5 | 2-Chlor-4,6-di-sulfo-anilin | " | $B^5$ | rotstichig Marineblau |
| 6 | 4-Chlor-2-sulfo-anilin | " | $B^2$ | " |
| 7 | 2-Naphthylamin-1,5-disulfonsäure | " | $B^3$ | grünstichig Marineblau |
| 8 | 4-Alkylsulfonyl-anilin | " | $B^1$ | rotstichig Marineblau |
| 9 | 2-Methyl-4,6-di-sulfoanilin | " | $B^5$ | " |
| 10 | 2-Naphthylamin-3,6,8-trisulfon-säure | " | $B^1$ | grünstichig Marineblau |
| 11 | 4-(2'-Sulfato-äthyl-sulfonyl)-anilin | " | $B^1$ | rotstichig Marineblau |
| 12 | 3-(4',6'-Dichlor-triazinyl)-amino-6-sulfoanilin | " | $B^1$ | " |
| 13 | 3-[4'-Chlor-6'-(3''-sulfophenyl-amino-1''-)-tri-azinyl]-amino-6-sulfoanilin | " | $B^3$ | " |
| 14 | 3-[4'-Chlor-6'-{4''-(2'''-sulfatoäthyl-sulfonyl-)-benzyl-amino} -triazinyl]-amino-6-sulfoanilin | " | $B^1$ | " |
| 15 | Anilin | " | $B^1$ | " |
| 15a | Anilin-4-sulfonsäure | 1,3-Phenylendiamin-4-sulfonsäure | $B^7$ | Marineblau |
| 15b | 2-Naphthylamin-1,5-di-sulfonsäure | " | $B^8$ | grünstichig Marineblau |

Beispiel 16

59,5 Teile des sekundären Kondensationsproduktes aus 1,3-Phenylendiamin-4-sulfonsäure, Cyanurchlorid und 4-(ß-Sulfatoäthylsulfonyl)-benzylamin werden salzsauer diazotiert in in essigsaurer Lösung auf eine Suspension von 30,8 Teilen 1-Amino-8-hydroxy-naphthalin-3,6-disulfonsäure in 300 Teilen Wasser gekuppelt. Zu dem roten Monoazofarbstoff werden anschließend 17,3 Teile salzsauer diazotierte Anilin-4-sulfonsäure gegeben und neutral zum Disazofarbstoff gekuppelt. Der Farbstoff wird durch Zugabe von Kaliumchlorid abgeschieden und schonend getrocknet. Man erhält ein schwarzes Pulver, das Baumwolle in rotstichig, marineblauen Tönen mit guter Echtheit färbt.

Der in Beispiel 16 genannte Farbstoff entspricht der Formel

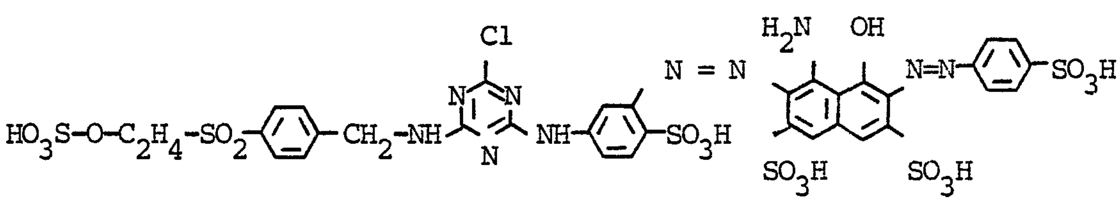

Analoge erfindungsgemäße Farbstoffe sind in Tabelle 2 zusammengefaßt, wobei in Spalte I die zur sauren Kupplung verwendete Diazokomponente, in Spalte II die zur Kupplung in neutraler oder alkalischer Lösung verwendete Diazokomponente, in Spalte III der faserreaktive Rest B und in Spalte IV der auf Baumwolle erzielte Farbton angegeben sind.

Tabelle 2

| Bsp. | I | II | III | IV |
|---|---|---|---|---|
| 17 | 1,3-Phenylendiamin-4-sulfonsäure | 2-Naphthylamin-1,5-disulfonsäure | $B^2$ | rotstichig Marineblau |
| 18 | " | 2-Chlor-4,6-disulfoanilin | $B^1$ | " |
| 19 | " | 2-Chlor-4-sulfoanilin | $B^5$ | " |
| 20 | " | 2-Methyl-4,6-disulfoanilin | $B^1$ | " |
| 21 | " | 4-(ß-Sulfatoäthylsulfonyl)-anilin | $B^1$ | " |
| 22 | " | 3-(4',6'-Dichlortriazinyl)-amino-6-sulfoanilin | $B^1$ | " |
| 23 | " | 2-Naphthylamin-3,6,8-trisulfonsäure | $B^3$ | " |
| 24 | " | Anilin | $B^1$ | " |
| 25 | " | 4-Sulfamoyl-anilin | $B^1$ | " |
| 25a | 1,3-Phenylendiamin-4-sulfonsäure | Anilin-4-sulfonsäure | $B^7$ | " |
| 25b | " | 2-Naphthylamin-1,5-disulfonsäure | $B^8$ | " |

Beispiel 26

Das Kondensationsprodukt aus 18,8 Teilen 1,3-Phenylendiamin-4-sulfonsäure und 19 Teilen Cyanurchlorid wird salzsauer diazotiert, mit 28,5 Teilen 1-(4'-Sulfophenyl)-3-carboxy-pyrazolon-5 versetzt und bei pH 5 - 7 gekuppelt. Nach Zugabe einer Lösung von 35 Teilen 4-(ß-Sulfatoethylsulfonyl)-benzylamin wird die Temperatur auf 40 °C erhöht und ein pH-Wert von 7,5 eingestellt. Nach beendeter Kondensation wird der Farbstoff mit Kaliumchlorid aus neutraler Lösung abgeschieden und schonend getrocknet. Er färbt Baumwolle in echten gelben Tönen und entspricht der Formel

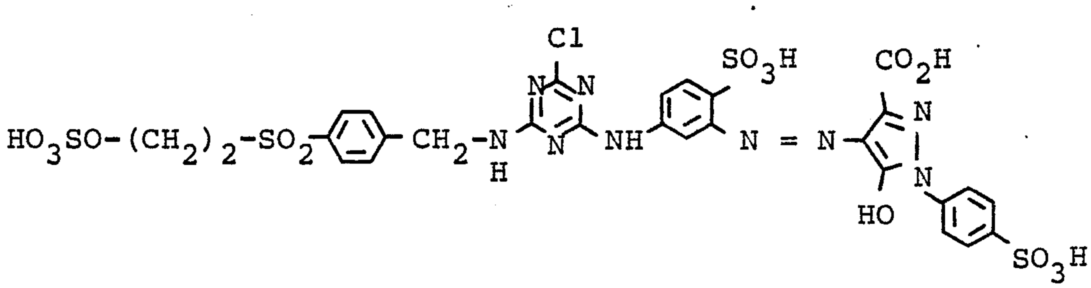

Weitere erfindungsgemäße Farbstoffe sind in Tabelle 3 zusammengefaßt, wobei in Spalte I die anstelle von 1,3-Phenylendiamin-4-sulfonsäure verwendete Verbindung, in Spalte II die anstelle von 1-(4'-Sulfophenyl)-3-carboxy-pyrazolon-5 verwendete Kupplungskomponente, in Spalte III der im Farbstoff vorhandene Reaktivanker und in Spalte IV die auf Baumwolle erzielte Nuance angegeben ist.

Tabelle 3

| Bsp. | I | II | III | IV |
|---|---|---|---|---|
| 27 | 1,3-Diaminobenzol-4-sulfonsäure | 1-(2'-Methyl-4'-sulfophenyl)-3-carboxypyrazolon-5 | $B^1$ | gelb |
| 28 | " | 1-Naphthol-3,6-disulfonsäure | $B^1$ | orange |
| 29 | " | 1-Naphthol-3,8-disulfonsäure | $B^1$ | scharlach |
| 30 | " | 1-Naphthol-4,8-disulfonsäure | $B^1$ | gelbst. rot |
| 31 | " | 1-Naphthol-7-(3'-sulfophenyl)-amino-3-sulfonsäure | $B^1$ | braun |
| 32 | " | " | $B^5$ | " |
| 33 | " | 1-Ethyl-2-hydroxy-4-methyl-5-aminocarbonylpyridon-2 | $B^1$ | gelb |
| 34 | " | 1-(4'-Sulfophenyl)-3-carboxypyrazolon-5 | $B^2$ | " |
| 35 | " | " | $B^3$ | " |
| 36 | " | " | $B^5$ | " |
| 37 | " | " | $B^6$ | " |
| 38 | 1,4-Diaminobenzol-2,5-disulfonsäure | 2-iso-Propoxy-4,5-dihydroxy-pyrimidin | $B^1$ | " |
| 39 | 1,3-Diaminobenzol-4,6-disulfonsäure | 1-Phenyl-3-carboxy-pyrazolon-5 | $B^1$ | " |
| 40 | 1,3-Diaminobenzol-4-sulfonsäure | 1,4-Dimethyl-6-oxy-2-pyridon-3-sulfonsäure | $B^1$ | grüngelb |

| Bsp. | I | II | III | IV |
|---|---|---|---|---|
| 41 | 1,3-Diaminobenzol-4-sulfonsäure | 1-Ethyl-4-methyl-6-oxy-2-pyridon-3-carbonamid | $B^3$ | grüngelb |
| 42 | " | " | $B^2$ | " |
| 43 | " | " | $B^5$ | " |
| 44 | 1,4-Diaminobenzol-6-sulfonsäure | " | $B^1$ | " |
| 45 | " | 1-Butyl-4-methyl-6-oxy-2-pyridon-3-carbonamid | $B^1$ | " |
| 46 | 1,3-Diaminobenzol-4-sulfonsäure | 1-Ethyl-4-methyl-6-oxy-2-pyridon-3-methansulfonsäure | $B^1$ | " |
| 46a | " | 1-(4'Sulfophenyl)-3-carboxypyrazolin-5 | $B^7$ | gelb |
| 46b | 1,4-Diaminobenzol-2-sulfonsäure | " | $B^7$ | goldgelb |
| 46c | 1,3-Diaminobenzol-4,6-disulfonsäure | 1,4-Dimethyl-6-oxy-2-pyridon-3-carbonamid | $B^7$ | grünst. gelb |
| 46d | " | 1-Naphthol-3,6-disulfonsäure | $B^7$ | orange |

Beispiel 47

Eine Lösung von 48,3 Teilen 1-(4'-Sulfophenyl)-3-carboxy-4-(4'-Amino-2'-sulfophenylazo)-pyrazolon-5 in 750 Teilen Eiswasser wird bei 0 - 5 °C und pH 5 mit 19 Teilen Cyanurchlorid umgesetzt. Sobald keine freien Aminogruppen mehr nachweisbar sind, werden 35 Teile 4-(ß-Sulfatoethylsulfonyl)-benzylamin zugegeben und bei 40 °C, pH 7 - 8, umgesetzt. Der nach Fällung mit Kaliumchlorid und schonender Trocknung erhaltene Farbstoff färbt Baumwolle in echten goldgelben Tönen. Er entspricht der Formel

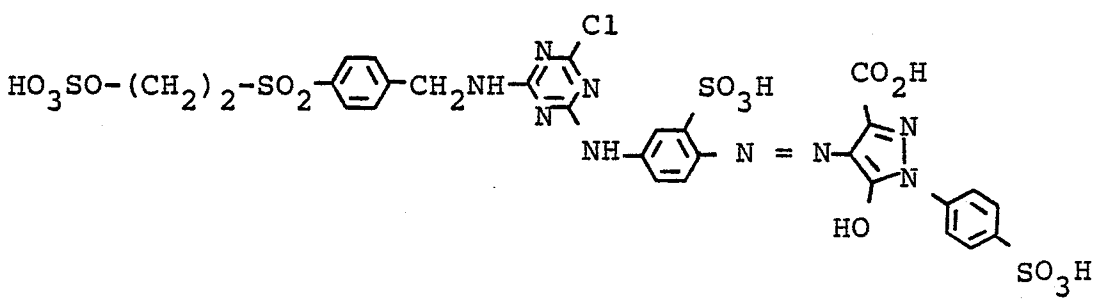

Beispiel 48

30,3 Teile 2-Aminonaphthalin-4,8-disulfonsäure werden salzsauer diazotiert und auf 15 Teile 3-Acetylaminoanilin gekuppelt. Nach Acylierung mit 19 Teilen fein dispergierten Cyanurchlorids wird bei 40 °C pH 7 - 8, mit 35 Teilen 4-(ß-Sulfatoethylsulfonyl)-benzylamin umgesetzt und mit Kaliumchlorid ausgesalzen. Der nach schonender Trocknung erhaltene Farbstoff färbt Baumwolle in echten rotstichig gelben Tönen an und entspricht der Formel

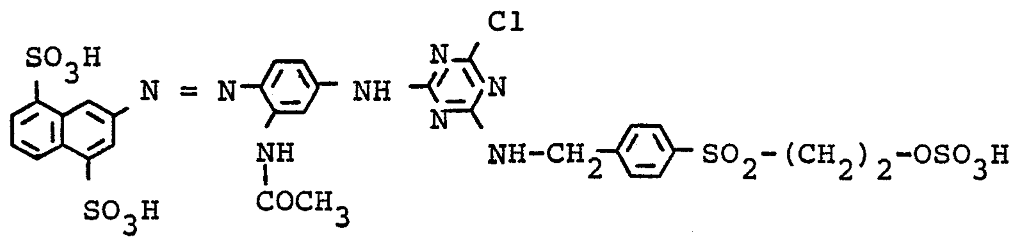

Weitere erfindungsgemäße Farbstoffe sind in Tabelle 4 aufgeführt, wobei in Spalte I die anstelle von 2-Aminonaphthalin-4,8-disulfosäure verwendete Diazokomponente, in Spalte II die statt 3-Acetylaminoanilin verwendete Kupplungskomponente, in Spalte III die verwendete Ankerkombination und in Spalte IV der auf Baumwolle erzielte Farbton angegeben ist.

Tabelle 4

| Bsp. | I | II | III | IV |
|---|---|---|---|---|
| 49 | 2-Aminonaphthalin-6,8-disulfosäure | 3-Acetylaminoanilin | $B^1$ | goldgelb |
| 50 | " | 3-Pivaloylamino-anilin | $B^1$ | " |
| 51 | 2-Aminonaphthalin-3,6,8-trisulfo-säure | 3-Aminophenylharn-stoff | $B^1$ | " |
| 52 | " | " | $B^3$ | " |
| 53 | " | " | $B^5$ | " |
| 54 | " | " | $B^2$ | " |
| 55 | " | N-Phenyl-N'-(3-Aminophenyl)-harn-stoff | $B^1$ | " |
| 56 | " | N-(3-Aminophenyl)-N'-methyl-harnstoff | $B^1$ | " |
| 57 | 2-Aminonaphthalin-4,8-disulfosäure | N-Cyclohexyl-N'-(3-Aminophenyl)-harn-stoff | $B^1$ | " |
| 58 | " | " | $B^5$ | " |
| 59 | " | 3-Methylsulfonyl-aminoanilin | $B^1$ | " |
| 60 | 2-Aminonaphthalin-1,6-disulfosäure | 3-Aminophenylharn-stoff | $B^1$ | " |
| 61 | " | N-(3-Aminophenyl)-N'-methyl-harnstoff | $B^1$ | " |
| 61a | 2-Aminophthalin-3,6,8-trisulfosäure | 3-Aminophenylharnstoff | $B^7$ | goldgelb |
| 61b | " | N-Phenyl-N'-(3-Amino-phenyl)-harnstoff | $B^7$ | " |
| 61c | " | " | $B^8$ | " |

Beispiel 62

47 Teile der bekannten Aminodisazoverbindung der Formel

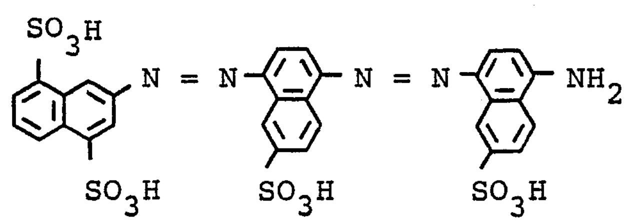

werden in 300 Volumenteilen Wasser bei pH 6,5 gelöst und bei 0 - 5 °C mit 10 Teilen Cyanurchlorid umgesetzt. Das entstandene Produkt wird anschließend mit 20 Teilen 4-(ß-Sulfatoethylsulfonyl)-benzylamin bei pH 7 - 7,5 und 35 - 40 °C zur Reaktion gebracht. Nach der Fällung mit 80 Teilen Kaliumchlorid erhält man den Farbstoff der Formel

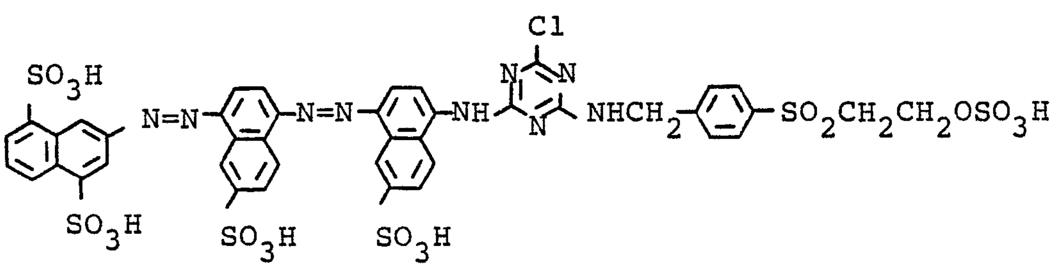

der Baumwolle in echten rötlich-braunen Tönen färbt.

Werden anstelle von 20 Teilen 4-(ß-Sulfatoethylsulfonyl-)-benzylamin 23 Teile 4-(ß-Thiosulfatoethyl(sulfonyl)-benzylamin verwendet, erhält man einen ähnlich guten Farbstoff.

In gleicher Weise wurden die folgenden Aminodisazofarbstoffe zu braunen Reaktivfarbstoffen umgesetzt.

Tabelle 5

| Bsp. | Aminodisazofarbstoff | Farbton auf BW |
|---|---|---|
| 63 | 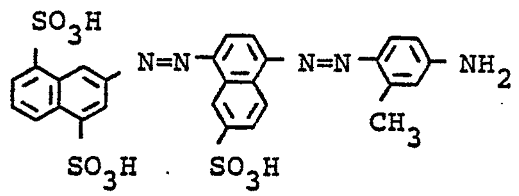 | braun |
| 64 | 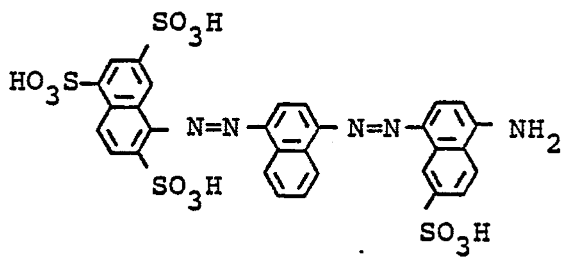 | rotbraun |
| 65 | 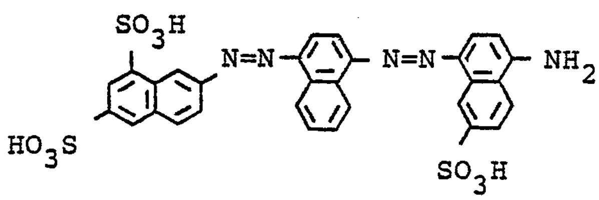 | " |
| 66 | 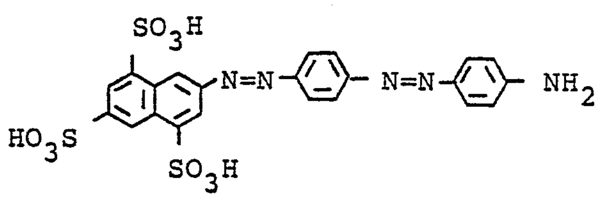 | orangebraun |
| 67 | 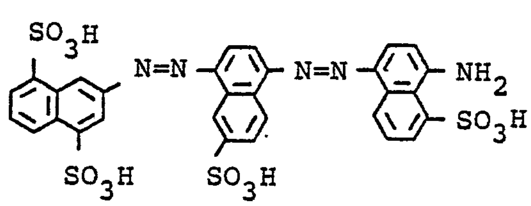 | rotbraun |

0133270

Beispiel 68

Das Kondensationsprodukt von Metaminsäure und Cyanurchlorid wird in bekannter Weise diazotiert bei pH 7 - 7,5 auf die Kupplungskomponente der Formel

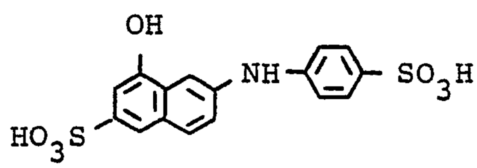

gekuppelt. Anschließend wird bei pH 6 - 7 mit 4-(ß-Sulfatoethylsulfonyl)-benzylamin umgesetzt und der gebildete Farbstoff mit Kaliumchlorid ausgefällt. Man erhält einen Farbstoff der Formel

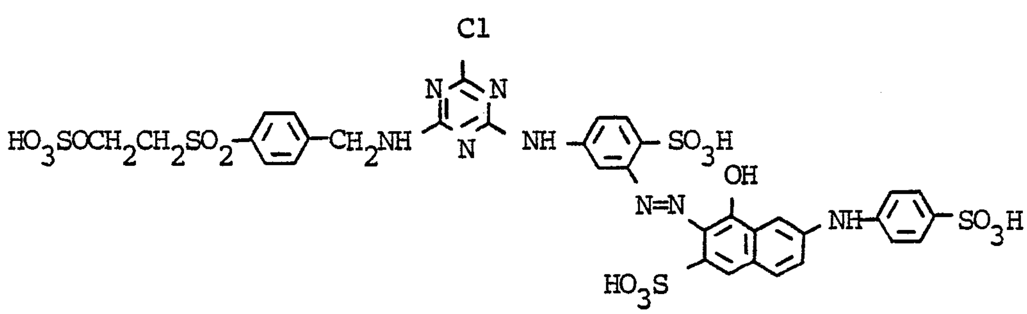

der Baumwolle in echten Brauntönen färbt.

Beispiel 69

95 Teile Cyanurchlorid werden in bekannter Weise mit 1-Amino-8-hydroxynaphthalin-3,6-disulfonsäure in Wasser umgesetzt. Zu diesem Produkt wird eine frisch diazotierte Lösung von 1-Aminobenzol-2-sulfonsäure gegeben und der pH-Wert auf 4 - 4,5 eingestellt. Nach beendeter Kupplung werden 150 Teile 4-(ß-Sulfatoethylsulfonyl)-benzylamin zugegeben und bei pH 7 - 7,5 und 35 °C zur Reaktion gebracht. Nach Aussalzen mit KCl erhält man 420 Teile des Farbstoffs der Formel

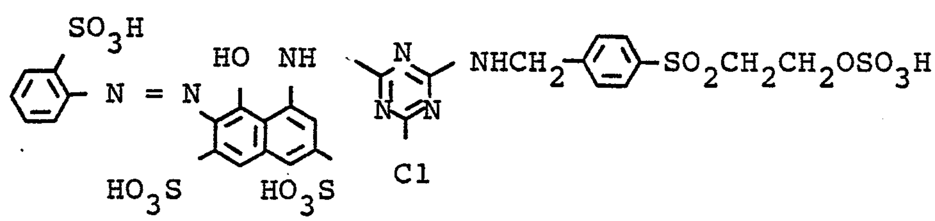

der Baumwolle in leuchtend roten, echten Tönen färbt.

In den folgenden Beispielen wurden ähnliche Farbstoffe auf gleiche Weise hergestellt, wobei unter I Diazokomponenten genannt sind, die anstelle von 1-Aminobenzol-2-sulfonsäure verwendet wurden, unter II sind die Kupplungskomponenten aufgelistet, die anstelle von 1-Amino-8-hydroxynaphthalin-3,6-disulfonsäure eingesetzt wurden und unter III sind die verwendeten Ankerkombination zusammengestellt.

Tabelle 6

| Bsp. | I | II | III | Farbton auf BW |
|---|---|---|---|---|
| 70 | Anilin | 1-Amino-8-hydroxy-naphthalin-3,6-disulfonsäure | $B^1$ | rot |
| 71 | " | " | $B^5$ | " |
| 72 | " | " | $B^2$ | " |
| 73 | o-Chloranilin | " | $B^1$ | " |
| 74 | m-Toluidin | " | $B^1$ | " |
| 75 | 1-Amino-4-methoxy-benzol-2-sulfonsäure | " | $B^1$ | blaustichig rot |
| 76 | 1-Amino-4-phenoxy-benzol-2-sulfonsäure | " | $B^1$ | " |
| 77 | 4-Ethoxyanilin | " | $B^1$ | " |
| 78 | p-Anisidin | " | $B^1$ | " |
| 79 | 1-Amino-4-methyl-benzol-2-sulfonsäure | " | $B^1$ | " |
| 80 | Anilin-4-sulfonsäure | " | $B^1$ | rot |
| 81 | Anilin-3-sulfonsäure | " | $B^1$ | " |
| 82 | 2-Naphthylamin-1,5-disulfonsäure | " | $B^1$ | " |
| 83 | 2-Naphthylamin-4,8-disulfonsäure | " | $B^1$ | " |
| 84 | 1-Naphthylamin-4-sulfonsäure | " | $B^1$ | " |
| 85 | 1-Naphthylamin-6-sulfonsäure | " | $B^1$ | " |
| 86 | 2-Naphthylamin-1-sulfonsäure | " | $B^1$ | " |

| Bsp. | I | II | III | Farbton auf BW |
|---|---|---|---|---|
| 87 | 2-Naphthylamin-5-sulfonsäure | 1-Amino-8-hydroxy-naphthalin-3,6-disulfonsäure | $B^5$ | rot |
| 88 | 2-Naphthylamin-6-sulfonsäure | " | $B^1$ | " |
| 89 | Anilin | 1-Amino-8-hydroxy-naphthalin-4,6-disulfonsäure | $B^1$ | scharlach |
| 90 | Anilin-2-sulfonsäure | " | $B^1$ | " |
| 91 | " | 1-Amino-8-hydroxy-naphthalin-4-sulfonsäure | $B^1$ | " |
| 92 | " | " | $B^5$ | " |
| 93 | " | 2-Amino-8-hydroxy-naphthalin-6-sulfonsäure | $B^1$ | rot |
| 94 | Anilin | 1-Amino-8-hydroxy-naphthalin-2,4-disulfonsäure | $B^1$ | " |
| 95 | Anilin-4-sulfonsäure | 2-Amino-5-hydroxy-naphthalin-7-sulfonsäure | $B^1$ | orange |
| 96 | 2-Aminonaphthalin-1,5-disulfonsäure | 2-Amino-5-hydroxy-naphthalin-7-sulfonsäure | $B^1$ | " |
| 97 | " | 2-Methylamino-5-hydroxy-naphthalin-7-sulfonsäure | $B^1$ | " |
| 98 | " | " | $B^5$ | " |
| 98a | " | 1-Amino-8-hydroxy-naphthalin-3,6-disulfonsäure | $B^7$ | rot |
| 98b | " | " | $B^8$ | " |

Beispiel 99

Eine Suspension des nach üblicher Methode hergestellten Aminoazofarbstoffs der Formel

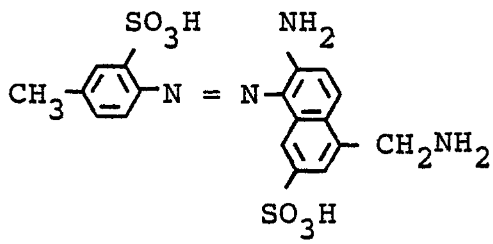

werden in Wasser bei pH 2 - 3 und 0 - 5 °C mit 1 Äquivalent Cyanurchlorid in der üblichen Art umgesetzt. Anschließend wird bei pH 6 - 7 1 Chlor des Triazinylrestes ausgetauscht gegen 4-(ß-Sulfatoethylsulfonyl)-benzylamin.

Der gebildete Farbstoff der Formel

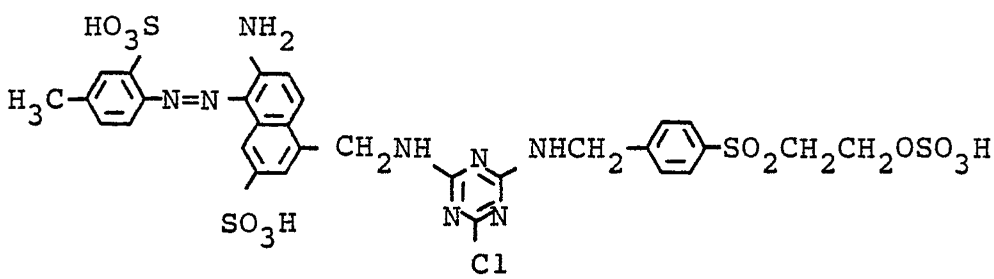

wird durch Zusatz von Kaliumchlorid ausgefällt, abgesaugt und getrocknet. Er färbt Baumwolle in echten Rottönen.

Beispiel 100

Das Kondensationsprodukt von 1,3-Diaminobenzol-6-sulfonsäure mit Cyanurchlorid wird auf übliche Weise diazotiert und auf 1-Acetylamino-8-hydroxy-3,6-disulfonsäure gekuppelt. Nach Austausch eines Chlors gegen den 4-(ß-Sulfatoethylsulfonyl)-benzylaminrest wie in Beispiel 1 beschrieben, erhält man einen Farbstoff der Formel

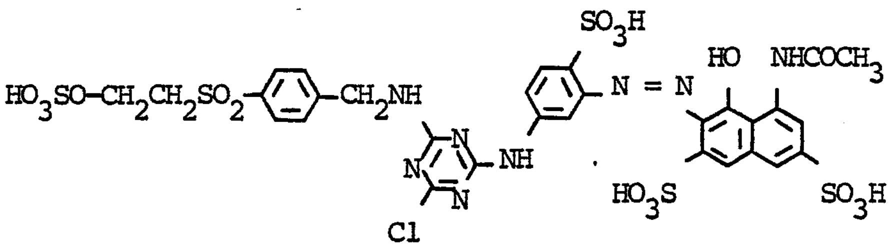

der BW in brillanten echten Rottönen färbt.

Weitere Farbstoffe, die den Reaktivrest B an der Diazokomponente tragen sind im folgenden zusammengestellt.

Unter I sind Diaminoverbindungen zusammengestellt, die anstelle von 1,3-Diaminobenzol-6-sulfonsäure eingesetzt werden können, unter II sind die verwendeten Kupplungskomponenten und unter III die eingesetzten Reaktivankerkombinationen aufgelistet.

Tabelle 7

| Bsp. | I | II | III | Farbton auf BW |
|---|---|---|---|---|
| 101 | 1,3-Diaminobenzol-6-sulfonsäure | 1-Benzoylamino-8-hydroxy-3,6-disulfonsäure | $B^1$ | rot |
| 102 | " | 1-Benzoylamino-8-hydroxy-4,6-disulfonsäure | $B^1$ | " |
| 103 | " | N-(8-Hydroxynaphthalin-3,6-disulfonsäure)-N'-Cyclohexylharnstoff | $B^1$ | " |
| 104 | " | 1-Hydroxynaphthalin-4,8-disulfonsäure | $B^1$ | " |
| 105 | " | 1-Hydroxynaphthalin-4-sulfonsäure | $B^1$ | " |
| 106 | " | " | $B^5$ | " |
| 107 | 1,4-Diaminobenzol-6-sulfonsäure | 1-Acetylamino-8-hydroxynaphthalin-3,6-disulfonsäure | $B^1$ | " |
| 108 | 2-Amino-5-aminomethylennaphthalin-1-sulfonsäure | " | $B^1$ | " |
| 109 | " | " | $B^5$ | " |
| 110 | " | 1-Benzoylamino-8-hydroxynaphthalin-3,6-disulfonsäure | $B^3$ | " |
| 111 | " | 1-Benzoylamino-8-hydroxynaphthalin-4,6-disulfonsäure | $B^1$ | " |
| 112 | 1,3-Diamino-2-methylbenzol-5-sulfonsäure | " | $B^1$ | " |
| 113 | 3-Amino-N-methylbenzylamin-4-sulfonsäure | " | $B^1$ | " |
| 113a | 1,3-Diaminobenzol-4-sulfonsäure | 1-Benzoylamino-8-hydroxynaphthalin-3,6-disulfonsäure | $B^7$ | " |
| 113b | 2-Amino-5-aminomethylennaphthalin-1-sulfonsäure | " | $B^7$ | " |

Bei den Beispielen 108 - 111 sowie 113 erfolgt in Abwandlung der in Beispiel 100 angegebenen Vorschrift zuerst die Diazotierung und Kupplung der Komponente I und anschließend die Umsetzung mit Cyanurchlorid und Benzylaminderivat.

Beispiel 114

19,5 Teile 1-Amino-8-hydroxynaphthalin-3,6-disulfonsäure werden in der üblichen Weise mit Cyanurchlorid kondensiert. Zu der entstandenen Verbindung gibt man eine wässrige Suspension der Verbindung der Formel

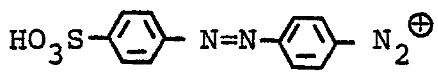

die auf bekanntem Wege hergestellt wurde. Nach Beendigung der Kupplung bei pH 3 - 4 wird wie in Beispiel 1 beschrieben mit 4-(ß-Sulfatoethylsulfonyl)-benzylamin umgesetzt und der Farbstoff mit Kaliumchlorid gefällt. Mit dem Farbstoff der Formel

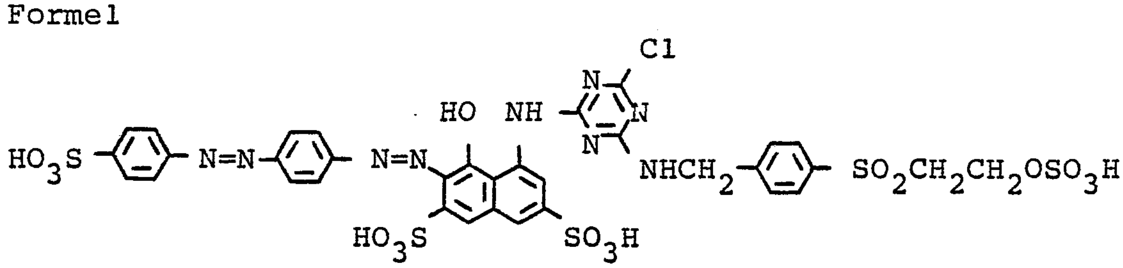

erhält man auf Baumwolle sehr echte rotviolette Färbungen.

Beispiel 115

26 Teile des bekannten Farbstoffs der Formel

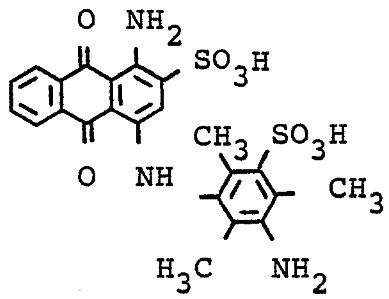

werden bei 0 - 5 °C und pH 2 - 3 in Wasser mit 10 Teilen Cyanurchlorid umgesetzt und anschließend mit 20 g 4-(ß-Sulfatoäthylsulfonyl)-benzylamin zur Reaktion gebracht (Temp. 30 - 35 °C; pH 6,5 - 7,5). Der gebildete Farbstoff der Formel

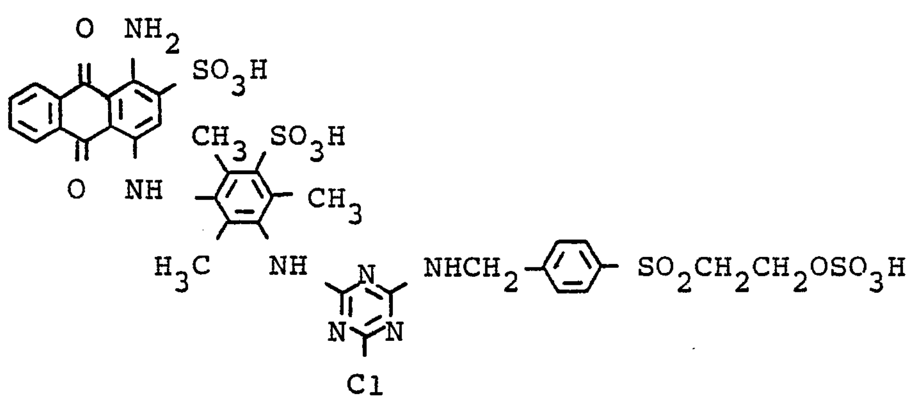

läßt sich durch Aussalzen mit Kaliumchlorid gewinnen und färbt Baumwolle vor allem im Druckverfahren in leuchtend blauen, sehr lichtechten Tönen.

Die Farbstoffe mit den Resten $SO_2CH{=}CH_2$ (Beispiel 115a) und $SO_2CH_2CH_2SSO_3H$ (Beispiel 115b) haben sehr ähnliche Eigenschaften.

In analoger Weise wurden die folgenden Reaktivfarbstoffe hergestellt, wobei unter I die Ausgangsaminoanthrachinonfarbstoffe und unter II die Ankerkombination aufgeführt ist.

| Bsp. | I | II | Farbton auf BW |
|---|---|---|---|
| 116 | 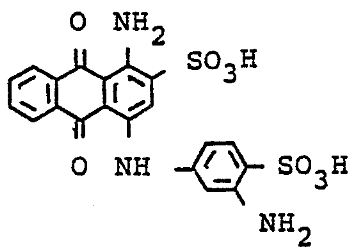 | $B^1$ | grünstichiges Blau |
| 117 | " | $B^2$ | " |
| 118 | " | $B^5$ | " |
| 119 | " | $B^3$ | " |
| 120 | 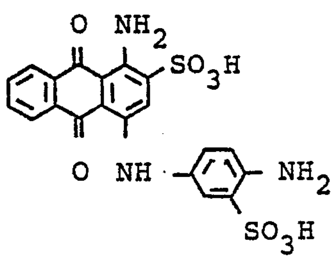 | $B^1$ | " |
| 121 | " | $B^5$ | " |
| 122 | 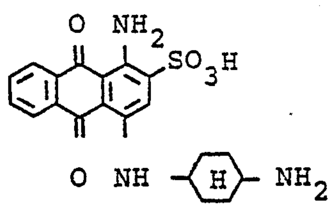 | $B^1$ | " |
| 123 | " | $B^5$ | " |

| Bsp. | I | II | Farbton auf BW |
|---|---|---|---|
| 124 | 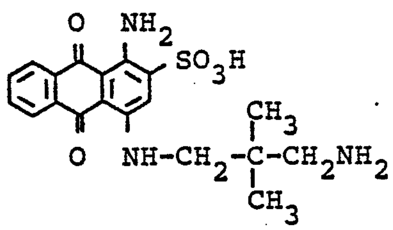 | $B^1$ | blau |
| 125 | 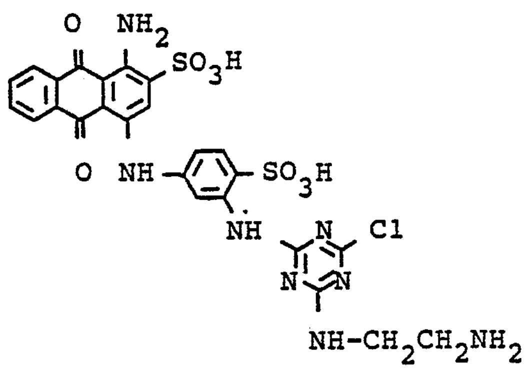 | $B^1$ | " |
| 126 | 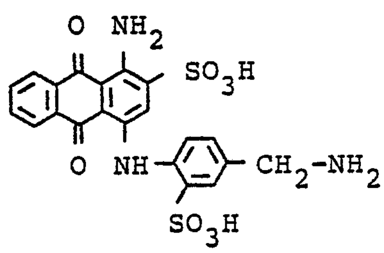 | $B^1$ | " |
| 127 | 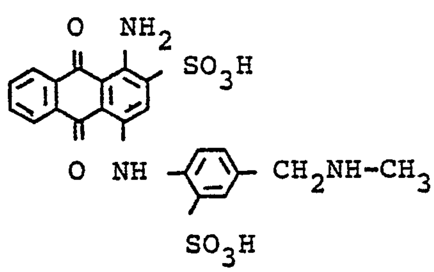 | $B^1$ | " |

Beispiel 128

64,8 Teile des bekannten Farbstoffs der Formel

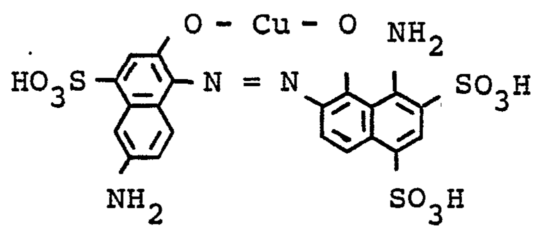

werden in 700 Teilen Wasser angerührt mit 19 Teilen Cyanurchlorid bei 0 - 5 °C/pH 2 - 3 umgesetzt und schließlich mit 4-(ß-Sulfatoethylsulfonyl)-benzylamin bei pH 6 - 7/30 °C zur Reaktion gebracht. Der Farbstoff wird durch Sprühtrocknung der Lösung gewonnen. Man erhält 90 Teile des Farbstoffs der Formel

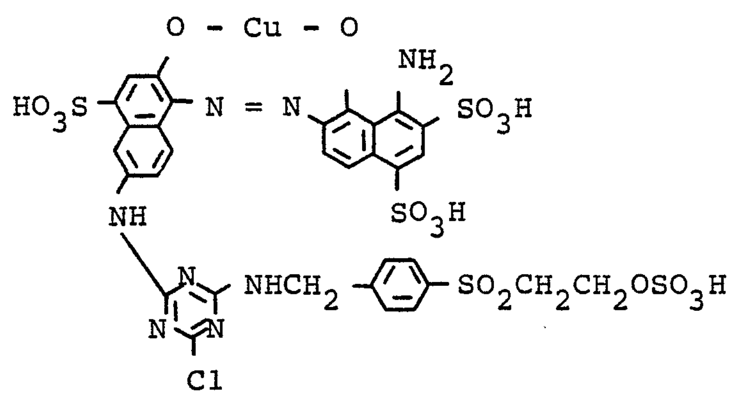

In analoger Weise und nach an sich bekannten Methoden wurden die neuen Farbstoffe der allgemeinen Formel

Chromophor - B

synthetisiert und in der folgenden Tabelle zusammengefaßt.

Tabelle 9

| Bsp. | Chromophor | B | Farbe |
|---|---|---|---|
| 129 | 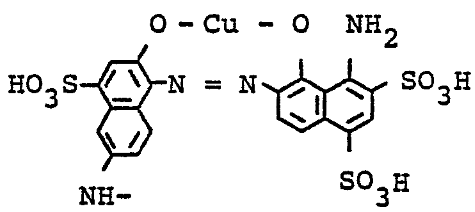 | $B^1$ | blau |
| 130 | " | $B^5$ | " |
| 131 | " | $B^3$ | " |
| 132 | 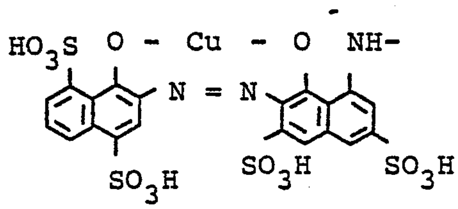 | $B^1$ | " |
| 133 | " | $B^3$ | " |
| 134 | " | $B^5$ | " |
| 135 | 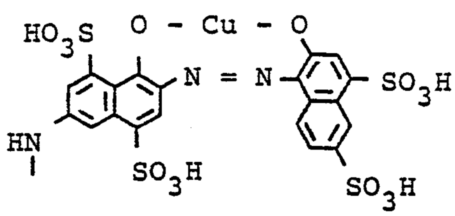 | $B^1$ | " |
| 136 | " | $B^5$ | " |

| Bsp. | Chromophor | B | Farbe |
|---|---|---|---|
| 137 | 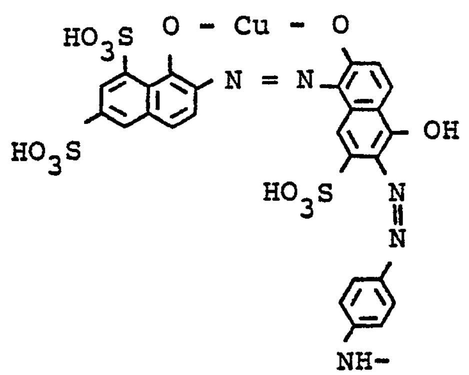 | $B^1$ | marineblau |
| 138 | 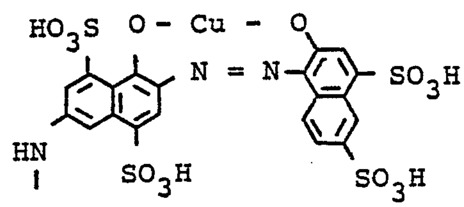 | $B^1$ | blau |
| 139 | 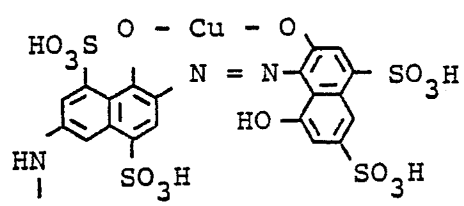 | $B^5$ | " |
| 140 | 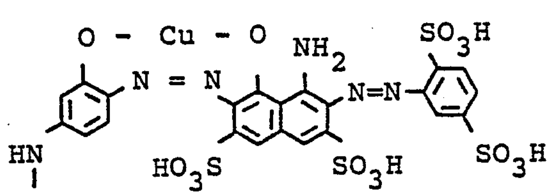 | $B^1$ | marineblau |

| Bsp. | Chromophor | B | Farbton |
|---|---|---|---|
| 141 | 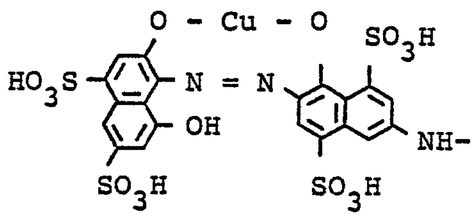 | $B^1$ | marineblau |
| 142 | 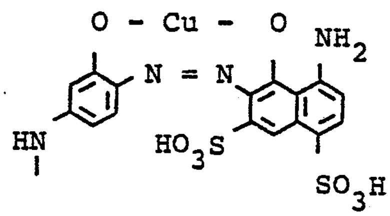 | $B^1$ | blau |
| 143 | 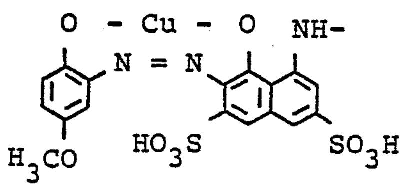 | $B^1$ | marineblau |
| 144 | 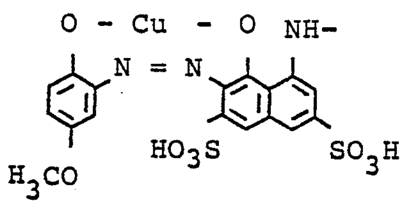 | $B^1$ | " |
| 145 | 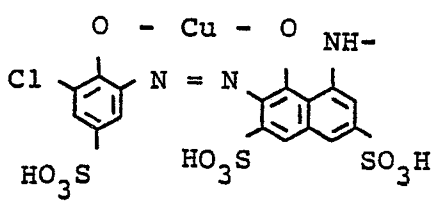 | $B^2$ | violett |

| Bsp. | Chromophor | B | Farbton |
|---|---|---|---|
| 146 | 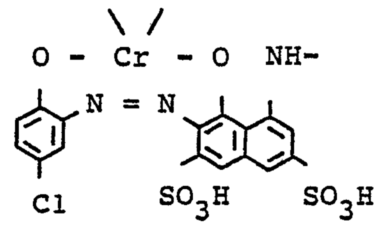 1:2-Komplex | $B^1$ | marineblau |
| 147 | 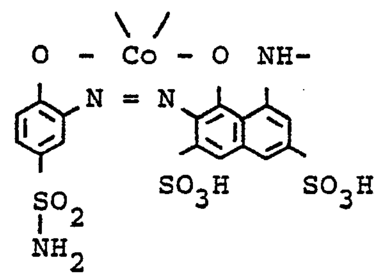 1:2-Komplex | $B^1$ | " |
| 148 | 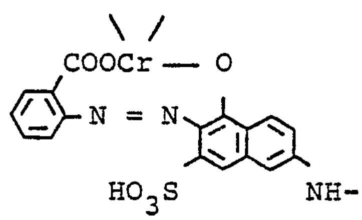 1:2-Komplex | $B^1$ | braun |
| 149 | 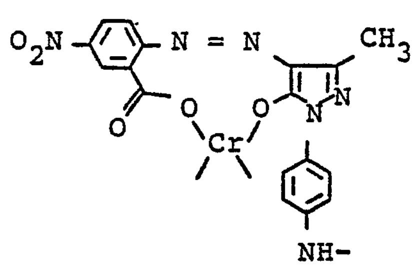 1:2-Komplex | $B^1$ | " |

| Bsp. | Chromophor | B | Farbton |
|---|---|---|---|
| 150 | 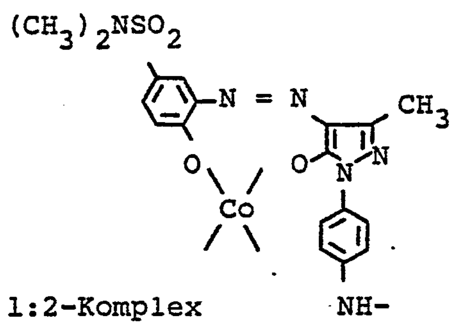 1:2-Komplex | $B^1$ | braun |
| 151 | 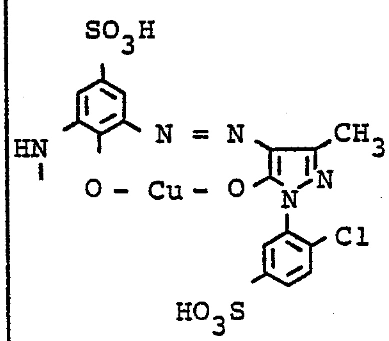 | $B^1$ | " |
| 152 | 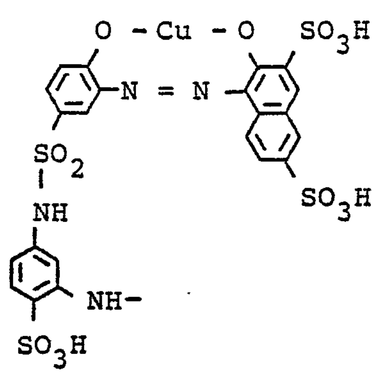 | $B^2$ | rot |
| 153 | 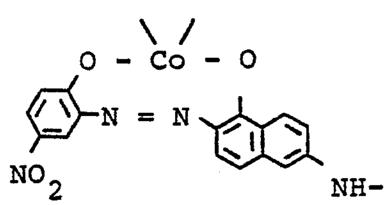 1:2-Komplex | $B^1$ | rubinrot |

| Bsp. | Chromphor | B | Farbton |
|---|---|---|---|
| 154 | 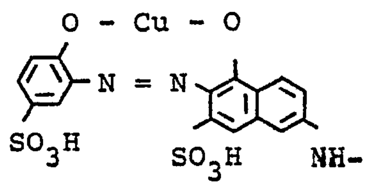 | $B^1$ | rot |
| 155 | 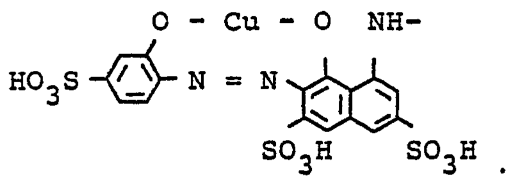 | $B^5$ | violett |
| 156 | 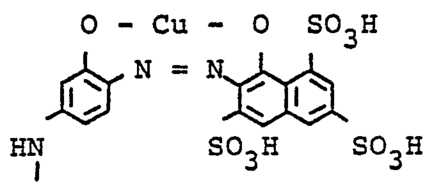 | $B^6$ | " |
| 157 | 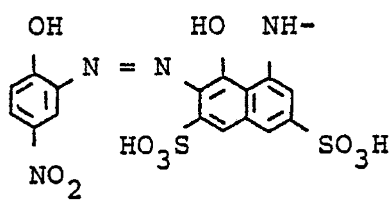 Mischung der Co- und Cr-1:2-Komplexe | $B^1$ | schwarz |
| 158 | 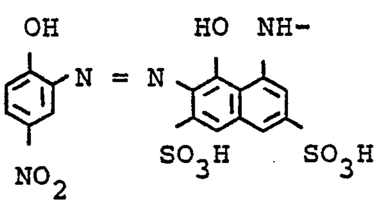 Mischung der Co- und Cr-1:2-Komplexe | $B^1$ | " |

| Bsp. | Chromophor | B | Farbton |
|---|---|---|---|
| 159 | 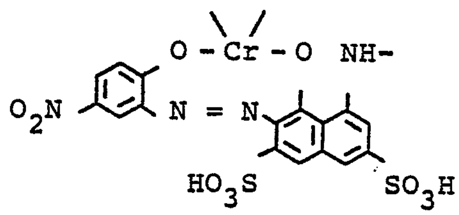 1:2-Komplex | $B^1$ | grau |
| 160 | 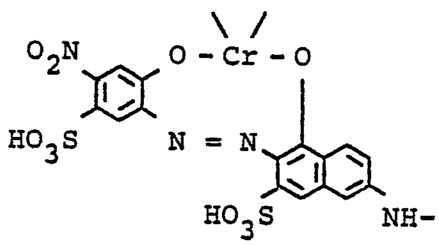 1:2-Komplex | $B^1$ | schwarzgrau |
| 161 | 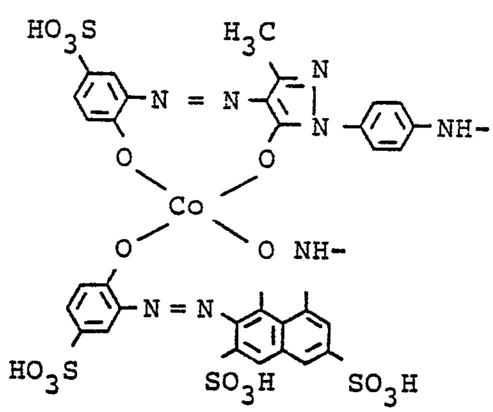 | $B^1$ | braun |

| Bsp. | Chromophor | B | Farbton |
|---|---|---|---|
| 162 | 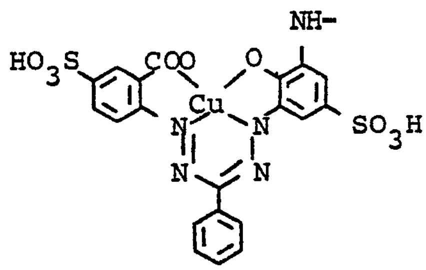 | $B^1$ | blau |
| 163 | " | $B^5$ | " |
| 164 | " | $B^6$ | " |
| 165 | 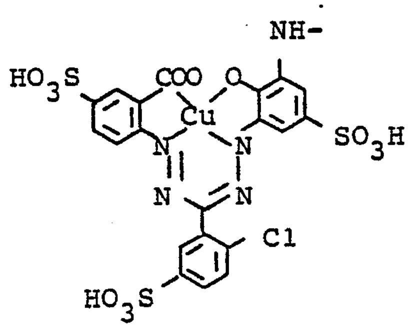 | $B^1$ | " |
| 166 | 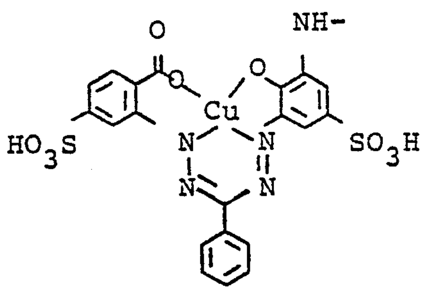 | $B^1$ | " |
| 167 | 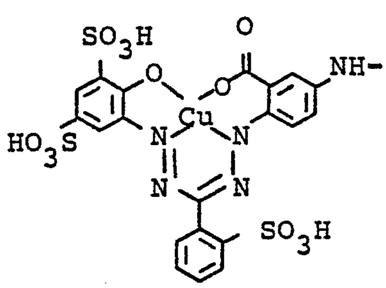 | $B^1$ | " |

Beispiel 168

15,8 Teile der Verbindung der Formel

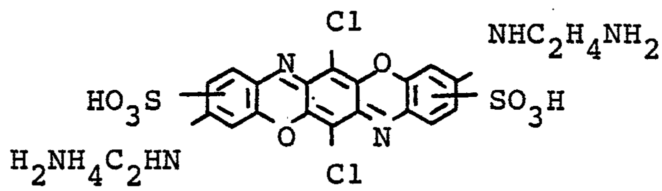

werden mit 1500 Teilen Wasser auf 45 °C erwärmt, wobei mit Natronlauge pH 9 eingestellt wird. Dann kühlt man auf 0 - 5 °C ab und gibt, nachdem man den pH-Wert mit Salzsäure auf 7 herabgesetzt hat, eine feine Suspension von 9,7 Teilen Cyanurchlorid in 100 Teilen Eiswasser zu. Man rührt bei 0 - 5 °C und hält mit Soda den pH-Wert zwischen 6,5 und 7, bis die Umsetzung beendet ist, was etwa 1 1/2 Stunden in Anspruch nimmt. Innerhalb von 10 Minuten läßt man nun eine neutrale Lösung von 15 Teilen 4-(ß-Sulfatoethylsulfonyl)-benzylamin in 200 Teilen Wasser zutropfen. Man erhöht die Temperatur auf 35 - 40 °C und rührt unter Aufrechterhaltung von pH 6,5 - 7, bis die Umsetzung beendet ist. Nun wird auf 20 °C abgekühlt, mit 400 Teilen Kaliumchlorid ausgesalzen, der ausgefallene Farbstoff abgesaugt und getrocknet. Er färbt Cellulosefasern in rotstichig-blauen Tönen mit guten Echtheitseigenschaften an und enspricht der Formel

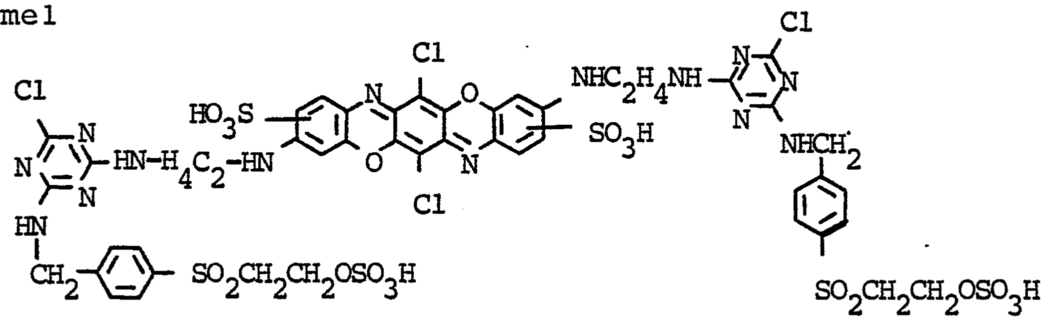

Beispiel 169

23 Teile der Verbindung der ungefähren Formel

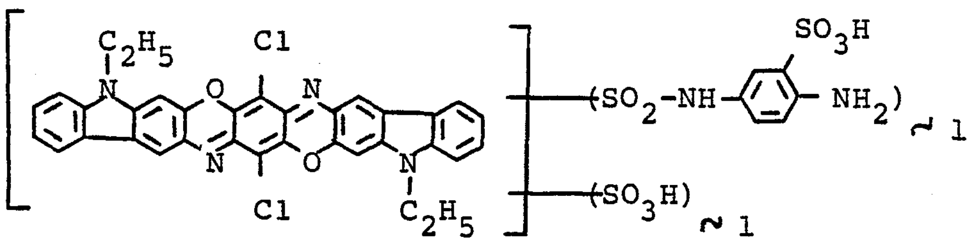

werden in 400 Teilen Wasser gelöst. Die Lösung läßt man bei 0 - 5 °C zu einer feinen Suspension von 4,8 Teilen Cyanurchlorid in 50 Teilen Eiswasser tropfen. Man rührt bei 0 - 5 °C, stellt mit Soda einen pH-Wert von 6 - 6,5 ein und hält dabei, bis die Umsetzung beendet ist. Dann gibt man eine neutrale Lösung von 8,1 Teilen 4-(ß-Sulfatoethylaminosulfonyl)-benzylamin in 200 Teilen Wasser zu und rührt bei 35 - 40 °C, wobei mit Soda ein pH-Wert von 6,5 - 7 aufrechterhalten wird. Wenn der pH-Wert ohne Sodazugabe etwa 1 Stunde konstant bleibt, wird mit Natriumchlorid ausgesalzen und getrocknet. Der erhaltene Farbstoff färbt Cellulosefasern in rotstichig-blauen Tönen und entspricht der ungefähren Formel

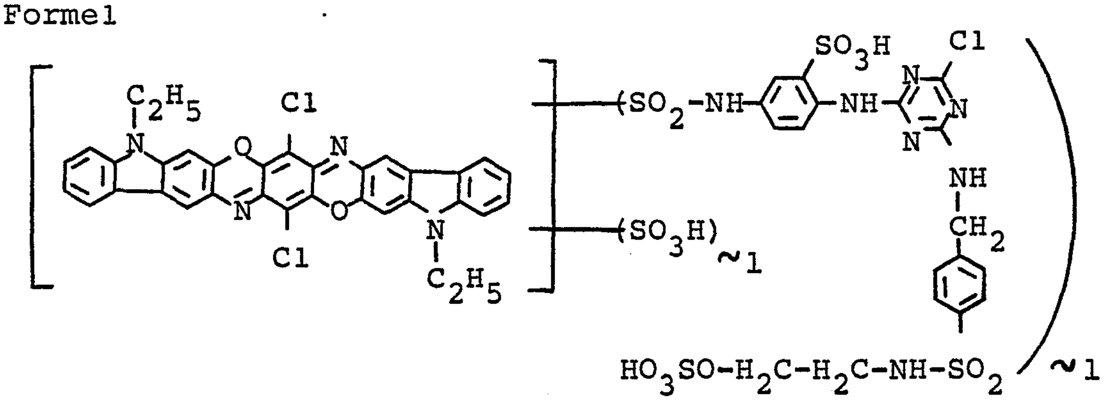

Die in der folgenden Tabelle aufgeführten Farbstoffe können analog hergestellt werden, der Rest

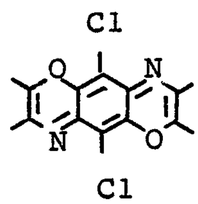

ist dabei mit

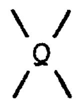

abgekürzt worden.

Tabelle 10

| Bsp. | Chromophor | B | Farbton |
|---|---|---|---|
| 170 | 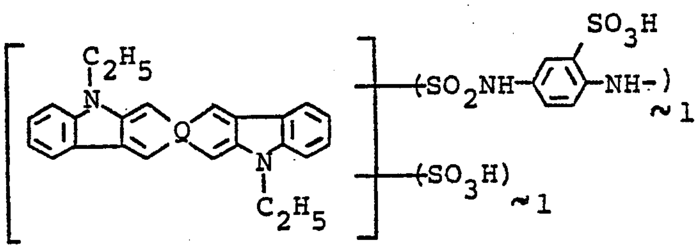 | $B^1$ | rotstichig blau |
| 171 | " | $B^2$ | " |
| 172 | 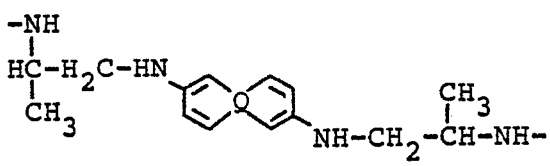 | $B^1$ | " |
| 173 | " | $B^2$ | " |
| 174 | " | $B^5$ | " |
| 175 | 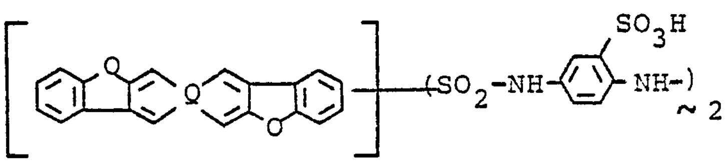 | $B^1$ | rot-violett |
| 176 | 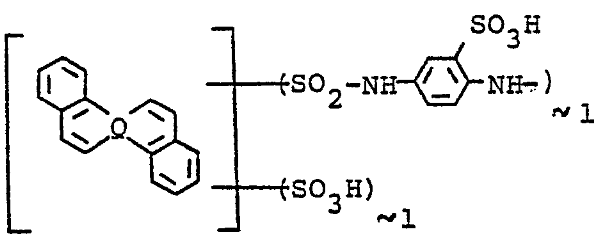 | $B^1$ | rot |

| Bsp. | Chromophor | B | Farbton |
|---|---|---|---|
| 177 | 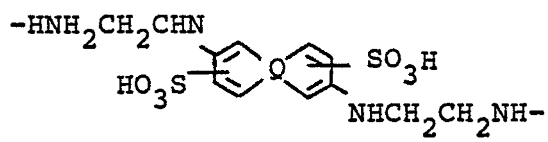 | $B^2$ | rotstichig blau |
| 178 | " | $B^5$ | " |
| 179 | 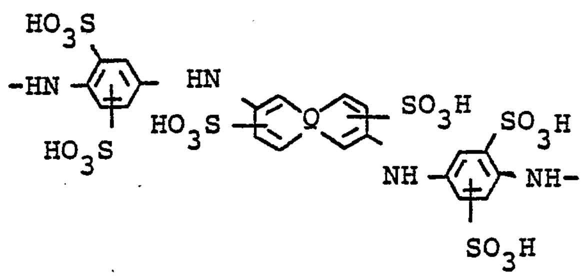 | $B^1$ | " |
| 180 | 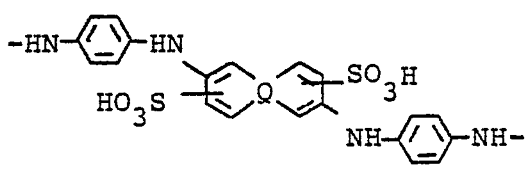 | $B^1$ | " |
| 181 | 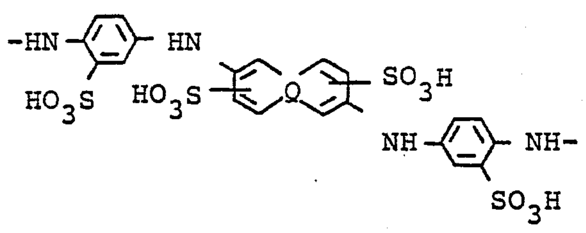 | $B^1$ | " |
| 182 | 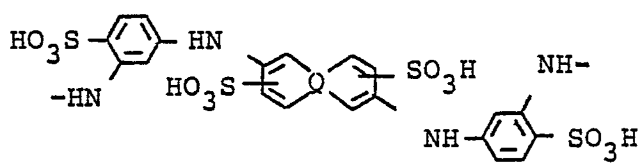 | $B^5$ | " |

| Bsp. | Chromophor | B | Farbton |
|---|---|---|---|
| 183 | 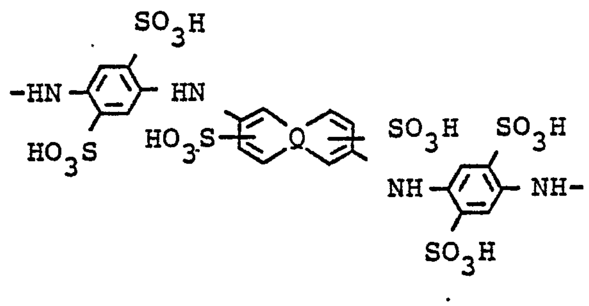 | $B^1$ | rotstichig blau |
| 184 | 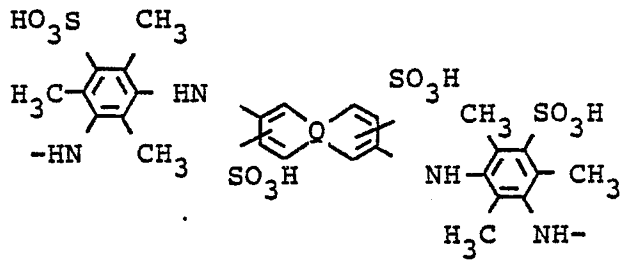 | $B^1$ | " |
| 185 | 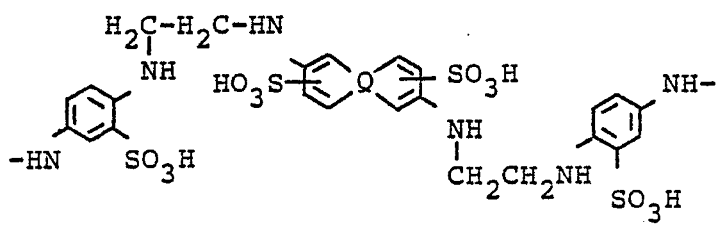 | $B^1$ | " |
| 186 | 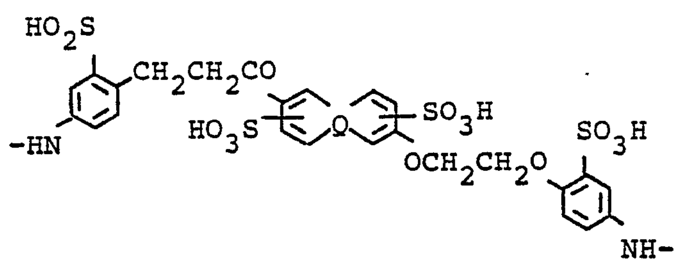 | $B^1$ | rot |
| 187 | 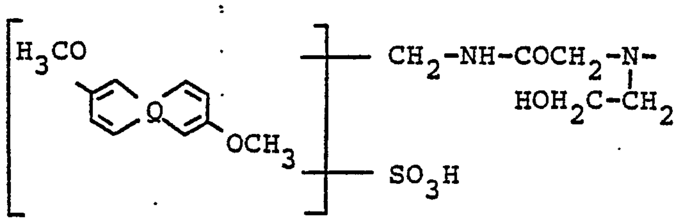 | $B^1$ | " |

| Bsp. | Chromophor | B | Farbton |
|---|---|---|---|
| 188 | 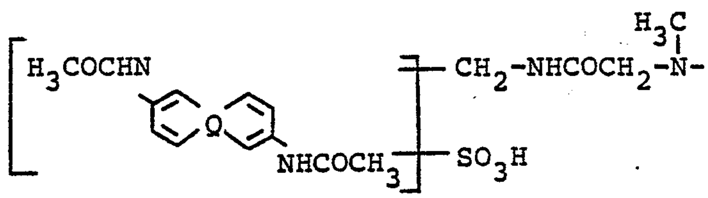 | $B^1$ | rot |
| 189 | 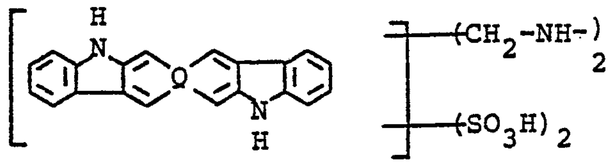 | $B^1$ | blau |
| 190 | 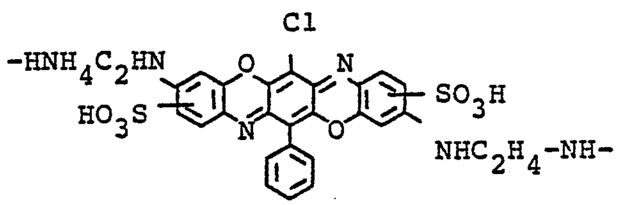 | $B^1$ | rotstichig blau |
| 191 | 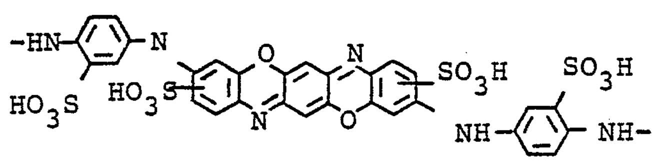 | $B^1$ | " |
| 192 | 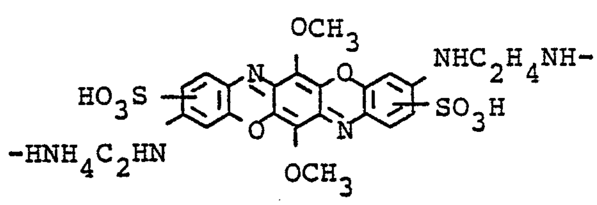 | $B^1$ | " |
| 193 | 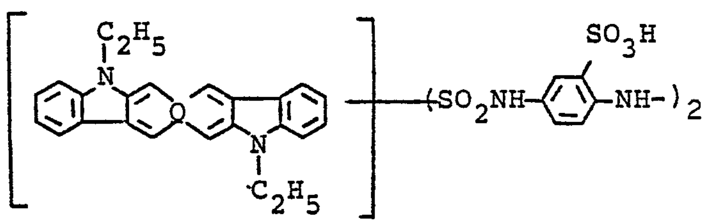 | $B^1$ | " |

| Bsp. | Chromophor | B | Farbton |
|---|---|---|---|
| 193a | 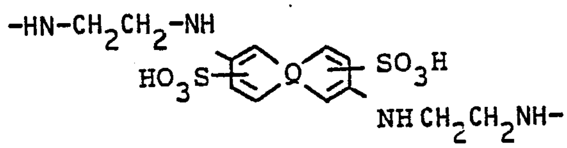 | $B^8$ | rotstichig blau |
| 193b | 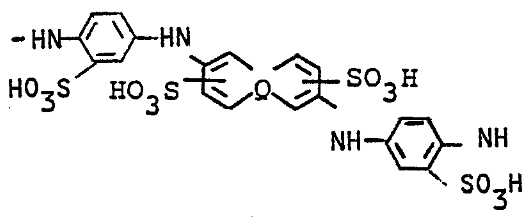 | $B^7$ | " |
| 193c | 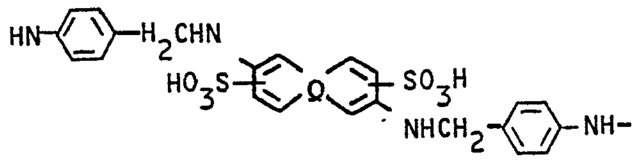 | $B^8$ | " |
| 193d | 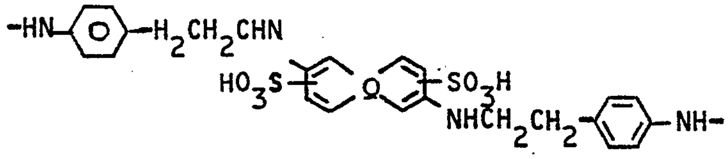 | $B^8$ | " |
| 193e | 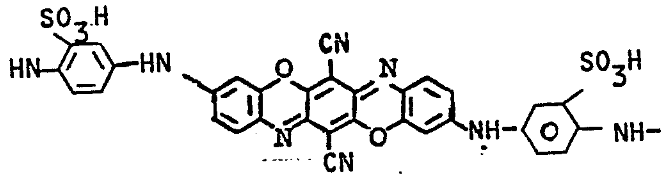 | $B^7$ | " |

Beispiel 194

19,7 Teile der Verbindung der Formel

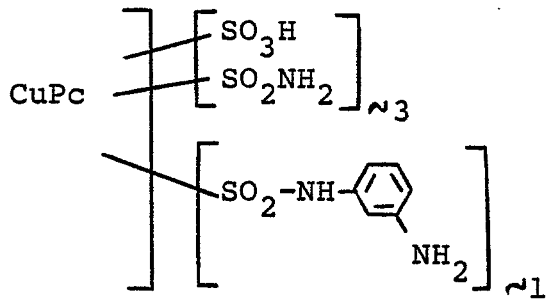

werden in einer Mischung aus 125 Teilen Eis und 125 Teilen Wasser homogen verrührt und mit Natronlauge auf pH 7 eingestellt. Bei einer Temperatur von 0 - 5 °C gibt man nun eine feine Suspension von 4,4 Teilen Cyanurchlorid in 50 Teilen Eiswasser zu, wobei der pH-Wert mit Soda bei 5,5 bis 6 gehalten wird. Sobald die Umsetzung vollständig ist, läßt man eine neutrale Lösung von 7,1 Teilen 4-(ß-Sulfatoethylsulfonyl)-benzylamin in 100 Teilen Wasser zutropfen. Man erhöht die Temperatur auf 35 - 40 °C und rührt unter Aufrechterhaltung von pH 6,5 - 7, bis die Umsetzung vollständig ist. Dann wird auf Raumtemperatur abgekühlt, der Farbstoff mit Natriumchlorid ausgesalzen, abgesaugt und getrocknet. Er hat die ungefähre Formel

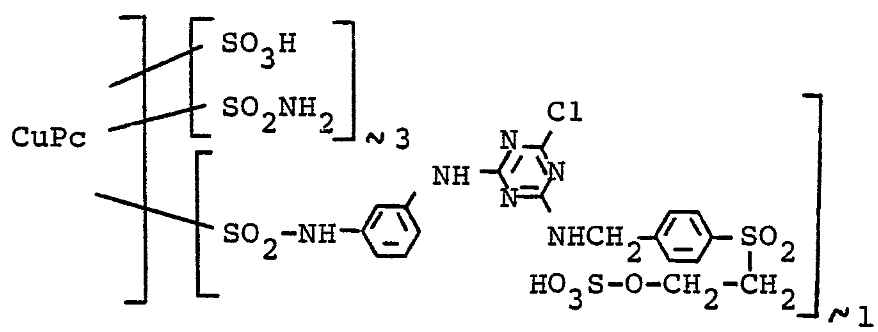

und färbt Cellulosematerial in türkisblauen Tönen von guten Echtheiten.

Beispiel 195

58 Teile der Verbindung der ungefähren Formel

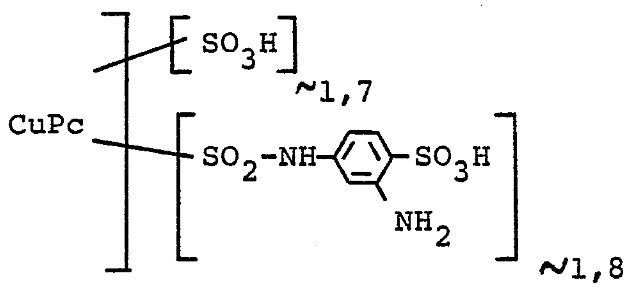

werden in einer Mischung aus 300 Teilen Wasser und 125 Teilen Eis homogen verrührt und mit Natronlauge auf pH 7 eingestellt. Bei 0 - 5 °C gibt man nun eine feine Suspension von 16,6 Teilen Cyanurchlorid in 170 Teilen Eiswasser zu, wobei der pH-Wert mit 10 %iger Natronlauge bei 5,3 - 5,5 gehalten wird. Sobald die Umsetzung vollständig ist, läßt man eine neutrale Lösung von 26,6 Teilen 4-(ß-Sulfatoethylsulfonyl)-benzylamin in 350 Teilen Wasser zutropfen. Man erwärmt alsdann auf 35 - 40 °C und hält 4 Stunden bei dieser Temperatur, wobei der pH-Wert mit Natriumhydrogencarbonat bei 6,5 - 7 gehalten wird. Anschließend wird abgekühlt, mit Natriumchlorid ausgesalzen, der Farbstoff abgesaugt und getrocknet. Er entspricht der ungefähren Formel

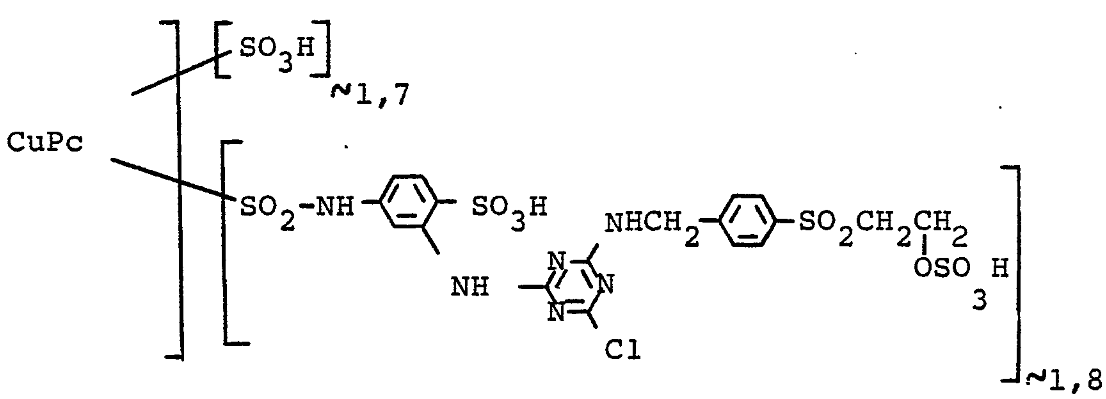

In analoger Weise lassen sich die in der folgenden Tabelle aufgeführten Farbstoffe herstellen. Sie entsprechen der allgemeinen Formel

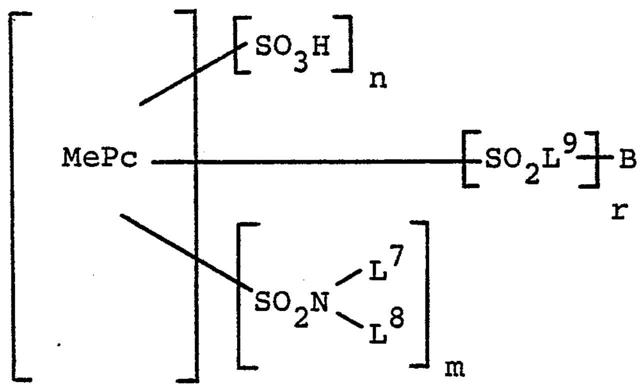

in der n und m Werte von 0 - 3 und r Werte von 1 - 4 bedeuten können.

Tabelle 11

| Bsp. | Me | $L^7$ | $L^8$ | $L^9$ | B | ungef.Werte n | m | r | Farbton |
|---|---|---|---|---|---|---|---|---|---|
| 196 | Cu | H | H | 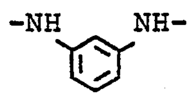 | $B^5$ | 2 | 1 | 1 | türkisblau |
| 197 | Cu | - | - | $-HNCH_2CH_2NH-$ | $B^1$ | 3 | 0 | 1 | " |
| 198 | Cu | - | - | 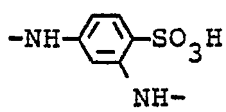 | $B^2$ | 1,7 | 0 | 1,8 | " |
| 199 | Cu | - | - | 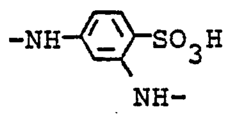 | $B^5$ | 3 | 0 | 1 | " |
| 200 | Cu | H | H | 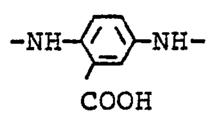 | $B^1$ | 2 | 1 | 1 | " |
| 201 | Cu | H | H | 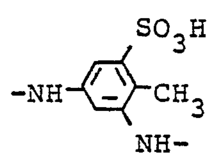 | $B^1$ | 1,6 | 1 | 1 | " |
| 202 | Cu | H | H | 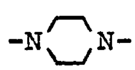 | $B^1$ | 2 | 1 | 1 | " |

| Bsp | Me | $L^7$ | $L^8$ | $L^9$ | B | ungef. Werte n | m | r | Farbton |
|---|---|---|---|---|---|---|---|---|---|
| 203 | Ni | - | - | 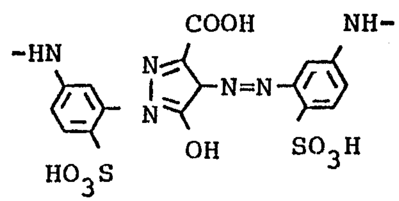 | $B^1$ | 3 | 0 | 1 | grün |
| 204 | Ni | - | - | 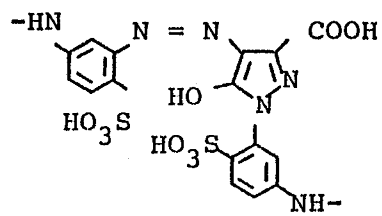 | $B^1$ | 2 | 0 | 1,5 | " |
| 205 | Cu 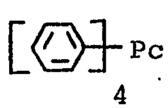 | | | $-NH-CH_2-CH_2-NH-$ | $B^1$ | 3-4 | 0 | 2-3 | " |

| Bsp. | Me | $L^7$ | $L^8$ | $L^9$ | B | ungef. Werte n | m | r | Farbton |
|---|---|---|---|---|---|---|---|---|---|
| 206 | Ni | - | - | 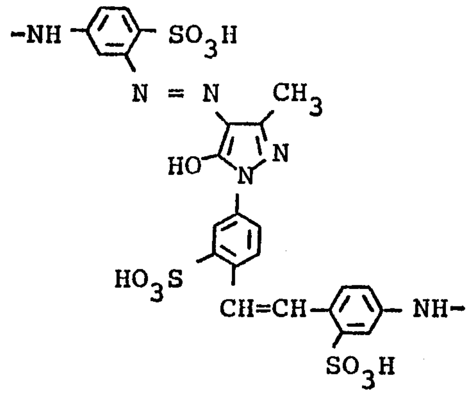 | $B^1$ | 3 | 0 | 1 | grün |
| 207 | Ni | - | - | 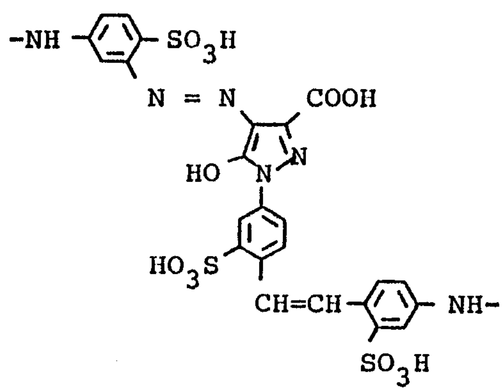 | $B^1$ | 2 | 0 | 1,5 | " |

| Bsp | Me | $L^7$ | $L^8$ | $L^9$ | B | ungef. Werte n | m | r | Farbton |
|---|---|---|---|---|---|---|---|---|---|
| 208 | Ni | H | H | 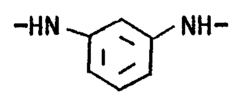 | $B^1$ | 2 | 1 | 1 | türkisblau |
| 209 | Ni | - | - | 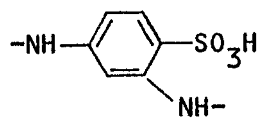 | $B^5$ | 1,7 | 0 | 1,8 | türkisgrün |
| 210 | Ni | - | - | $-HN-CH_2-CH_2-NH-$ | $B^2$ | 3 | 0 | 1 | " |
| 211 | Ni | H | H | 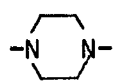 | $B^1$ | 2 | 1 | 1 | " |
| 212 | Ni | H | H | 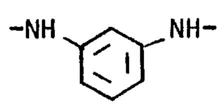 | $B^8$ | 2 | 1 | 1 | " |
| 213 | Ni | - | - | 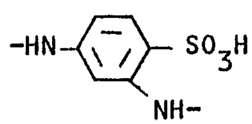 | $B^7$ | 1,7 | 0 | 1,8 | " |

| Bsp | Me | $L^7$ | $L^8$ | $L^9$ | B | ungef. Werte n | m | r | Farbton |
|---|---|---|---|---|---|---|---|---|---|
| 214 | Cu | H | H | 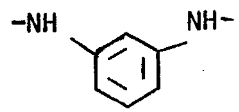 | $B^8$ | 2 | 1 | 1 | türkisblau |
| 215 | Cu | H | H | 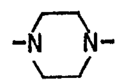 | $B^7$ | 2 | 1 | 1 | " |
| 216 | Ni | H | H | 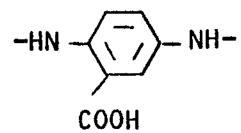 | $B^7$ | 2 | 1 | 1 | türkisgrün |

Beispiel 217

123 Teile 4-(ß-Hydroxyethylsulfonyl)-benzylaminhydrochlorid werden mit 62 Teilen konzentrierter Schwefelsäure vermengt und im Vakuum (10 Torr) 6 Stdn auf 140 °C erhitzt. Die entstandene Masse wird mit Methanol ausgerührt. Man erhält 98 Teile 4-(ß-Sulfatoethylsulfonyl)-benzylamin.

Beispiel 218

50 Teile 4-(ß-Hydroxyethylaminosulfonyl)-benzylaminhydrochlorid werden mit 28 Teilen konzentrierter Schwefelsäure gut verrührt und anschließend im Wasserstrahlvakuum 5 Stdn auf 150 °C erhitzt. Nach Abkühlen und Verrühren mit Methanol erhält man 46 Teile des Produkts der Formel

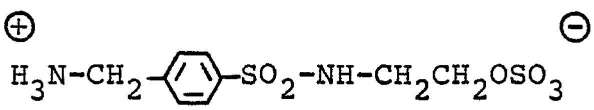

Beispiel 219

60 Teile 4-(ß-Hydroxyethylsulfonyl)-benzylaminhydrochlorid werden mit 30 Teilen Phosphorsäure sehr intensiv verrührt. Anschließend erhitzt man bei 15 Torr auf 150 - 160 °C und hält die Temperatur 5 Stdn lang. Nach Ausrühren mit Methanol erhält man ein Produkt der Formel

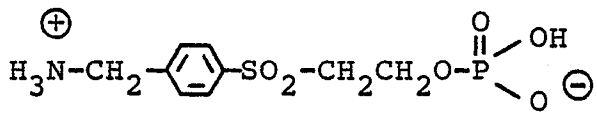

Beispiel 220

In 700 Teile Chlorsulfonsäure werden langsam unter Kühlung 270 Teile N-Formylbenzylamin eingetragen und über Nacht bei Raumtemperatur gerührt. Durch Fällen mit 5000 Teilen Eis erhält man das Sulfochlorid als feuchtes kristallines Produkt. Dieses wird in eine Mischung von 1500 Teilen Wasser, 252 Teilen Natriumsulfit und 10 Teilen Borax bei 35 - 40 °C eingetragen und 3 Stdn nachgerührt. Der pH-Wert wird durch Zugabe von Natronlauge auf 7,5 - 8,5 gehalten. Nun fügt man 252 Teile Chloräthanol zu und erwärmt 4 - 5 Stdn auf 75 - 85 °C. Der pH-Wert wird durch Zugabe von Natronlauge auf 8,5 - 9 gehalten. Die Reaktionsmischung wird anschließend scharf eingeengt, in Alkohol aufgenommen, mit halbkonzentrierter Salzsäure verkocht und abgesaugt. Man erhält 280 Teile 4-(ß-Hydroxyethylsulfonyl)-benzylaminhydrochlorid vom Schmelzpunkt 183 - 186 °C.

## Patentansprüche

1. Reaktivfarbstoffe der allgemeinen Formel I

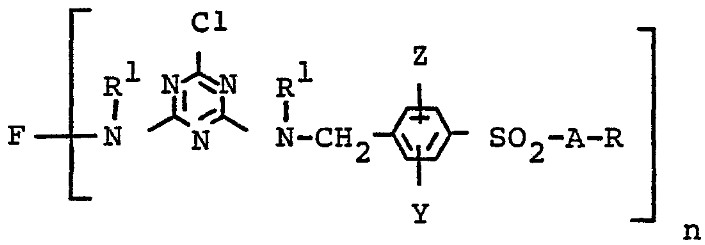

I ,

in der
A eine direkte Bindung oder NH,
F ein Farbstoffrest,
n die Zahlen 1 oder 2,
$R^1$ Wasserstoff oder $C_1$- bis $C_4$-Alkyl,
Y Wasserstoff, Chlor, Brom, $C_1$- bis $C_4$-Alkoxy oder Hydroxysulfonyl,
Z Wasserstoff oder Chlor und
R ein Rest der Formel

$-CH=CH_2$, $-CH_2CH_2X$, $-CH_2CH=CH_2$, $-CH=CH-CH_3$ oder

$-CH_2\underset{X}{CH}-CH_3$ sind, wobei

X ein als Anion abspaltbarer Rest ist.

2. Reaktivfarbstoffe gemäß Anspruch 1, dadurch gekennzeichnet, daß F ein Farbstoffrest aus der Azo-, Anthrachinon-, Formazan-, Phthalocyanin- oder Triphendioxazinreihe ist und wobei die Reste metallisiert sein können und gegebenenfalls noch weitere übliche Reaktivgruppen enthalten.

3. Reaktivfarbstoffe gemäß Anspruch 1 und 2, <u>gekennzeichnet durch</u> die allgemeine Formel

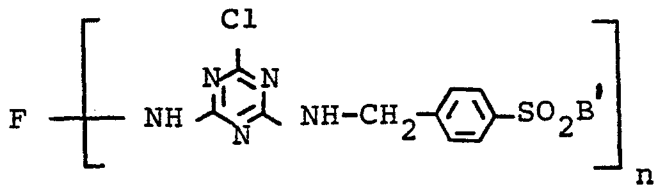

in der

F und n die in den Ansprüchen 1 und 2 angegebene Bedeutung haben und B' $CH_2CH_2OSO_3H$, $CH_2CH_2SSO_3H$, $CH=CH_2$ oder $CH_2CH_2OPO_3H$ ist.

4. Reaktivfarbstoffe gemäß Anspruch 1 oder 3, <u>gekennzeichnet durch</u> die allgemeine Formel

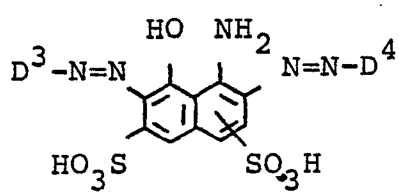

in der

$D^3$ und $D^4$ gleiche oder verschiedene Reste von Diazokomponenten sind, von denen mindestens eine einen Rest der Formel

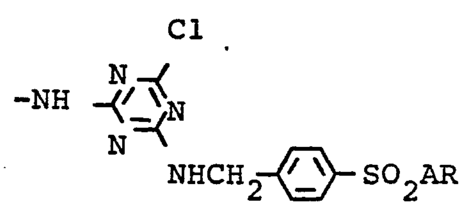

trägt,

worin A und R die im Anspruch 1 angegebene Bedeutung haben.

5. Reaktivfarbstoffe gemäß Anspruch 1 oder 3, gekennzeichnet durch die allgemeine Formel

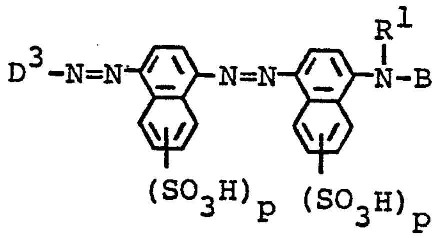

in der

$D^3$ der Rest einer Diazokomponente,

p 0,1 oder 2 und

B ein Rest der Formel

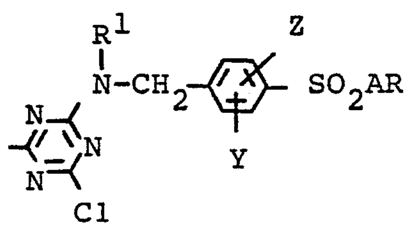

sind

und $R^1$, Z, Y, A und R die im Anspruch 1 oder 3 angegebene Bedeutung haben.

6. Verwendung der Reaktivfarbstoffe gemäß den Ansprüchen 1 bis 5 zum Färben von hydroxylgruppenhaltigen Fasern und von Wolle.

Europäisches Patentamt

# EUROPÄISCHER RECHERCHENBERICHT

0133270
Nummer der Anmeldung

EP 84 10 8701

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | EP-A-0 040 790 (HOECHST)<br>* Beispiele 20,30 *<br>----- | 1-3,6 | C 09 B 62/04<br>C 09 B 62/503<br>C 09 B 62/523<br>D 06 P 3/10<br>D 06 P 3/66 |
| | | | **RECHERCHIERTE SACHGEBIETE (Int. Cl. 3)** |
| | | | C 09 B |

Der vorliegende Recherchenbericht wurde für alle Patentansprüche erstellt.

| Recherchenort | Abschlußdatum der Recherche | Prüfer |
|---|---|---|
| DEN HAAG | 17-09-1984 | GINESTET M.E.J. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82